**Europäisches Patentamt**

**European Patent Office**

**Office européen des brevets**

(19)

(11) Veröffentlichungsnummer: **0 141 937**
**B1**

## EUROPÄISCHE PATENTSCHRIFT

(12)

(45) Veröffentlichungstag der Patentschrift:
**22.03.89**

(21) Anmeldenummer: **84110035.7**

(22) Anmeldetag: **23.08.84**

(51) Int. Cl.⁴: **G 11 B 23/03**

(54) Behälter zum Aufbewahren von im wesentlichen plattenförmigen Aufzeichnungsträgern.

(30) Priorität: **29.08.83 EP 83108481**
**03.08.84 DE 8423125 U**

(43) Veröffentlichungstag der Anmeldung:
**22.05.85 Patentblatt 85/21**

(45) Bekanntmachung des Hinweises auf die Patenterteilung:
**22.03.89 Patentblatt 89/12**

(84) Benannte Vertragsstaaten:
**DE FR GB IT SE**

(56) Entgegenhaltungen:
**DE-A- 2 307 410**
**DE-B- 1 131 026**
**FR-A- 1 113 766**
**US-A- 2 539 647**
**US-A- 3 275 158**

(73) Patentinhaber: **idn inventions and development of novelties ag, Hartbertstrasse 9, CH-7002 Chur (CH)**

(72) Erfinder: **Ackeret, Peter, Allmendstrasse 18, CH-8700 Küsnacht (CH)**

(74) Vertreter: **Dipl.-Ing. H. Marsch Dipl.-Ing. K. Sparing Dipl.-Phys.Dr. W.H. Röhl Patentanwälte, Rethelstrasse 123, D-4000 Düsseldorf 1 (DE)**

**Beschreibung**

Die Erfindung betrifft einen Behälter zum Aufbewahren plattenförmiger Aufzeichnungsträger mit den im Oberbegriff des Patentanspruchs 1 genannten Merkmalen. Ein gattungsgleicher Behälter ist aus der DE-A-2 307 410 bekannt.

Der bekannte Behälter umfaßt ein kastenartiges Gehäuse mit frontseitigen Schlitzen, über die jeweils ein Aufnahmefach für eine Schallplatte zugänglich ist. Quer zu den Schlitzen ist ein weiterer, seitlicher Schlitz vorgesehen, längs dem ein Druckknopf verlagerbar ist; dieser dient dabei als Wähleinrichtung, denn in jeder seiner Raststellungen bringt er einen ebenfalls durch den Druckknopf betätigbaren, als Transportorgan dienenden Hebel in Ausfluchtung mit einer der Schallplatten, so daß diese ausgeschoben werden. Der Hebel wird von einer Feder wieder in seine Ruhestellung zurückgezogen, so daß eine entnommene Platte unbehindert wieder bis zu einem Anschlag eingeschoben werden kann.

Aufgabe der vorliegenden Erfindung ist es, einen Behälter mit den im Oberbegriff des Patentanspruchs 1 genannten Merkmalen zu schaffen, der eine sichere Aufbewahrung der Aufzeichnungsträger – insbesondere Compact-Disks – ermöglicht und größeren Bedienungskomfort als der bekannte Behälter bietet. Bei diesem nämlich können die Platten bei ungünstiger Lage des Behälters oder bei Erschütterungen, etwa in einem Kraftfahrzeug, unbehindert herausfallen, und wenn einmal eine Platte entnommen ist, erfordert das Suchen nach dem freien Aufnahmefach große Aufmerksamkeit, was ebenfalls die Verwendung in Kraftfahrzeugen untunlich erscheinen läßt.

Die gemäß der Erfindung vorgesehene Lösung der Aufgabe erfolgt durch die im kennzeichnenden Teil des Patentanspruchs 1 genannten Merkmale. Demgemäß wird jeder Aufzeichnungsträger von einem Mitnehmer gehalten bzw. getragen, von dem er nicht unbeabsichtigt herunternehmbar ist. Ein ausgewählter Mitnehmer wird mittels des Transportorgans aus dem Gehäuse herausgefahren, derart, daß der betreffende Aufzeichnungsträger gut zugänglich ist. Der Behälter kann in offener Stellung verbleiben oder auch wieder geschlossen werden; der Mitnehmer, der einem entnommenen Aufzeichnungsträger zugeordnet ist, läßt sich durch erneutes Betätigen des Transportorgans leicht wieder in Beladeposition verfahren.

Plattenförmigen Aufzeichnungsträger jeweils einen eigenen Mitnehmer zuzuordnen, ist an sich aus der DE-B-1 131 026 bekannt.

Ausführungsbeispiele des Gegenstandes der Erfindung werden nachstehend unter Bezugnahme auf die beigefügten Zeichnungen im einzelnen erläutert.

Fig. 1 zeigt im Vertikalschnitt in einer Ebene parallel zur Schieberauszugsrichtung einen ersten erfindungsgemäßen Behälter,

Fig. 2 ist eine Frontansicht zu Fig. 1,

Fig. 3 ist eine Draufsicht auf einen der Mitnehmer bei dem ersten Ausführungsbeispiel,

Fig. 4 bis 8 zeigen Frontansichten weiterer Ausführungsformen von erfindungsgemäßen Behältern,

Fig. 9 ist ein Teilvertikalschnitt zu Fig. 5,

Fig. 10 ist ein Vertikalschnitt durch einen erfindungsgemäßen Behälter in bevorzugter Ausführungsform, wobei die Darstellung weitgehend schematisiert ist,

Fig. 11 ist eine Teildraufsicht von innen auf die Gehäuserückwand dieses Behälters,

Fig. 12 zeigt einen zugehörigen Vertikalschnitt in einer Ebene parallel zur Schieberauszugsrichtung,

Fig. 13 ist eine teilgeschnittene Frontansicht des Behälters nach Fig. 10,

Fig. 14 zeigt in Teilfrontansicht eine Variante zu Fig. 13,

Fig. 15 stellt perspektivisch eine Wähltaste dar,

Fig. 16 ist eine Teilvertikalansicht zu Fig. 14,

Fig. 17a/17b dienen der Erläuterung des Wählsystems, wobei in Fig. 17a in Frontansicht die Wählkulissen, in Fig. 17b in Draufsicht einer der zugehörigen Mitnehmer dargestellt sind,

Fig. 18 zeigt in Draufsicht einen geöffneten Behälter gemäß Fig. 10,

Fig. 19 ist eine Radialschnittdarstellung eines Mitnehmers; die Fig. 10 bis 19 sind in unterschiedlichen Maßstäben gezeichnet, um Details zu verdeutlichen,

Fig. 20 ist ein Schema zum Verdeutlichen der Montage einer Wählkulisse,

Fig. 21 zeigt einen Behälter mit schwenkbaren Mitnehmern von oben, teilweise aufgebrochen und weitgehend schematisiert,

Fig. 22 zeigt den Behälter in analoger Form, jedoch geöffnet,

Fig. 23 ist ein zugehöriger Vertikalschnitt, stark vereinfacht,

Fig. 24 ist eine Frontansicht dazu,

Fig. 25 stellt perspektivisch einen weiteren erfindungsgemäßen Behälter in Teilansicht dar,

Fig. 26 ist eine perspektivische Teildarstellung eines einzelnen Mitnehmers,

Fig. 27a, 27b zeigen schematisch im Vertikalschnitt den Taschenschließmechanismus,

Fig. 28 und 29 beziehen sich auf eine weitere Ausführungsform,

Fig. 30 und 31 zeigen schematisch eine weitere Ausführungsform,

Fig. 32 bis 36 zeigen analog weitere Ausführungsformen,

Fig. 37 ist ein schematischer Schnitt durch einen Stapel von Mitnehmern bei den Ausführungsformen nach Fig. 30 bis 36,

Fig. 38 zeigt im weitgehend schematisierten Schnitt eine weitere Ausführungsform,

Fig. 39 und 40 beziehen sich auf ein weiteres Ausführungsbeispiel,

Fig. 41 bis 44 gehören zu einem weiteren Ausführungsbeispiel,

Fig. 45 bis 48 zeigen einen Verriegelungsmechanismus, wie er in den zuvor beschriebenen Ausführungsbeispielen anwendbar ist; dabei ist Fig. 45 eine Draufsicht auf die Bodenplatte eines Transportorgans von unten, Fig. 46 eine entsprechende Draufsicht von oben, Fig. 47 ein Schnitt etwa in der Symmetrieebene «x» dieser Figuren bei verriegeltem System und Fig. 48 eine vergrößerte Teildarstellung von Fig. 47,

Fig. 49 bis 51 beziehen sich auf ein weiteres Ausführungsbeispiel,

Fig. 52 bis 54 dienen der Erläuterung von Details, und

Fig. 55 bis 99 beziehen sich auf weitere Ausführungsformen beziehungsweise Einzelheiten.

Sämtliche dargestellten und nachstehend beschriebenen Ausführungsbeispiele beziehen sich auf Behälter für Compactdiscs; die für andere flache Aufzeichnungsträger gebotenen Änderungen kann ein Fachmann ohne weiteres vorsehen.

Bei einem Behälter erfindungsgemäßen Typs bestehen mehrere Möglichkeiten, die gewünschten Aufzeichnungsträger (nachfolgend nur noch als «Disc» bezeichnet) zu präsentieren.

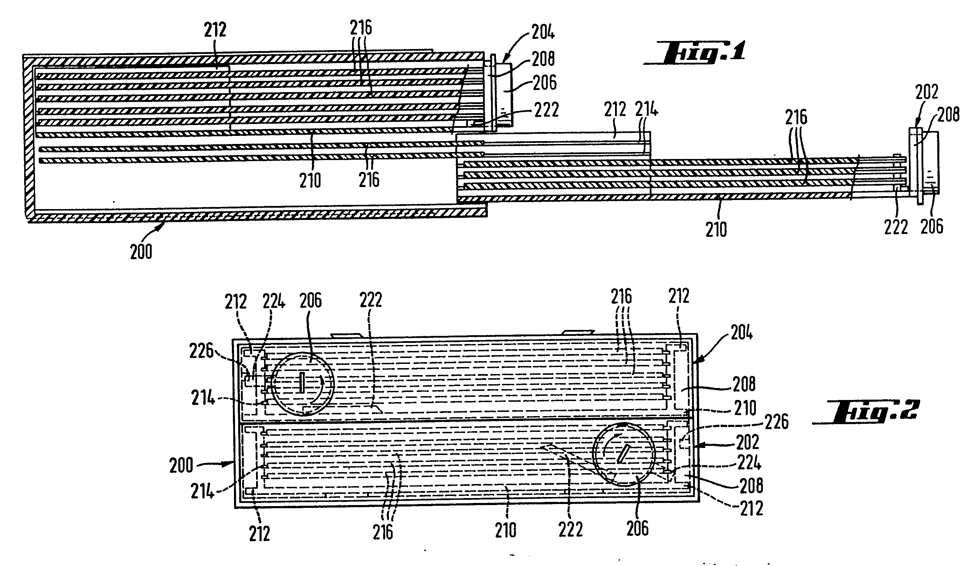

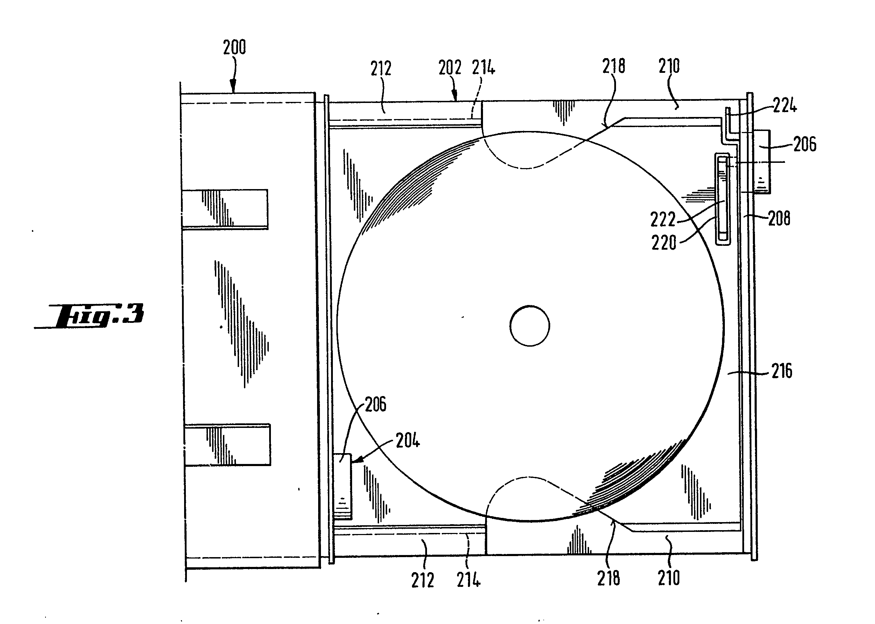

Eine erste Möglichkeit ist, den Stapel beim Öffnen derart zu trennen, daß ein gewünschter Mitnehmer oben ist, die darüber angeordneten also im Gehäuse zurückbleiben, während die darunterliegenden vom Transportorgan auch mitgenommen werden. Fig. 1–3 zeigen beispielsweise einen solchen Behälter.

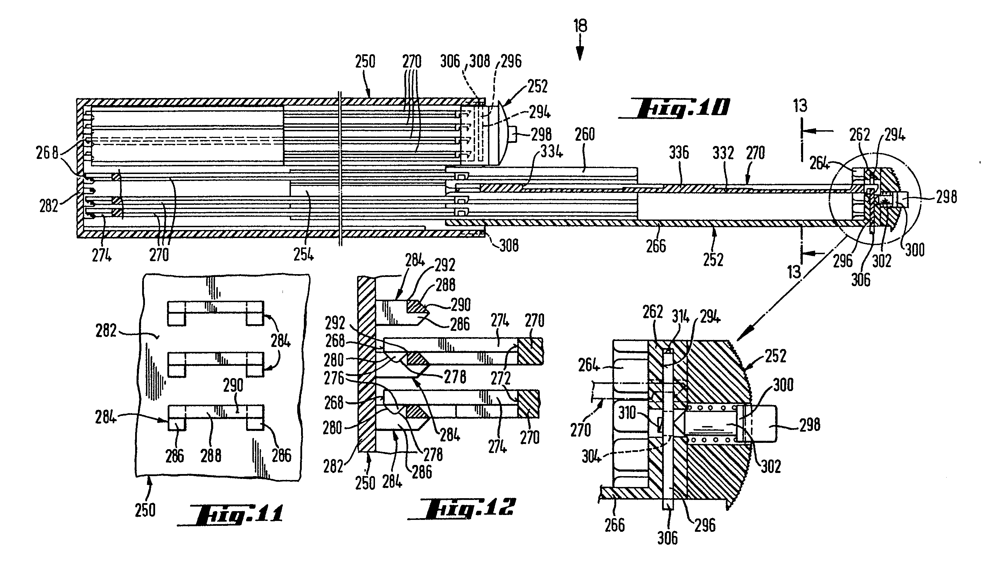

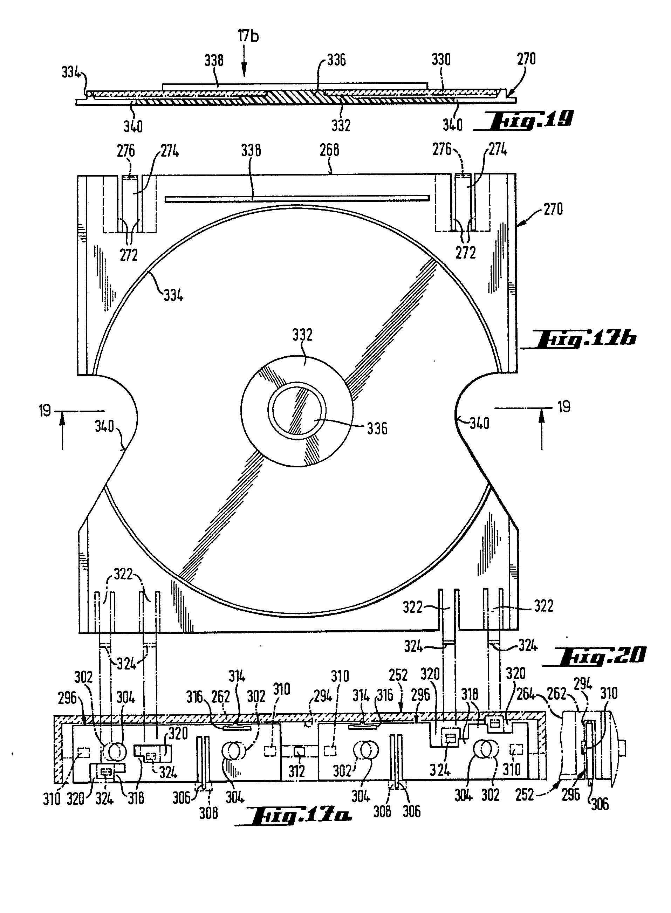

Eine zweite Möglichkeit besteht darin, daß der Benutzer eine gewünschte Disc wählt und das Transportorgan beim Ausschub dann nur diesen einen Mitnehmer mitnimmt, während alle andern im Gehäuse verbleiben. Fig. 10–20 zeigen einen solchen Behälter.

Fig. 1–3 zeigen, wenn auch weitgehend schematisiert, eine erste Ausführungsform.

Im Gehäuse 200 sind als Transportorgane zwei Schieber 202, 204 übereinander und voneinander unabhängig beweglich aufgenommen. Die am Gehäuse einerseits, am Schieber andererseits abgestützten Ausschubfedern, Anschläge, Führungen und so weiter, sind nicht im einzelnen dargestellt; hier kann der Fachmann auf die anderen Ausführungsformen oder den eingangs genannten Stand der Technik zurückgreifen.

Der Schieber 202 unterscheidet sich von dem Schieber 204 durch den Ort der Anbringung eines Wählknopfes 206, der im einen Falle auf der linken, im andern Fall auf der rechten Seite der jeweiligen Schieberfrontplatte 208 drehbar gelagert ist; ferner ist der rechts angeordnete Wählknopf im Uhrzeigersinne, der andere im Gegenuhrzeigersinne zwischen Rastpositionen verdrehbar.

Jeder Schieber umfaßt eine Bodenplatte 210 sowie Seitenholme 212, die jedoch nur im gehäuseseitigen Abschnitt des Schiebers vorgesehen sind und Führungselemente 214 (z.B. Stege) aufweisen, längs denen die Disc-Halter 216 mittels Gegenelementen (z.B. Nuten) gleitbeweglich geführt sind. Die Disc-Halter sind plattenartig ausgebildet mit seitlichen Eingriffsöffnungen 218, so daß der Benutzer eine auf einem Halter liegende Disc erfassen kann und nach oben herausnehmen kann. An ihrem gehäuseseitigen Ende sind die Halter reibungsschlüssig im Gehäuse festgehalten mittels einer Konstruktion, wie sie auch bei der Ausführungsform gemäß Fig. 10 vorgesehen ist und dort beschrieben wird.

Jeder Disc-Halter 216 weist nahe seinem schieberfrontseitigen Ende einen Schlitz 220 auf, der sich parallel zu der Schieberfront erstreckt. Vom Wählknopf 206 erstreckt sich tangential ein Wählarm 222, der in einer Ruheposition bündig im Schieberboden liegt (Fig. 2, oberer Schieber), jedoch beim Verdrehen des Wählknopfes zuerst den untersten Halter 216 in dessen Schlitz 220 durchsetzt, dann die beiden untersten und so weiter.

Es versteht sich, daß man die einzelnen Halter 216 untereinander identisch ausbilden kann, das heißt mit Schlitzen 220 auf beiden Seiten und gleicher Schlitzlänge versehen kann, so daß sie sowohl im oberen als auch im unteren Gehäusefach an jeder Stelle einsetzbar sind.

In der Ruheposition des Wählknopfes 206 verriegelt eine an ihm angebrachte Raste 224 den Schieber an einer gehäuseseitigen Kralle 226; die Anordnung ist dabei so getroffen, daß bei Einschub des Schiebers mit dem Wählknopf in der Ruheposition die Raste ausfedert und sich hinter der Kralle einhängt. Es kann deshalb vorgesehen sein, daß der Wählknopf mittels einer Drehfeder in die Ruheposition vorgespannt ist. Wenn der Benutzer also den Wählknopf aus der Ruheposition in irgendeine Mitnahmeposition verdreht, wird der Schieber freigegeben, und ein oder mehrere Disc-Halter fahren mit dem Schieber zusammen heraus. Läßt der Benutzer dann los, kehrt der Wählknopf in die Ruheposition zurück, und beim Einschieben des Schiebers drückt dessen Frontwand alle ausgezogenen Halter wieder in das Gehäuse.

Auf jedem Wählknopf ist eine Schlüsselloch-Öffnung angedeutet, und im Knopf kann ein Schließzylinder untergebracht sein, so daß nur der Besitzer des Schlüssels den Behälter öffnen kann.

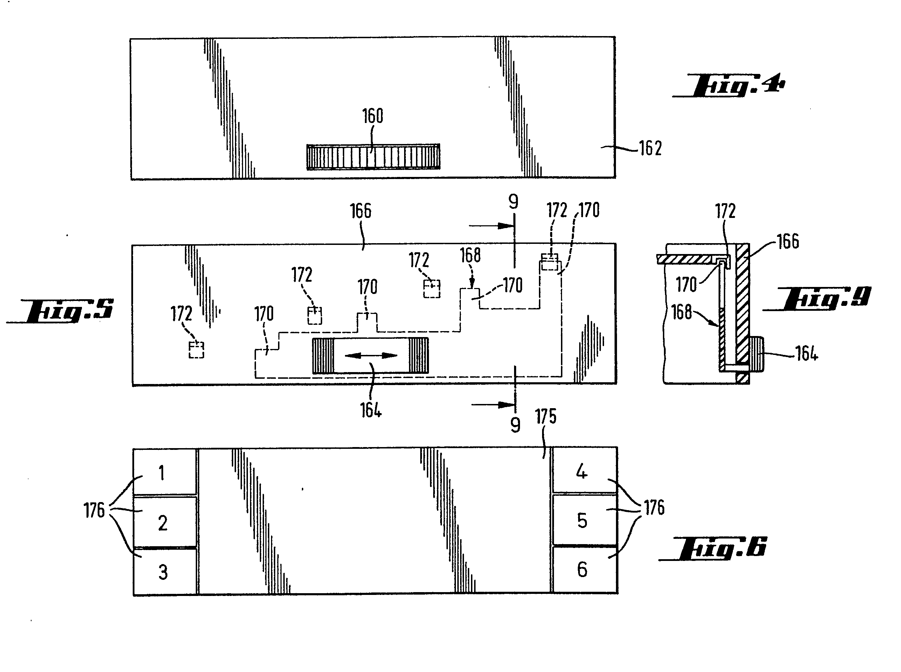

Die Figuren 4 bis 9 zeigen unterschiedliche Möglichkeiten (nur schematisch angedeutet), wie ein Benutzer vor oder beim Entriegeln des Schiebers einen bestimmten Halter anwählen kann.

Als Anwählorgan ist in Fig. 4 ein Rändelknopf 160 vorgesehen, der mit einem Segment über die Schieberfrontplatte 162 hinausragt. – Fig. 5 stellt eine Ausführungsform dar, bei der in der Schieberfrontplatte querverschieblich ein Wählschieber 164 vorgesehen ist, dem vier Rastpositionen zugeordnet sind. Wie Fig. 9 erkennen läßt, nimmt der Wählschieber 164 auf der Innenseite der Frontplatte 166 einen Riegel 168 mit, der in jeder der vier Rastpositionen mit einem Haken 170 hinter eine andere Kralle 172 greift; jeweils eine Kralle ist an einem der vier Disc-Halter vorgesehen, und die Krallen sind seitlich derart gestaffelt, daß immer nur ein Halter mitgenommen werden kann.

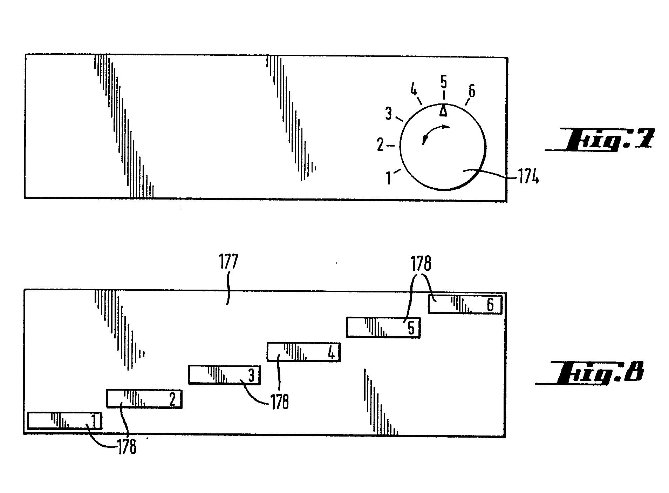

Gemäß Fig. 6 befinden sich seitlich neben der Schieberfrontplatte 175 sechs Drucktasten 176 zur Auswahl von jeweils einem Halter. In Fig. 7 erfolgt die Auswahl mittels eines Drehknopfes 174 mit Rastpositionen für je einen Halter, und in Fig. 8 trägt die Frontplatte 177 Anwähl-Drucktasten 178, die zusammen mit der jeweils angewählten Disc bzw. deren Halter aus dem Gehäuse ausgeschoben werden.

Die Fig. 10 bis 20 beziehen sich auf ein bevorzugtes Ausführungsbeispiel, das deshalb etwas ausführlicher erläutert werden soll. Es handelt sich um eine Realisierung ähnlich Fig. 8, bei der also auf der Frontwand des hier ebenfalls als Schieber ausgebildeten Transportorgans Drucktasten angeordnet sind, die so weich abgefedert sind, daß sie zunächst eingedrückt werden, ehe der Schieber selbst eine Bewegung ausführt.

Das Gehäuse 250 enthält zwei Schieber 252. Beidseits jedes Schiebers ist im Gehäuse je eine Führungsschiene 254 gleitbeweglich geführt und um etwa die Hälfte ihrer, der Gehäusetiefe entsprechenden Länge ausziehbar, wobei der Hub durch (nicht gezeichnete) Anschläge festgelegt ist. Relativ zu diesen Führungsschienen ist dann der Schieber in ähnlicher Weise um einen etwa gleich großen Hub ausziehbar, so daß eine Teleskopführung vorliegt, die es ermöglicht, daß der Schieber nahezu um die gesamte Gehäusetiefe ausfahrbar ist und trotzdem noch gegen das Gehäuse geführt und abgestützt ist. Der Schieber ist durch Zugfedern 256 und 258 in die Offenstellung vorgespannt; auf jeder Seite des Schiebers ist ein solches Federnpaar vorgesehen, das an Schieber und Schiene (Feder 256) bzw. Schiene und Gehäuse (Feder 258) eingehangen ist. Die so geführten Schieberseitenplatten 260 erstrecken sich, wie in Fig. 10 erkennbar, vom gehäuseinneren Schieberende nur um weniger als die Hälfte der Gehäusetiefe nach vor zu einer Schieberfrontwand 262, wo noch Reststücke 264 dieser Seitenplatten vorgesehen sind. Seitenplatten und Frontwand sind durch eine Schieberbodenplatte 266 miteinander verbunden.

In den Seitenplatten befinden sich Gleitführungen, zum Beispiel Rillen, für vier Mitnehmer, die entsprechende komplementäre geführte Elemente, z.B. Rippen, aufweisen; auch hier sind die Mitnehmer als plattenartige Halter 270 ausgebildet.

Der Behälter beruht in seiner Funktion darauf, daß die einzelnen Halter 270 reibungsschlüssig im Gehäuse gehalten sind, und zwar mit einer Kraft, die kleiner ist als die bei eingeschobenem Schieber und demgemäß gespannt Zugfedern 256, 258 auf ihn wirkende Vorspannkraft. Um einen bestimmten Halter zu wählen, wird der Schieber mit dem betreffenden Halter formschlüssig gekuppelt und reißt dann den Halter aus seiner reibungsschlüssigen Verankerung.

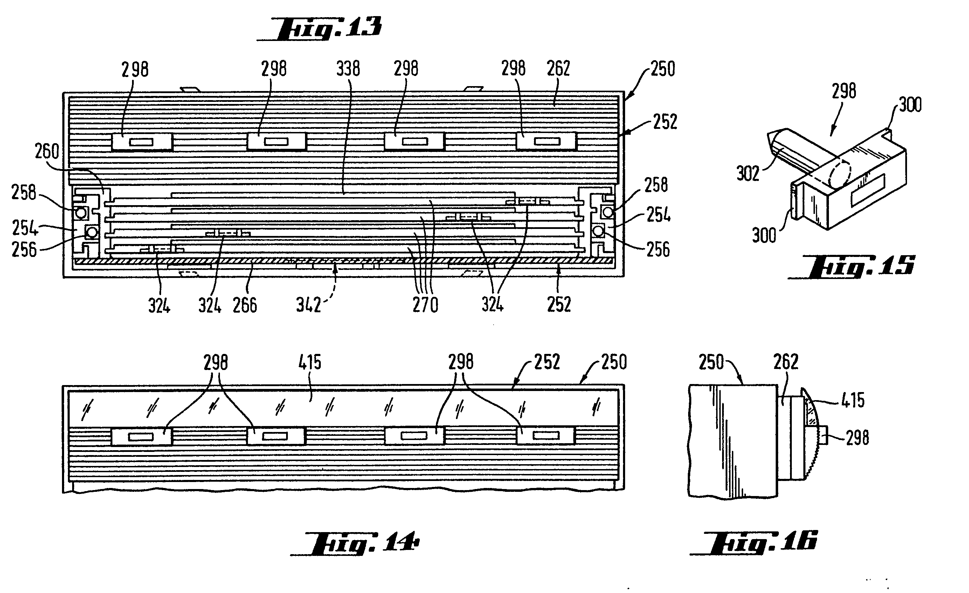

Zunächst soll erläutert werden, wie die Halter im Gehäuse festgehalten werden. – Jeder Halter weist an seiner gehäuseinneren Endkante 268 Paare von Einschnitten 272 zum Begrenzen einer nach oben aus der Halterebene auslenkbaren Blattfeder 274 auf, die an ihrem freien Ende eine Nase 276 mit einer Verankerungsfläche 278 und einer Auslenkfläche 280 aufweist. An die Gehäuserückwand 282 sind nach innen vorstehend Sprossen 284 angeformt mit Tragarmen 286 und einer Traverse 288, die eine Auslenkschräge 290 und eine Rastkante 292 besitzt; nach Auslenkung der Nase 276 durch die Auslenkschräge rastet ihre Verankerungsfläche 278 hinter der Rastkante ein, doch ist deren Schräge gegen die Horizontale so bemessen, daß die oben erwähnte Vorspannkraft genügt, den Halter aus der Verankerung zu reißen, wobei die Blattfeder 274 mit Nase 276 wieder ausgelenkt wird. Fig. 11 und 12 lassen die entsprechenden Profilierungen deutlich erkennen, ebenso die Ausnehmungen, die für das Bewegungsspiel erforderlich sind.

Die Frontwand des Schiebers 252 weist einen von einer ihrer Horizontalkanten ausgehenden Schlitz 294 auf; beim unteren Schieber erstreckt sich der Schlitz von unten, beim oberen von oben parallel zur Frontwand selbst in diese hinein. Dieser Schlitz dient als Gleitführung für zwei Wählkulissen 296. In der Frontwand 262 sitzen gegen Federvorspannung nach innen eindrückbare Tasten 298 mit Anschlägen 300 und einem Steuerstift 302, der konisch endet. Der Durchmesser dieses Steuerstiftes ist in seiner relativen Lage zu den Wählkulissen für alle vier Tasten in Fig. 17, oberer Teil, gestrichelt angedeutet. Die Wählkulissen 296 weisen je ein rundes Loch 304 für jeden Steuerstift auf, das jedoch seitlich derart versetzt ist, daß der Konus des Steuerstifts eindringen muß – wenn nämlich die betreffende Taste betätigt wird –, um den Stift mit dem betreffenden Loch auszufluchten. An jede aus spritzbarem Kunststoff gefertigte Wählkulisse ist eine Rückstellfeder 306 angeformt und hält die Kulisse bei geschlossenem Schieber dadurch in der mit keinem der Stifte ausgefluchteten Position, daß das über die Frontwandkante hinausragende freie Ende dieser Feder in eine Bodenausnehmung 308 des Gehäuses greift (in Fig. 18 erkennt man, daß diese Ausnehmung in das Gehäuse hinein um einen Schlitz verlängert ist; diese Verlängerung ist funktionslos und nur aus spritztechnischen Gründen vorgesehen).

Wie in Fig. 20 erkennbar, besitzt jede Wählkulisse angeformte Nasen 310, mit denen sie im Schlitz 294 gehalten, jedoch leicht seitlich verschiebbar ist. Der Verschiebeweg wird außen durch die Schlitzenden, innen durch einen Trennsteg 312 begrenzt. Jede Kulisse weist noch einen am Schlitzboden anliegenden Bremskopf 314 auf, der jedoch dank eines Durchbruchs 316 nach innen einfedern kann und die Verschiebebewegungen der Kulisse nur in geringem, aber definierten Maße bremst.

In Fig. 17 ist das Profil für die beiden Wählkulissen des unteren Schiebers zugrundegelegt; für den oberen Schieber erstrecken sich die Rückstellfedern 306 natürlich nach oben, und die Bremsköpfe 314 sind entsprechend dem dann unten liegenden Schlitzboden zugewandt, und auch die Nasen haben ein spiegelbildliches Profil.

Jede Wählkulisse weist zwei Krallen 318 auf, so daß beide Wählkulissen zusammen vier Krallen, je eine für jeden Disc-Halter 270, bereitstellen. Die Krallen 318 sind entsprechend der höhenmäßigen Staffelung der Disc-Halter ebenfalls gestaffelt, so daß die beiden Kulissen sich hinsichtlich der Form und Anordnung dieser Krallen unterscheiden. Ferner sind jeweils den Krallen benachbart Durchbrüche 320 vorgesehen, die den Durchtritt von jeweils nicht angekuppelten Haken der Disc-Halter gestatten.

Wie in Fig. 17b erkennbar, hat jeder Disc-Halter 270 einen von einer angeformten Blattfeder 322 getragenen angeformten Haken 324, im Aufbau ähnlich wie oben für den Reibungsschluß 280/292 beschrieben, jedoch hier so profiliert, daß eine Formschlußverbindung anstatt einer Reibungsschlußverbindung mit der jeweiligen Kralle 318 einer zugeordneten Wählkulisse herstellbar ist. Dies geschieht in folgender Weise:

Es sei angenommen, daß der Schieber in der Schließposition ist (Fig. 10, oberer Schieber). Dann nehmen die Krallen 318 beider Wählkulissen die in Fig. 17a dargestellte Position ein, in der sie seitlich neben den Haken 324 und von vorn gesehen auch noch vor diesen stehen. Demgemäß ist keiner der Disc-Halter mit dem Schieber gekuppelt. Drückt nun der Benutzer auf eine der Tasten, so dringt der Stift 302 in das zugeordnete Loch 304 ein und verlagert die Kulisse seitlich, so daß die betreffende Kralle 318 nun ausgefluchtet vor dem zugeordneten Haken 324 steht. Nun kann der Benutzer, da jetzt die Taste 298 ganz in die Schieberfrontwand 262 eingedrückt ist, diese selbst zusam-men mit dem Schieber noch ein kurzes Stück in das Gehäuse hineindrücken, wobei zugleich eine Verriegelung des Schiebers gelöst wird; wie dies geschieht, wird weiter unten erläutert.

Bei dieser Einwärtsbewegung des Schiebers verlagert er sich relativ zu den Disc-Haltern 270, die hinten an der Gehäuserückwand 282 anstehen; infolgedessen schnappt der ausgefluchtet stehende Haken 324 des betreffenden Disc-Halters über die betreffende Kralle 318. Läßt der Benutzer nun los, wird der Schieber von den Federn 256, 258 aus dem Gehäuse herausbewegt und nimmt dabei den einen Disc-Halter 270 mit. Da zugleich die Rückstellfeder 306 der betreffenden Kulisse aus der Vertiefung 308 des Gehäusebodens herauskommt, ist die Kulisse nicht mehr in die Leer-Position vorgespannt, und einer bei Erschütterungen etwa bestehenden Gefahr der seitlichen Verlagerung der Kulissen bei ausgefahrenem Schieber wirken die Bremsköpfe 314 entgegen.

Wird der Schieber wieder eingeschoben, verriegelt er sich selbsttätig im Gehäuse, und keine der Tasten kann mehr eine Verankerung mit einem der Halter 270 herstellen, wobei es gleichgültig ist, ob der Benutzer zum Einschieben auf die Frontwand, auf eine der ausgekuppelten Tasten oder auf die eingekuppelte Taste drückt, wie man leicht nachvollziehen kann: Alle Komponenten kehren in die Ausgangs- oder Vorbereitungsstellung zurück.

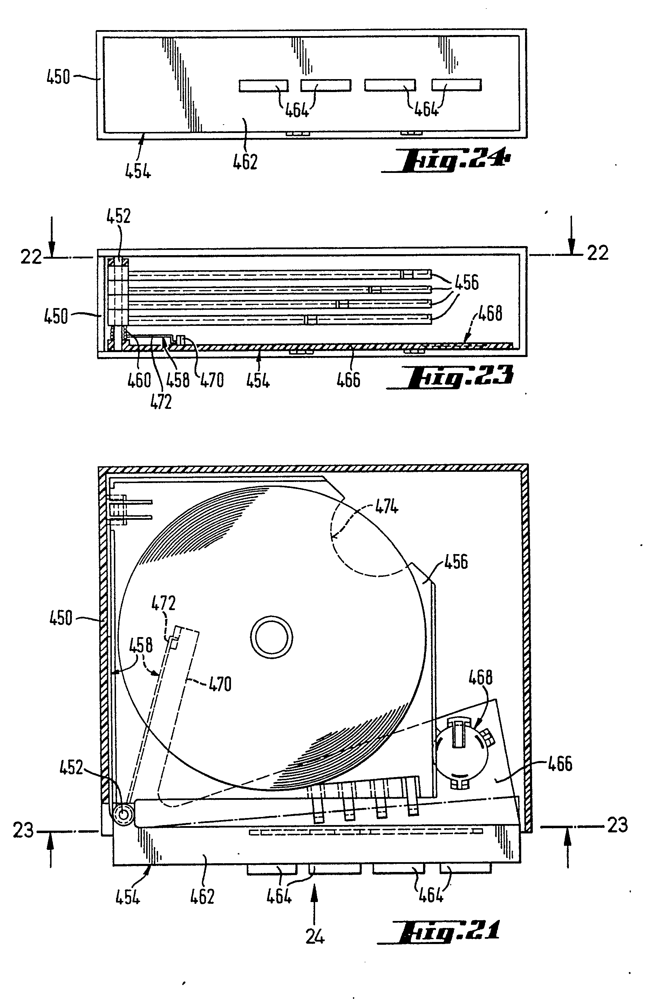

In Fig. 19 erkennt man noch das Profil der Disc-Halter 270. Die Disc 330 ist nur in ihrem mittleren, spurfreien Bereich von einer Verdickung 332 des Halters sowie an ihrem Umfang von einer Felge 334 abgestützt, und außerdem ist ihr Loch von einer Nabe 336 durchsetzt. Die Aufzeichnungsspuren dagegen können den Halter nicht berühren und dabei zerkratzt werden. – Der Abstand der einzelnen Disc-Halter voneinander ist so groß, daß auch noch das üblicherweise beim Kauf einer Disc mitgelieferte Begleitbuch auf dem Halter Platz findet; es wird an einer Leiste 338 abgestützt.

Die Disc kann vom Halter nach oben abgehoben werden, und damit man sie bequem an zwei einander gegenüberliegenden Stellen ihres Umfangs erfassen kann, weisen die Halter 270 seitliche Einschnitte 340 auf, und auch der Schieberboden kann entsprechend ausgeschnitten sein.

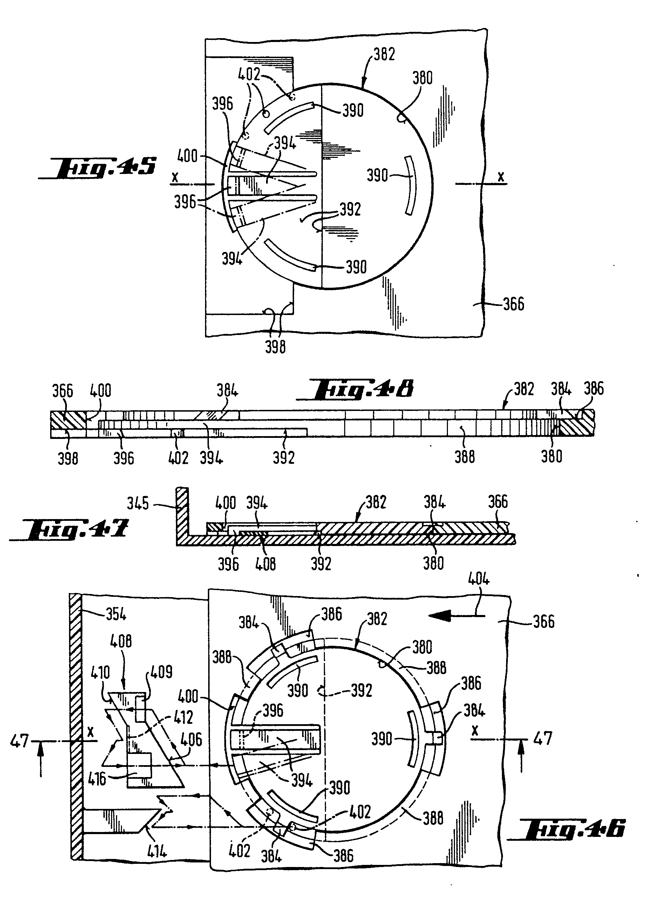

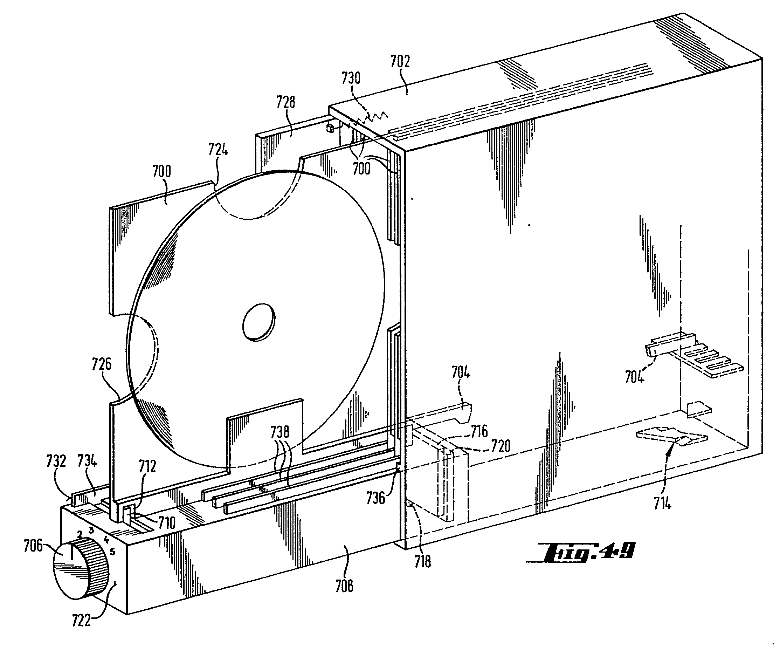

Der Verriegelungsmechanismus ist bei 342 angedeutet; er wird im Detail unter Bezugnahme auf Fig. 45 bis 48 erläutert werden.

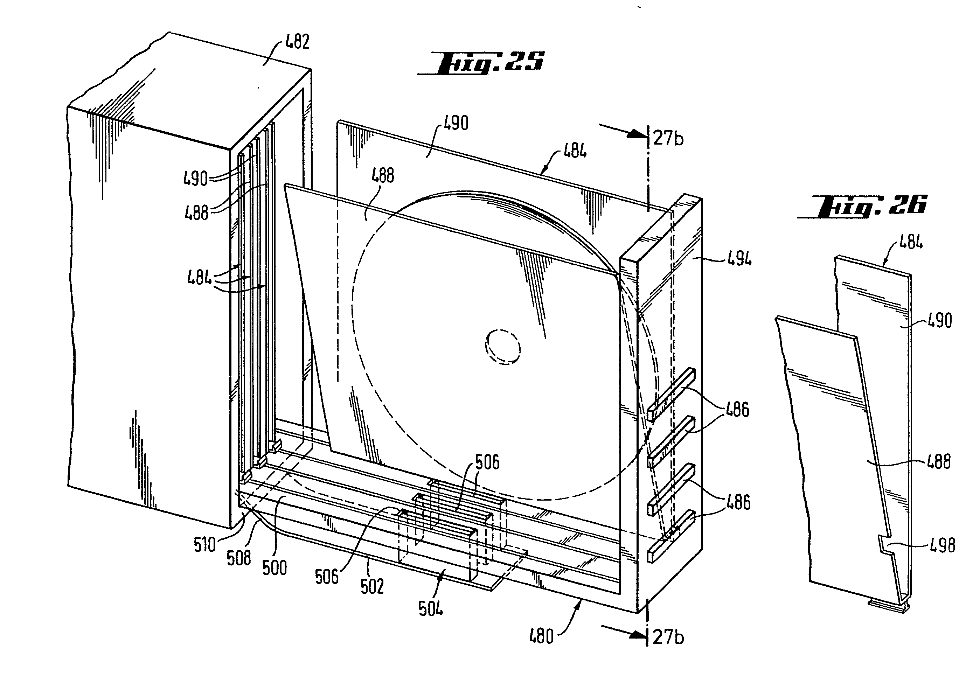

Es ist nicht zwingend, die Mitnehmer und das Transportorgan gleitverschieblich auszubilden, wenn dies auch bevorzugt ist. Fig. 21 bis 24 zei-gen, weitgehend schematisiert, eine Ausführungs-form mit schwenkbaren Komponenten.

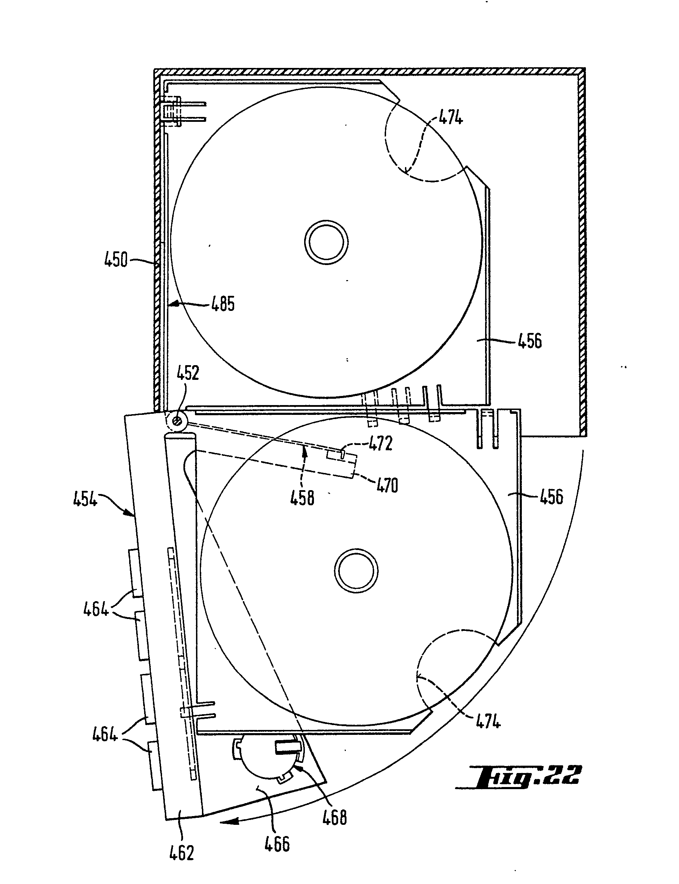

Das Gehäuse 450 weist nahe einem Ende seiner offenen Frontseite eine Welle 452 auf, auf der ein Transportorgan 454 sowie die Disc-Halter 456 schwenkbar gelagert sind. Eine Schenkelhalsfeder 458, die sich einerseits am Gehäuse, andererseits am Transportorgan abstützt und deren Federwickel 460 von der Welle 452 durchsetzt ist, spannt das Transportorgan in die in Fig. 22 dargestellte Offenposition vor. Das Transportorgan 454 umfaßt eine Frontwand 462 mit Wähltasten 464 sowie ein Bodenteil 466 mit einer Verriegelungsanordnung 468 gemäß Fig. 45 bis 48. Schließlich ist noch ein Arm 470 angeformt, an dem der Schenkel 472 der Feder 458 angreift. Die Disc-Halter werden wie im zuvor beschriebenen Ausführungsbeispiel mit der Frontwand 462 des Transportorgans gekuppelt, so daß dies nicht erneut beschrieben zu werden braucht. Im übrigen sind sie ähnlich wie dort aufgebaut, jedoch ist eine Ecke abgeschnitten, um den Platzbedarf für die Schwenkbewegung zu verkleinern und damit ein Gehäuse tragbarer Größe verwenden zu können; in diesem Bereich befindet sich auch der Entnahmeeinschnitt 474.

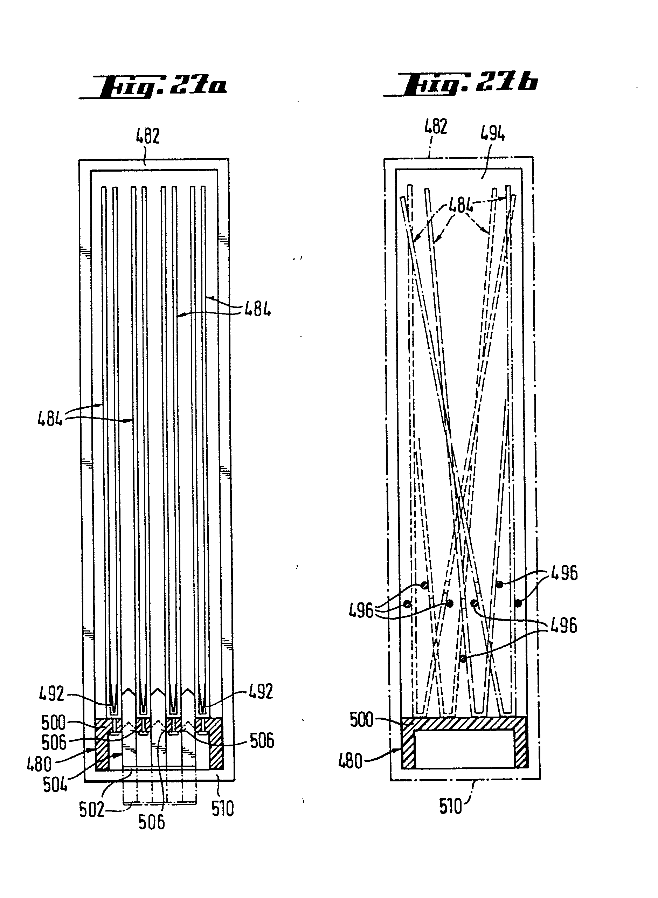

Fig. 25 bis 27a/27b stellen eine weitere Ausführungsform dar. –

Im Schieber 480, der zwischen Anschlägen gleitbeweglich in einem Gehäuse 482 geführt ist, kann einer von vier Disc-Haltern 484 mittels Taste 486 eingekuppelt werden. Jeder Halter 484 umfaßt zwei Plattenelemente 488, 490, die mittels V-förmiger Blattfedern 492 in eine Aufspreizposition vorgespannt sind. An die Schieberfrontwand 494 sind innen Anschläge 496 angeformt, und zwar zueinander höhenmäßig versetzt den einzelnen Haltern zugeordnet; die Plattenelemente 488, 490 sind an den Stellen, wo sie auf die Anschläge der irgendeinem andern Halter zugeordneten Position treffen würden, mit Durchtrittsöffnungen 498 versehen. Alternativ könnte man auch den Schieber mit Seitenwandungen versehen, die dann als Anschlag für alle Halter dienen würden.

An dem Schieberboden 500 ist eine Blattfeder 502 montiert, die bei geöffnetem Schieber nach unten ausschwenkt (Fig. 25) und dabei einen Rückstellkamm 504 durch im Schieberboden 500 vorgesehene Schlitze 506 zurückzieht. Beim Wiedereinschub des Schiebers wird die Blattfeder längs ihrer Keilabwinkelung 508 vom Gehäuseboden 510 nach oben ausgelenkt, der Kamm 504 tritt in den Schieber ein und drückt die zu jeweils einem Halter gehörenden Plattenelemente 488, 490 zusammen, so daß alle dicht gestapelt im Gehäuse nebeneinander Platz finden.

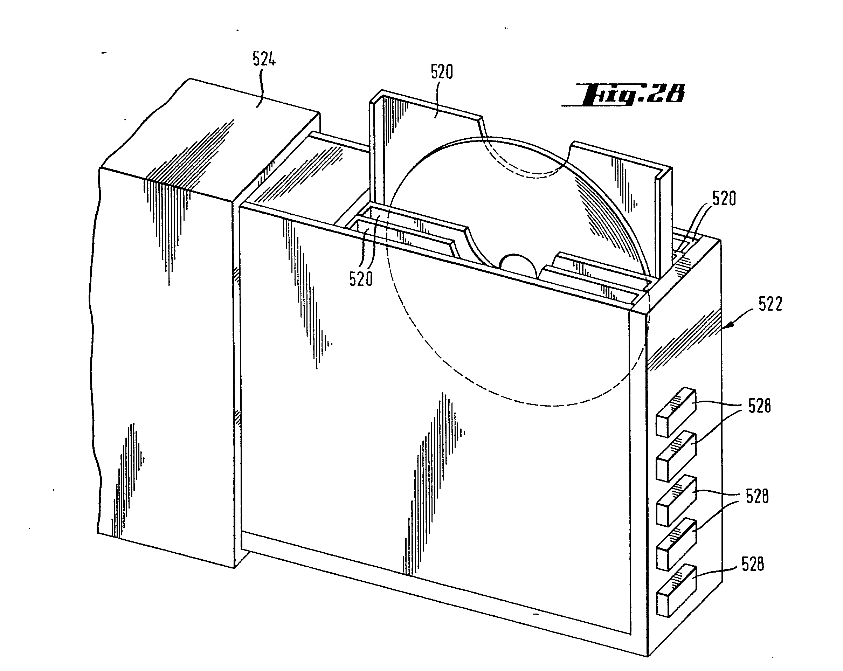

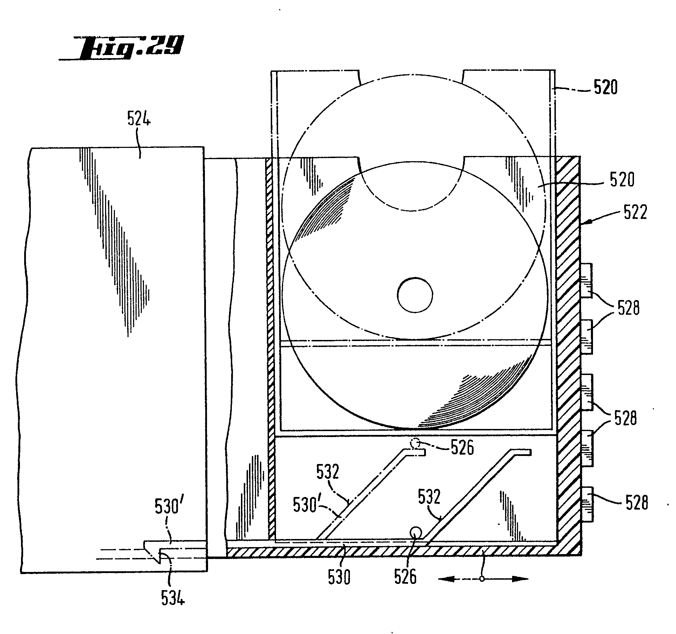

Bei der Ausführungsform nach Fig. 28 und 29 sind die Disc-Halter 520 senkrecht zur Ausschubbewegung des Schiebers 522 aus dem Gehäuse 524 verlagerbar. An jeden Disc-Halter 520 ist ein Nockenstift 526 angeformt, und jeder Wähltaste 528 ist eine der Wählschienen 530 mit einer abgewinkelten Nockenbahn 532 zugeordnet. Die nicht angewählten Wählschienen werden zusammen mit dem Schieber aus dem Gehäuse heraustransportiert, was in Fig. 29 mit ausgezogenen Linien dargestellt ist, während die eine angewählte Schiene 530' (gestrichelt) an ihrem Haken 534 im Gehäuse gehalten wird, so daß der Nocken längs ihrer Nockenbahn hochsteigen kann.

Bei den bis jetzt erläuterten Ausführungsbeispielen werden die Discs soweit aus dem Gehäuse heraustransportiert, daß sie vollständig frei liegen und nach oben herausgehoben werden können. Das setzt voraus, daß auch das jeweilige Transportorgan einen entsprechenden Hub ausführen kann. Bei beengten Raumverhältnissen kann es zweckmäßig sein, die jeweils angewählte Disc nur soweit aus dem Gehäuse herauszutransportieren, daß sie erfaßt und nach vorn herausgezogen werden kann. Da es andererseits erwünscht ist, das Gehäuse in der Aufbewahrungsposition an seiner offenen Frontseite zu verschließen, ist in diesem Falle dafür zu sorgen, daß diese offene Frontseite für die Entnahme oder das Einlegen einer Disc von einem solchen Verschluß freigemacht wird, und die Figuren 30 bis 37 stellen hierfür einige Möglichkeiten dar. Diese Zeichnungen sind sehr schematisch und zeigen nur das jeweils Wesentliche der Konstruktion.

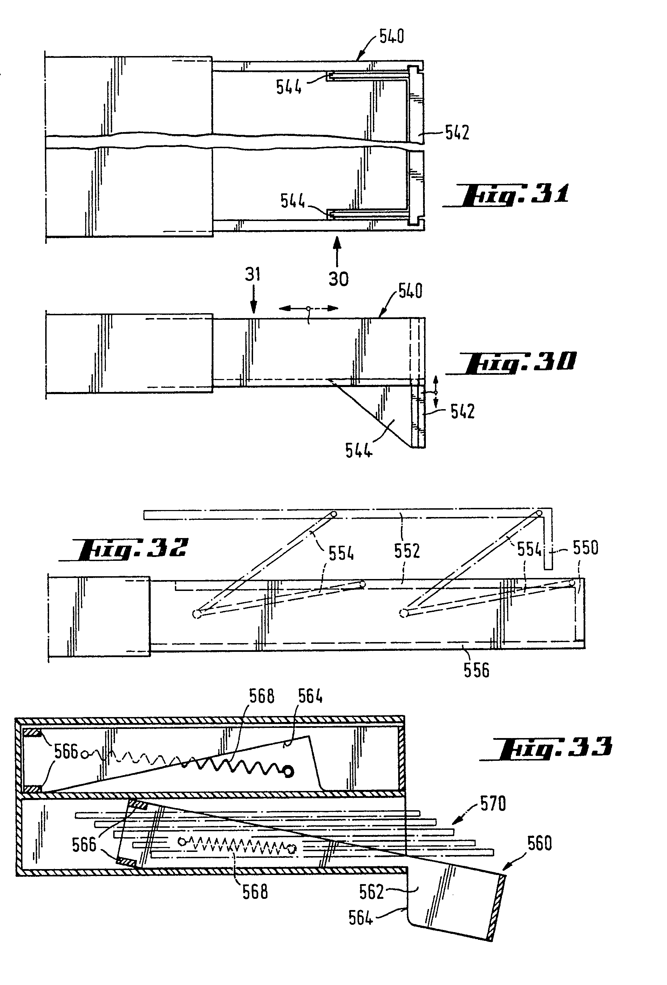

Bei Fig. 30 und 31 sind ein Gehäuse und ein Schieber 540 vorgesehen, der eine senkrecht zu seiner Bewegungsrichtung verschiebliche Frontwand 542 aufweist. Im geöffneten Zustand macht die Frontwand die Fluchtlinien der Gehäuseöffnung frei, indem sie sich unter Schwerkraft- oder Federwirkung verlagert; beim Einschub kehrt sie in die Abdeckposition zurück, weil Keilwinkel 544 auf eine Gehäusefrontkante auflaufen und die Frontwand in die Schließposition zurückführen.

In Fig. 32 ist eine Baugruppe aus Frontwand 550 und einer Deckwand 552 über Lenker 554 seitlich an den Schieber 556 angelenkt. Durch diese Parallelogrammführung kann man den Schieber von vorn und oben zugänglich machen.

In Fig. 33 ist eine Konstruktion gezeigt, bei der der Schieber 560 eine Frontwand, zwei seitliche Wangen 562 mit dreieckförmigen Ausschnitten 564 sowie zwei hintere Querstege 566 aufweist. Zugfedern 568 spannen den Schieber nach außen vor. Wird er entriegelt, läuft der untere Quersteg auf einen Anschlag (nicht gezeigt), und das dabei von den Federn entwickelte Drehmoment schwenkt den gesamten Schieber um diesen Anschlag, so daß die Fluchtlinien der Gehäuseöffnung freigemacht werden und eine Disc von dem jeweils angewählten und mit heraustransportierten, jedoch nicht mit verschwenkten Halter 570 nach vorn herausziehbar ist.

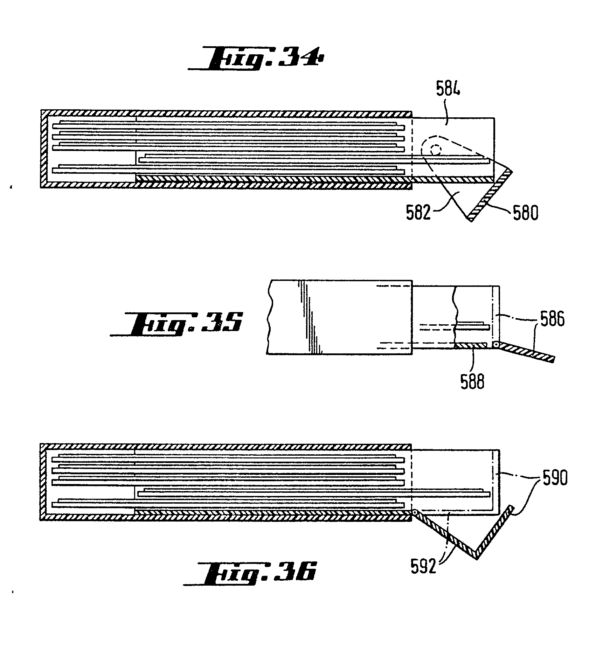

In Fig. 34 ist die Frontwand 580 mittels zweier seitlicher Wangen 582 an den Schieber 584 angelenkt, und eine in eines der Gelenke eingebaute Drehfeder (nicht gezeigt) kann die Frontwand in die weggeschwenkte und in Fig. 34 gezeichnete Position vorspannen. Zum Verschließen wird die Frontwand dann mit dem Finger in etwa mit der Gehäuseöffnung zur Ausfluchtung gebracht und der Schieber wird durch Druck auf die Frontwand eingeschoben.

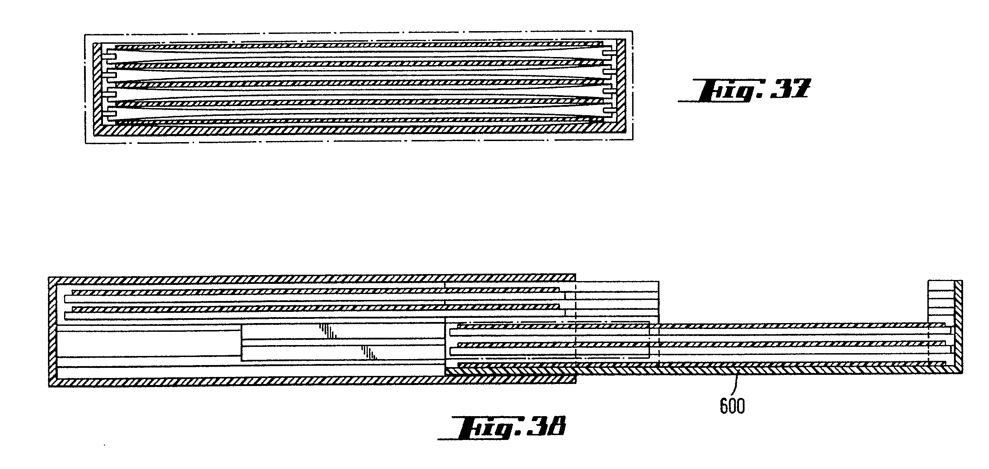

Gemäß Fig. 35 ist die Frontwand 586 längs einer ihrer längeren Kanten an den Schieber 588 angelenkt; im übrigen gilt sinngemäß dasselbe wie zu Fig. 34 gesagt. – Ganz ähnlich ist die Ausführungsform nach Fig. 36, bei der zusammen mit der Frontwand 590 ein Teil 592 des Schieberbodens wegschwenkbar ist.

Da bei den Ausführungsformen Fig. 30 bis Fig. 36 die Disc nicht abgehoben, sondern nach vorn herausgezogen wird, ist es bevorzugt, die jeweils verwendeten Disc-Halter oben und unten wannenförmig oder konkav zu profilieren; solche Disc-Halterprofile sind in Fig. 37 erkennbar. Diese Profilierung hat nämlich zur Folge, daß die Disc – wie immer man sie in den Schlitz zwischen dem teilausgefahrenen und dem darüber liegenden Disc-Halter einführt – immer nur mit ihrer Kante in Berührung mit einem oder beiden Disc-Haltern kommen kann, so daß ihre Aufzeichnungsspuren innerhalb dieser Kante keinesfalls zerkratzt werden können.

In Fig. 38 ist angedeutet, daß das Transportorgan – hier ein Schieber 600 – so ausgebildet werden kann, daß er selbst einen der Disc-Halter bildet; gezeichnet ist hier eine Variante der Ausführungsform nach Fig. 1 bis 3, wobei der Schieberboden als Halter ausgebildet ist.

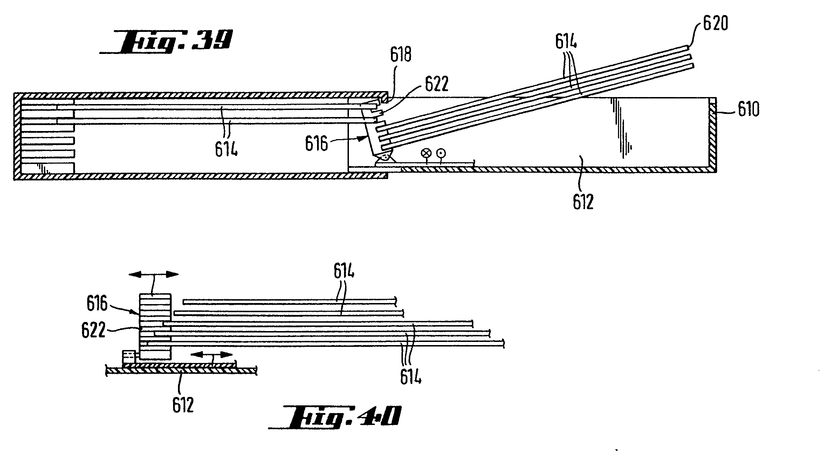

Fig. 39 und 40 stellen eine Variante der Ausführungsform nach Fig. 33 dar in dem Sinne, daß hier nicht die Frontwand 610 des Transportorgans 612 weggeschwenkt wird, sondern die jeweils ausgewählten Disc-Halter 614 mittels eines Kipphebels 616, der auf einen Anschlag 618 aufläuft, soweit gehoben werden, daß sie mit ihrer erfaßbaren Kante 620 oberhalb der freien Frontwandkante liegen. Das Wählprinzip ist hier ähnlich wie bei Fig. 1 bis 3 ausgebildet und in Fig. 40 angedeutet: Die Disc-Halter 614 werden von unten nach oben immer schmaler, und mittels der Wähleinrichtung werden die Greifer 622 des Kipphebels 616 soweit nach innen verstellt, daß der gewünschte Halter 614 zusammen mit den unter ihm liegenden mitgenommen wird, wenn die Verriegelung des Schiebers gelöst wird.

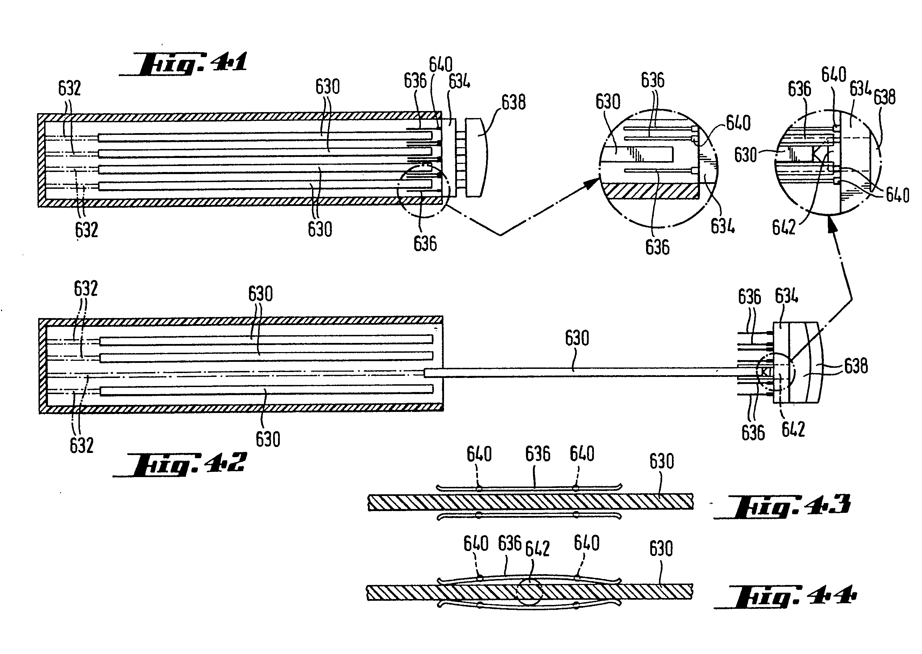

Fig. 41 bis 44 zeigen eine Ausführungsform, bei der jeder Disc-Halter, nachdem er angewählt worden ist, einen Teil des Transportorgans bildet. Jeder Disc-Halter 630 hat eine eigene Vorspannfeder 632 und ein eigenes Verriegelungssystem, das durch Ausüben von gehäuseeinwärts gerichtetem Druck auf die äußere Endkante des Halters entriegelbar ist. Die Wähleinrichtung und der verbleibende Teil des Transportorgans bestehen hier aus einer Frontwand 634 mit Greiferfedern 636 und Wähltasten 638. Die Greiferfedern sind Paare von Blattfedern, die um Lageraugen 640 in der Frontwand 634 schwenkbar sind und so aufgespreizt werden, wie in Fig. 44 angedeutet, daß ihre freien Enden sich in dem jeweils angewählten Disc-Halter 630 verankern, wenn ein Treiberkonus 642, der innen an jeder Taste sitzt, die seinem Halter zugeordnete Greiferfeder auseinanderdrückt.

Nachstehend wird unter Bezugnahme auf Fig. 45 bis 48 das bevorzugte Verriegelungssystem erläutert, bevorzugt deshalb, weil es wenig Raum einnimmt, kostengünstig zu fertigen und montieren ist und sich beim Verschließen des Gehäuses selbsttätig verriegelt, bei erneutem Druck auf den Gehäuseverschluß aber wieder entriegelt. Es versteht sich aber, daß auch andere Verriegelungsmechanismen verwendet werden können, etwa ähnlich dem, wie er in der eingangs genannten Druckschrift vorgesehen ist.

Es sei angenommen, daß das Transportorgan ein Schieber ist mit einer Bodenplatte, die sich parallel zu einer Gehäusebodenplatte bewegt; dies trifft auf eine ganze Reihe der oben geschilderten Ausführungsbeispiele zu.

Die Schieberbodenplatte 366 weist einen Durchbruch 380 auf, in den ein Drehriegel 382 eingesetzt und mittels dreier Haken 384 gehalten ist, die in Eintiefungen 386 auf der Oberseite des Schieberbodens greifen. Der Drehriegel stützt sich dabei mit seinem Umfang an nach innen einspringenden Flanschen 388 zwischen den Eintiefungen ab. Bei der Montage wird der Drehriegel von unten eingedrückt, wobei die Haken wegen der Ausnehmungen 390 nach innen einfedern können. Die Winkelerstreckung der Eintiefungen 386 begrenzt dabei den Drehwinkel des Riegels.

Der Drehriegel weist ferner eine durch eine Stufe 392 abgesetzte und von zwei radialen Einschnitten begrenzte Blattfeder 394 auf, die senkrecht zur Schieberbodenebene nach oben auslenkbar ist und an ihrem freien Ende einen hinterschnittenen Riegelfortsatz 396 trägt. In Höhe dieses Riegelfortsatzes ist der Schieberboden auch auf der Unterseite eingetieft, wobei die Begrenzungskontur in Fig. 45 mit 398 bezeichnet ist, und im Bewegungsbereich des freien Federendes ist auch der Flansch 388 mit einer Ausnehmung 400 versehen. Schließlich ist an die Unterseite des Drehriegels noch ein Steuernocken 402 angeformt.

Es sei angenommen, daß der Drehriegel in Fig. 46 im Gegenuhrzeigersinn bis zum Anschlag verdreht sei. Wird nun der Schieber in Richtung des Pfeiles 404 eingeschoben, so läuft die Kante des Riegelfortsatzes 396 auf eine erste Steuerfläche 406 einer Kulisse 408 auf, die sich für den unteren Schieber am Gehäuseboden, für den oberen auf einem mit der Gehäuserückwand verbundenen Träger (nicht dargestellt) befindet. Ähnlich wie oben für die Tastensteuerkonus' vorausgesetzt, ist die Schräge der Fläche 406 – und der weiteren, noch zu beschreibenden Steuerflächen – so gewählt, daß der Drehriegel bei Schieberbewegung in Pfeilrichtung verlagert, und zwar in diesem Falle in Uhrzeigerrichtung verdreht wird. Dabei erreicht er schließlich die Rampe 409 der Kulisse, die schräg nach oben in Richtung zur Gehäuserückwand 354 ansteigt. Bei fortgesetztem Schiebereinschub wird dadurch der Riegelfortsatz am freien Blattfederende ausgelenkt, gleitet über die Kulisse und rastet hinter ihr wieder ein. Zugleich trifft der Schieber auf einen (nicht dargestellten) Anschlag. Läßt man nun den Schieber los, wird er von Ausschubfedern wieder nach außen gedrückt. Dabei gleitet eine rückwärtige Kante des Riegelfortsatzes längs einer weiteren Schrägfläche 410 der Kulisse, bis der Riegelfortsatz sich mit seiner Hinterschneidung an einer komplementären Hinterschneidung 412 der Kulisse verhakt. In dieser Position steht der Steuernocken 402, der beim bisherigen Bewegungsablauf frei zwischen der Kulisse und einem Steuerzahn durchtreten konnte, vor der Schrägfläche 414 des letzteren; der Steuerzahn ist wie die Kulisse an dem Gehäuse angeformt.

Drückt man nun erneut auf den Schieber – etwa zum Beispiel auf irgendeine der Tasten 298 im Ausführungsbeispiel nach Figuren 10 bis 20 –, so wird der Steuernocken 402 längs der Schrägfläche 414 geführt und verdreht dadurch den Drehriegel weiter im Gegenuhrzeigersinn, bis der Riegelfortsatz vor einer zweiten Rampe 416 der Kulisse steht. Diese Rampe hat eine Neigung entgegengesetzt der Neigung der ersten Rampe 409, so daß der Riegelfortsatz erneut federnd ausgelenkt wird und über die Rampe gleitet, wobei der Schieber freigegeben wird und der Drehriegel wieder seine eingangs vorausgesetzte Position einnimmt.

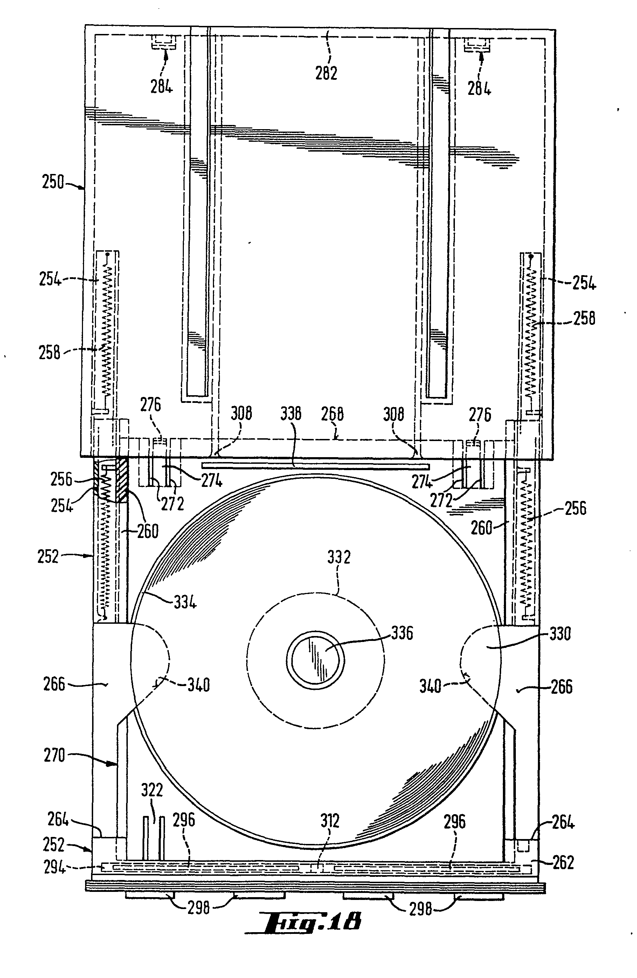

Um kenntlich zu machen, welchen Inhalt irgendein Mitnehmer haben soll, ist es zweckmäßig, auf der sichtbaren Frontseite des Behälters ein Beschriftungsfeld vorzusehen. Dies ist in Fig. 14 und 16 angedeutet; hinter einem transparenten Aufschnappfenster 415 oberhalb der Tasten kann ein entsprechendes Etikett eingelegt werden.

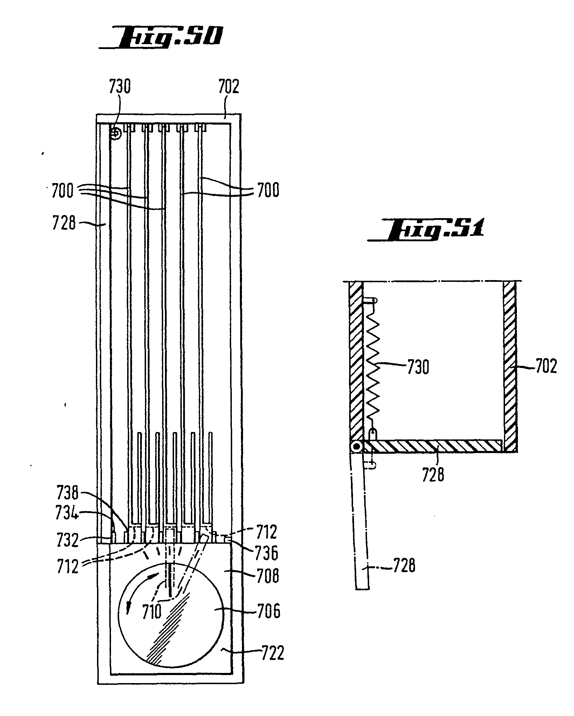

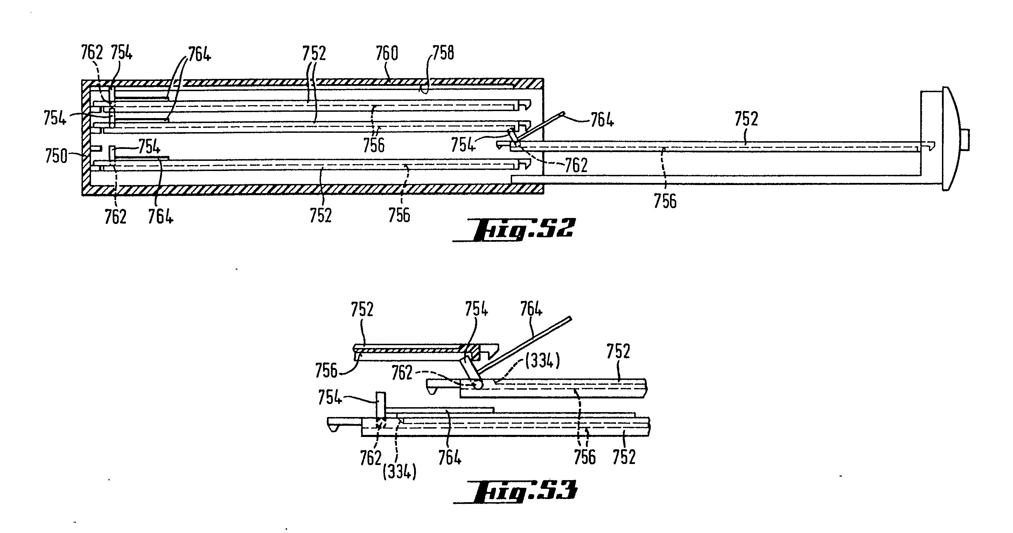

Ein weiteres Ausführungsbeispiel ist in Fig. 49 bis 51 gezeigt.

Der Behälter ist für Compactdiscs bestimmt, die in je einem Halter 700 stehen. Jeder Halter ist, ähnlich wie bei der Ausführungsform nach Fig. 10 bis 20, reibungsschlüssig im Gehäuse 702 gehalten: Ein Federarm 704 greift mit einer losreißbaren Raste in eine zugeordnete Falle, die in einem an die Gehäuserückwand innen angeformten Steg vorgesehen ist. Je einer der Halter ist mittels eines Wählknopfs 706 formschlüssig mit einem schlittenartigen Schieber 708 kuppelbar; zu diesem Zweck weist der Wählknopf einen Wählarm 710 auf, der je nach der Knopfstellung in einen Mitnehmerschlitz 712 eines Disc-Halters greifen kann. Die Verriegelung erfolgt in ähnlicher Weise wie oben unter Bezugnahme auf Fig. 45 bis 48 beschrieben: Man erkennt die Steuerkulisse 714 und einen Riegel 716 mit Verriegelungsfortsatz 718. Hier ist allerdings der Riegel kein Drehriegel, sondern in einem Käfig 720 quer zur Schieberbewegungsrichtung gleitbeweglich geführt.

Im geschlossenen Zustand des Behälters ist die offene Gehäusefrontseite von der den Wählknopf tragenden Schieberfrontwand 722 nur im unteren Bereich abgedeckt. Zum Schutz der nach oben (Halterausschnitt 724) oder nach vorn (Halterausschnitt 726) herausnehmbaren Discs wird der verbleibende Teil der Gehäusefront von einer Klappe 728 verschlossen, die mittels einer Zugfeder 730 in die Schließposition vorgespannt ist. Wird der Schieber durch Druck auf den Knopf entriegelt, drückt die Endkante 732 eines auf der Oberseite des Schiebers vorgesehenen Steges 734 die Klappe auf, und der Steg selbst hält die Klappe geöffnet. Führungsrippen 736 für den Schieber und 738 für die Halter sind nur angedeutet; diesbezüglich kann man auf die oben detailliert erläuterten Ausführungsbeispiele zurückgreifen.

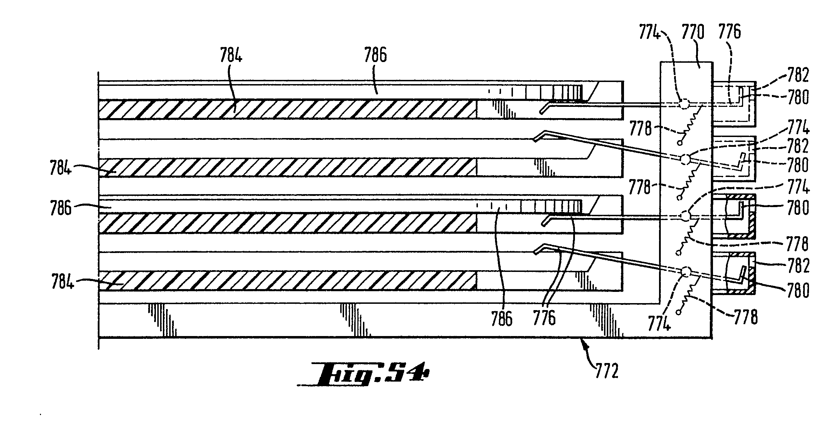

Die Figuren 52 bis 54 sind schematische Detaildarstellungen.

Fig. 52 stellt im Vertikalschnitt einen geöffneten Behälter des in Fig. 10 bis 20 gezeigten Typs dar. Wenn ein solcher Behälter beispielsweise auf der Gehäuserückwand 750 stehend in einem Fahrzeug eingebaut ist, besteht die Gefahr, daß beim Öffnen die auf dem heraustransportierten Halter 752 liegende Disc nach unten rutscht, also über die Felge 334 hinübergleitet, und zwischen dieser und dem danebenliegenden Halter bzw. der Gehäusedeckwandung eingeklemmt wird. Deshalb sind nahe der gehäuseinnenseitigen Kante der Halter Zinken 754 angesetzt, die in schlitzförmige Eintiefungen 756 auf der den Discs abgekehrten Seite des nächstbenachbarten Halters greifen bzw. in analoge Eintiefungen 758 auf der den Discs zugewandten Innenfläche der Gehäusedeckwandung 760.

Wie Fig. 53, die vergrößert einen Ausschnitt zeigt, erkennen läßt, stoßen die freien Enden der Zinken 754 bei fast vollständig ausgezogenem Halter an eine Endkante der zugehörigen Eintiefung, und da sie um eine Zapfenlagerung 762 nach hinten schwenkbar sind, behindern sie nicht den vollständigen Auszug des Halters. Die Endposition ist in Fig. 53, oben, angedeutet. Auf diese Weise kann ein an die Zinken angeformter Arm 764 vom Halter abgeklappt werden und definiert einen Einführtrichter für das oben erwähnte Begleitheft zur Disc, das sich deshalb ebenfalls nicht verklemmen kann.

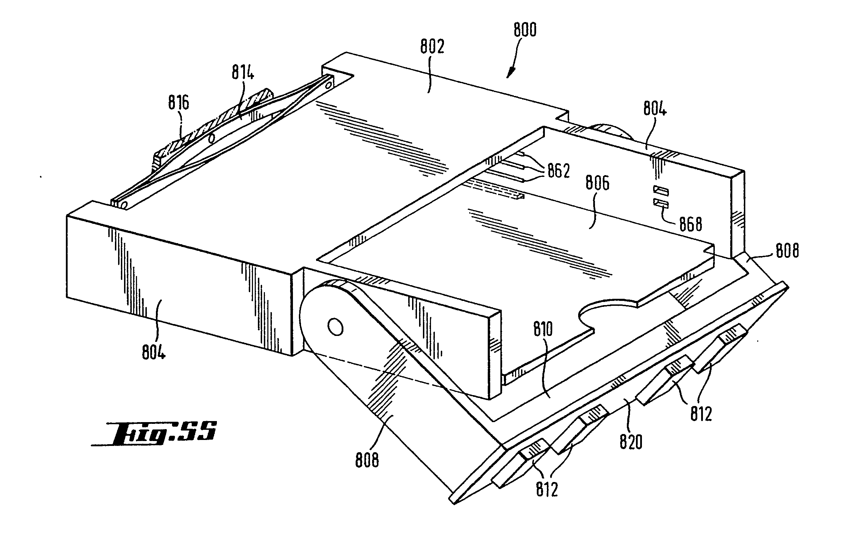

Fig. 54 zeigt eine Lösungsmöglichkeit für die in Fig. 10 bis 20 nur angedeutete Sichtanzeigeanordnung. In der Frontwand 770 eines Schiebers 772 sind um frontwandparallele Achsen 774 Signalhebel 776 drehbar gelagert und von Hilfsfedern 778 in die «Leer»-Position vorgespannt; ein Signalwinkel 780 ist dann in einem auf der Frontwand-Außenseite angebrachten Fenster 782 nicht erkennbar. Die Hilfsfedern sind so schwach, daß die Signalhebel durch das Gewicht einer auf einen Halter 784 aufgelegten Disc 786 gegen die Kraft der Hilfsfeder verschwenkt werden und der Signalwinkel sichtbar ist. – Es versteht sich, daß dies nur eine von zahlreichen weiteren möglichen Lösungen darstellt.

Die Fig. 55 bis 59 stellen ein Ausführungsbeispiel dar, bei dem eine Tastatur zum Wählen eines bestimmten Disc-Mitnehmers auf der Frontseite eines Schiebers angeordnet ist, die zusammen mit der Schieberfrontwand abklappbar ist, um den Zugriff zu der jeweils gewählten Disc zu erleichtern.

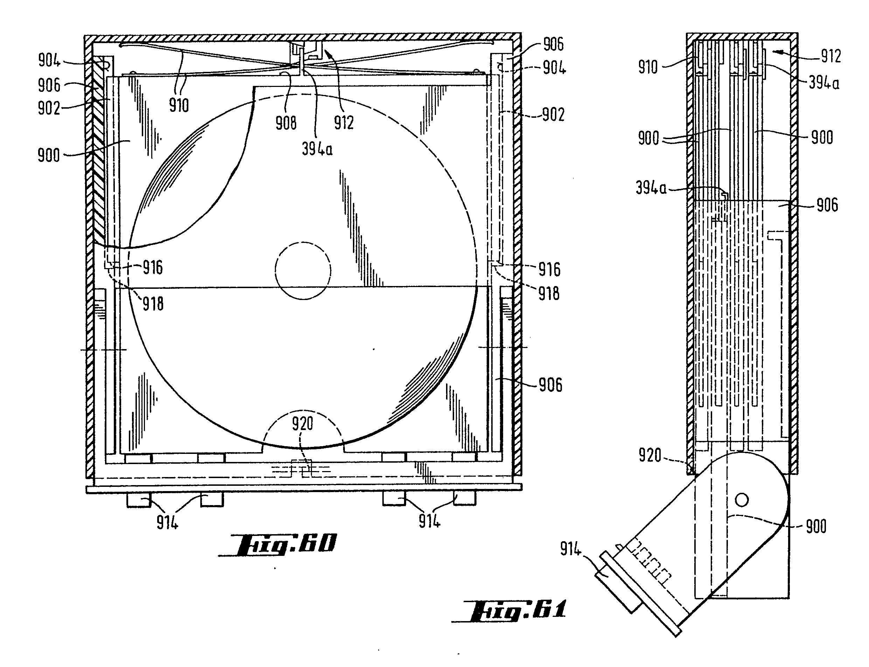

Fig. 55 zeigt perspektivisch den Schieber 800. Er weist eine Deckwand 802 und seitliche Wangen 804 auf, auf deren einander zugekehrten Innenseiten Führungsrillen für Mitnehmer in Form von Platten 806 ausgebildet sind. In Frontrichtung sind die Wangen nach außen abgestuft, und in dem so geschaffenen Freiraum sind Schenkel 808 der Frontwand 810 angelenkt, welche die Wähltasten 812 trägt. In Höhe der Deckwand 802 ist an dem Schieber 800 eine Doppelblattfeder 814 befestigt, die ihn bis in die Entnahmeposition (Fig. 59) vorspannt.

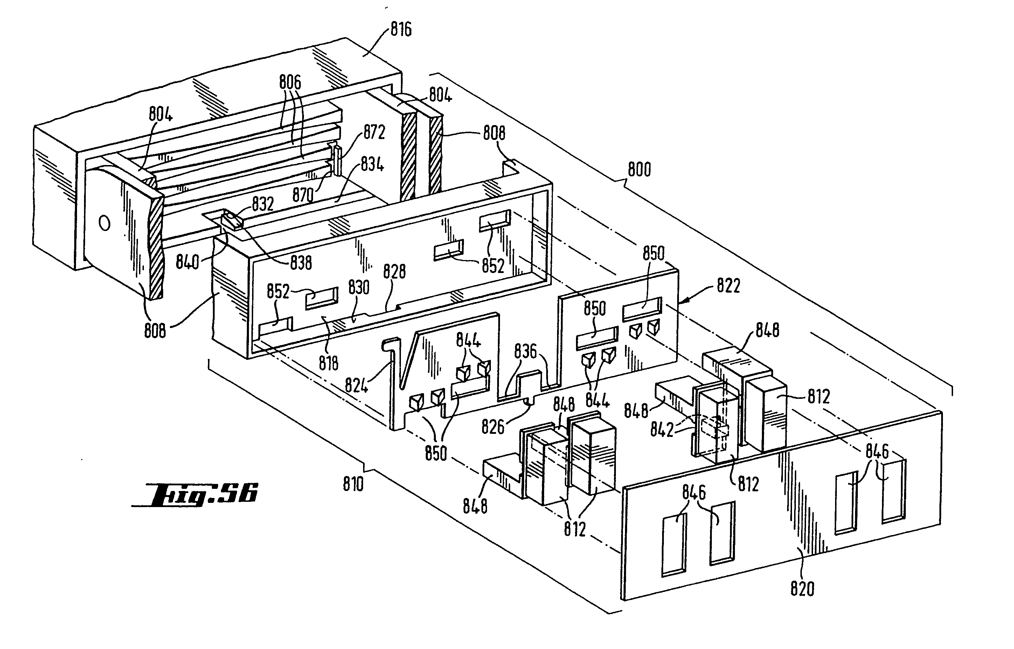

Fig. 56 stellt perspektivisch den Aufbau der Schieberfrontwand, wobei die Komponenten demontiert gezeichnet sind, und des Verriegelungssystems dar, mit dem der Schieber 800 gegen die Vorspannung der Feder 814 im Gehäuse 816 gehalten ist.

Die Wähltasten erfüllen zwei Funktionen: Sie entsperren die Verriegelung und sie bringen eine ihnen zugeordnete Disc-Mitnehmerplatte 806 in Kopplungsverbindung mit den seitlichen Wangen 804.

In einem Hohlraum der Frontwand zwischen einer Innenplatte 818 und einer Abdeckplatte 820 ist ein Riegelschieber 822 querverlagerbar aufgenommen, der von einer angeformten Rückstellfeder 824 in Verriegelungsposition gehalten ist. In dieser greift ein angeformter Riegel 826 durch ein Loch 828 im Frontwandboden 830 hinter eine Riegelkante 832 im Gehäuseboden 834. Beim Einschub des Schiebers 800 in das Gehäuse wird der Riegel 826, der wegen der dünnen Verbindungsstege 836 nach oben relativ zum Riegelschieber 822 auslenkbar ist, durch Auflaufen auf die Keilfläche 838 am Gehäuse gehoben und kann federnd einrasten. Um den Schieber 800 zu entriegeln, muß der Riegel zusammen mit dem Riegelschieber gegen die Vorspannung der Rückstellfeder 824 querverlagert werden, so daß er von der Riegelkante freikommt und längs des Gehäusebodeneinschnitts 840 verschiebbar ist.

Jede der vier (im Ausführungsbeispiel) Tasten 812 kann diese Querverlagerung bewirken, indem sie mit angeformten Keilflächen 842 auf Gegenkeile 844 am Riegelschieber auflaufen, wenn sie einwärts gedrückt werden. Die Tasten sind in Öffnungen 846 der Abdeckplatte 820 geführt und an deren Innenseite abgestützt. Die Keilflächen 842/844 sind von Taste zu Taste höhenmäßig versetzt, um bei jeder Taste die Ausfluchtung von deren Steuerfinger 848 mit der zugeordneten Mitnehmerplatte 806 zu ermöglichen. Für den Durchtritt der Steuerfinger sind Durchbrüche 850 im Riegelschieber und 852 in der Innenplatte 818 vorgesehen.

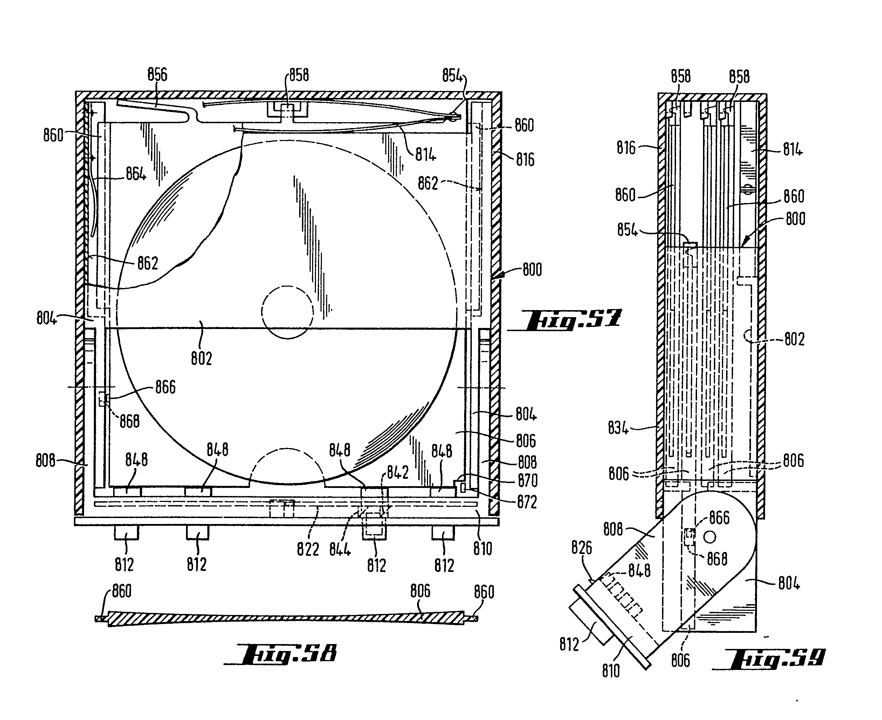

Fig. 57 ist eine Draufsicht auf die Anordnung bei entfernter Gehäusedeckwandung in Höhe der untersten oder zweituntersten Mitnehmerplatte. Diese beiden Platten sind identisch, und die beiden obersten Platten sind untereinander ebenfalls identisch, jedoch spiegelverkehrt zu den unteren beiden ausgebildet, wie man aufgrund der nachfolgenden Erläuterung leicht erkennt.

Die Platte 806 ist im Prinzip rechteckig, weist jedoch an ihrer inneren Endkante eine als Kipplager dienende Schneide 854 in der der zugeordneten Taste am weitesten (diagonal) abgelegenen Ecke auf. Ferner ist an der jeweils anderen Ecke der Innenkante eine Rückstellfeder 856 angeformt, und zwischen Schneide und Feder ist eine Reibungsbremse 858 vorgesehen, die der Ausführungsform nach Fig. 10 bis 12 entsprechen kann, wie der Vertikalschnitt gemäß Fig. 59 erkennen läßt. Das Profil der Platten ist aus oben erläuterten Gründen konkav (Fig. 58).

An den Seitenkanten der Platten sind Stege 860 angeformt, die in die Führungsrillen 862 greifen. In derjenigen Führungsrille, die der zugeordneten Taste näherliegt, ist eine Blattfeder 864 eingelegt, die die zugeordnete Platte in die in Fig. 57 dargestellte Ruhelage vorspannt. Auf derselben Seite ist ein Mitnehmerzahn 866 an die Platte angeformt, der vor einem Mitnehmerloch 868 der betreffenden Schieberwange 804 steht. Wie in Fig. 57 erkennbar, haben die Platten mit ihren Stegen 860 ziemlich viel seitliches Spiel in den Rillen 862.

Drückt man nun auf die zugeordnete Taste – in Fig. 57 die erste oder zweite von links –, wird die Platte um die Schneide 854 gegen die Vorspannung ihrer Rückstellfeder 856 verschwenkt. Dabei kommt der Zahn 866 in Eingriff mit dem Loch 868, während die der Taste abgelegene vordere Ecke 870 von einem stationären Anschlag 872 freikommt. Der entriegelte Schieber nimmt demgemäß diese eine angewählte Platte mit. Seine Frontwand kann herunterklappen. Beim Wiedereinschub drückt die Blattfeder 864 die Platte in die Ruhelage zurück. Der Anschlag 872 ragt für die untersten beiden Platten nach oben, während er sich für die beiden andern Platten, in der andern Ecke, von oben vor die Plattenecken erstreckt.

Bei der Ausführungsform nach Fig. 60 und 61 ist der Behälter in Fig. 60 in analoger Darstellung zu Fig. 57 gezeichnet, und die Fig. 61 entspricht der Fig. 59.

Durch eine geschickte Kombination mehrerer, in früheren Ausführungsbeispielen beschriebener Details ergibt sich ein sehr einfacher Aufbau:

Der Aufbau der abklappbaren Frontwand ist identisch mit dem Ausführungsbeispiel nach Fig. 55–59. Demgemäß wird der Schieber durch Druck auf irgendeine der Tasten entriegelt.

Jeder einzelne Mitnehmer 900 ist plattenförmig und mit seitlichen Leisten 902 in Rillen 904 der Schieberwangen 906 geführt. An der rückwärtigen (gehäuseinneren) Kante 908 jedes einzelnen Mitnehmers sind eine Ausschubfederanordnung aus zwei Blattfedern 910 sowie ein eigenes Verriegelungssystem 912 angebracht. Das Verriegelungssystem 912 entspricht funktionell völlig dem in Fig. 45–48 dargestellten, mit dem Unterschied, daß der Riegelhaken 394a einfach an die Mitnehmerkante angeformt ist und sowohl vertikal als auch horizontal elastisch auslenkbar ist. Demgemäß wird nur der einer gedrückten Taste 914 zugeordnete Mitnehmer entriegelt, während alle andern von ihrem eigenen Verriegelungssystem festgehalten werden. Der entriegelte Mitnehmer beginnt seine Auswärtsbewegung, und wenn die Endkanten 916 seiner Seitenstege auf die Rillenendkanten 918 der Führungsrillen 904 stoßen, wird auch der Schieber mitgenommen. Es versteht sich, daß im Bereich der Riegelkante 920 für den Frontwand-Riegel etwas Platz für den Überhub gelassen wird, der zum erneuten Verriegeln beim Wiedereinschub notwendig ist.

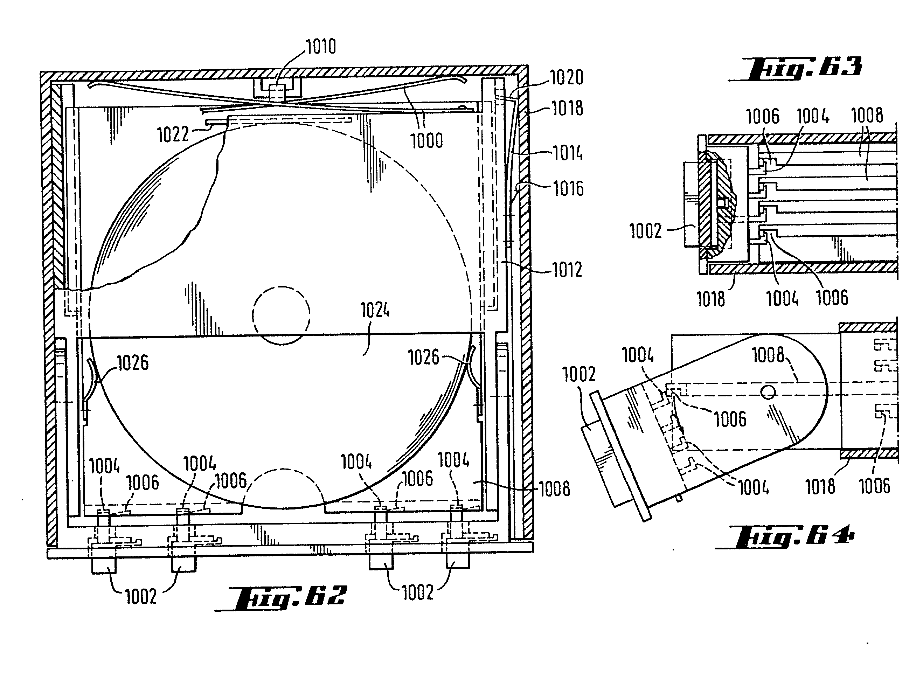

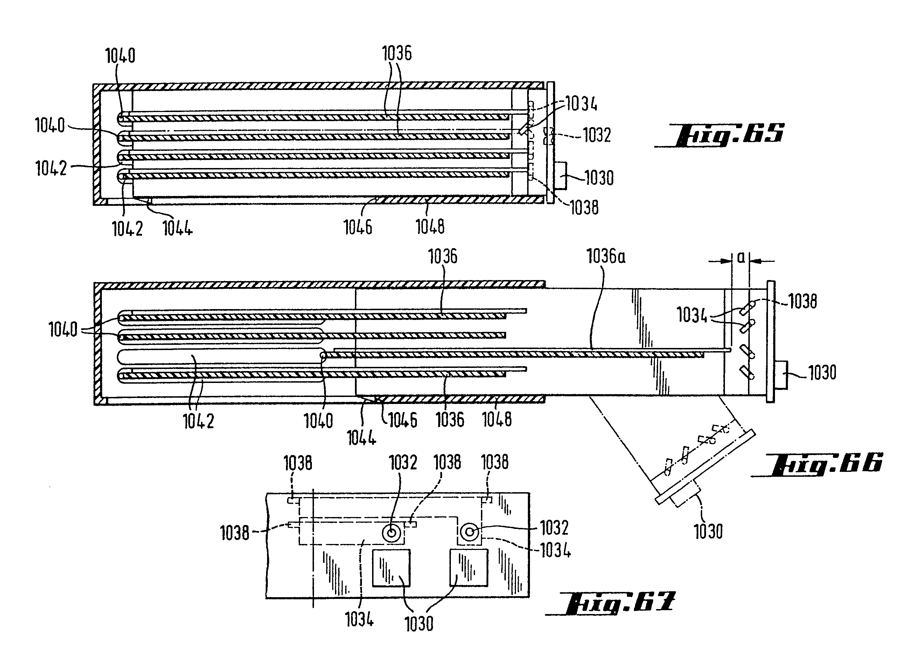

Bei der Ausführungsform nach Fig. 62 bis 64 ist die Darstellung von Fig. 62 analog zu Fig. 57. Fig. 63 und 64 sind Vertikalteilschnitte im Bereich der Frontwand des Schiebers in der Aufbewahrungs- bzw. Entnahmeposition, in der die Frontwand abgeklappt ist.

Wie bei Fig. 55–59, weist der Schieber ein Ausschubfedersystem 1000 auf, wobei die Verriegelungsanordnung der nach Fig. 56 analog ist, obwohl hier die Tasten 1002 keine Schiebe-, sondern eine Schwenkbewegung um eine zu den Mitnehmerplatten-Ebenen senkrechte Achse ausführen, so daß ihre Koppelhaken 1004 in nach unten offene Koppeleinschnitte 1006 der jeweils zugeordneten Platten 1008 greifen können. Die Haken 1004 sind demgemäß von Taste zu Taste höhenmäßig versetzt. Eine Reibungsbremse 1010 entsprechend der nach Fig. 55–59 ist jeder Platte 1008 zugeordnet. Die einzelnen Mitnehmerplatten 1008 haben in ihrer Frontkante Einschnitte, die den Durchtritt der höherliegenden Haken 1004 zulassen, wenn die Frontwand abklappt. Bis zur Entnahmestellung wird demgemäß die eine angewählte Platte, mit dem Schieber gekoppelt, mitgenommen. Dann klappt die Frontwand nach unten, und damit dann der mitgenommene Mitnehmer nicht völlig lose ist, ist seitlich neben einer der Schieberwangen 1012 eine Blattfeder 1014 an dieser außen angebracht (eine für jeden Mitnehmer), die – auf einen Steuerkeil 1016 des Gehäuses 1018 auflaufend – einwärts schwenkt und mit einer Abwinkelung 1020 den mitgenommenen Mitnehmer hintergreift.

In Fig. 62 ist eine auf jeder Mitnehmerplatte 1008 angeordnete niedrige Endwand 1022 angedeutet, an die die Disc 1024 beim Einlegen anstößt. Ferner trägt jede Mitnehmerplatte ein paar von seitlichen Blattfedern 1026, die derart in der vorderen Hälfte der Platte 1008 angeordnet sind, daß sie von der Disc beim Einlegen ausgelenkt werden, dann aber wieder zurückfedern und sich an die Disc-Kante anlegen. Beim Einlegen der Disc wird somit eine einwärts gerichtete Kraft ausgeübt, und umgekehrt wird verhindert, daß die Disc beim Ausschub herauskatapultiert wird. – Es versteht sich, daß die Elemente 1022, 1026 analog auch bei den andern Ausführungsbeispielen geboten sein können.

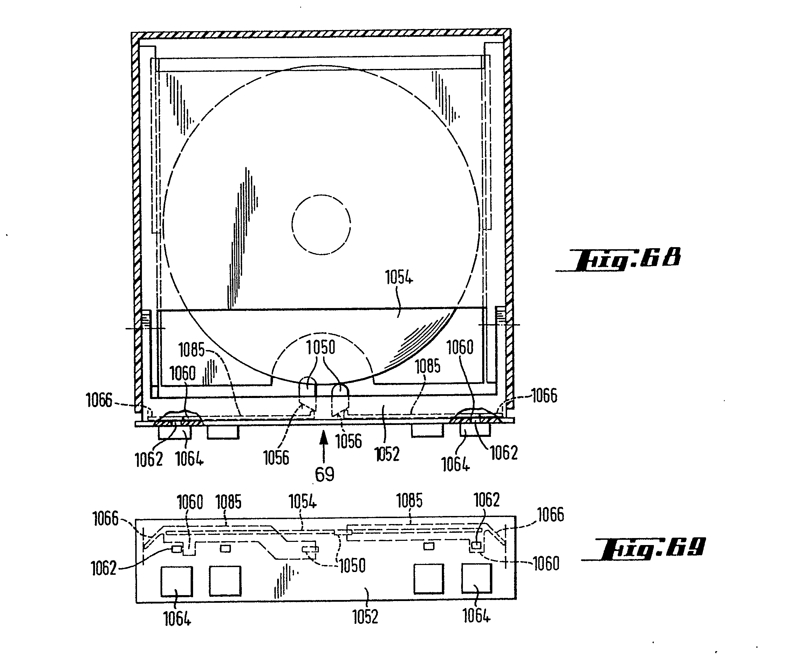

Fig. 65 bis 67 beziehen sich auf eine Anzeigevorrichtung, mittels der in der Schieberfrontwand erkennbar ist, welcher Mitnehmer belegt oder frei ist, und zwar bei abklappbarer Frontwand. Fig. 67 ist eine Teilfrontansicht der Frontwand mit Tasten 1030 und darüber befindlichen Linsen 1032, hinter denen eine Signalfahne 1034 erscheint, wenn der zugeordnete Halter 1036 eine Disc trägt. Die Signalfahne steht unter einwärts gerichteter Federvorspannung und legt sich bei eingeschobenem Schieber in der Mitte des zugeordneten Mitnehmers an die am weitesten vorstehende Kante einer Disc – wenn vorhanden – an; andernfalls schwenkt sie nach innen. Fig. 67 deutet für zwei Mitnehmer an, wie die Übertragung zu der jeweiligen Linse 1032 erfolgen kann. Die Fahnen 1034 sind um kleine Zapfenlager 1038 schwenkbar. Der schematische Vertikalschnitt Fig. 65 zeigt drei belegte und einen freien Mitnehmer sowie die zugehörige Position der Fahnen 1034.

Damit in der Ausfahrstellung (Fig. 66) die über einem ausgefahrenen Mitnehmer 1036a befindlichen Fahnen 1032 an diesem vorbei abklappen können, ist der Ausfahrweg des Schiebers um eine kleine Strecke a länger als der der Mitnehmer: Die Mitnehmer haben seitliche Zapfen 1040, die in stationären Rillen 1042 bis zu einem Endanschlag laufen, während dem Schieber ein eigener Anschlag 1044 mit eigenem Gegenanschlag 1046 im Gehäuseboden 1048 zugeordnet ist.

Fig. 68 und 69 zeigen, weitgehend schematisiert, eine alternative Möglichkeit der Anzeige des Belegungszustands der Mitnehmer. In dem schematischen Horizontalschnitt nach Fig. 68 erkennt man Tastfinger 1050, die einwärts verschieblich in der Schieberfrontwand 1052 gelagert sind. Drükken sie gegen die Kante einer Disc 1054, überträgt sich diese Bewegung über die Keilfläche 1056 auf die Fahne 1058, deren Signalabschnitt 1060 dann hinter einem Fenster 1062 über der zugeordneten Taste 1064 erscheint. Die Fahnen sind parallel zu der Frontwand verschieblich und mit Rückstellfedern 1066 versehen, die auch die Vorspannung für die Tastfinger 1050 liefern. Auch hier kann die Frontwand 1052 herunterklappen, ohne daß eine Störung dieser Anzeige erfolgen kann.

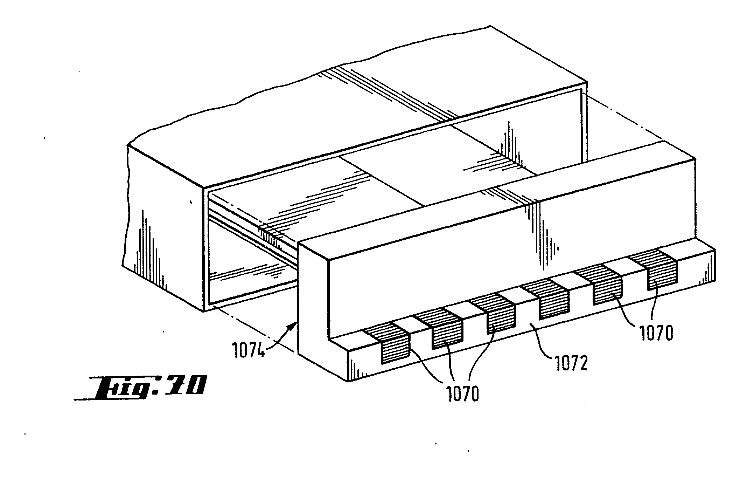

Beim Schließen des Behälters durch Einschieben des Schiebers ist dafür zu sorgen, daß der Benutzer nicht versehentlich zugleich eine Auslösetaste betätigt. Hier empfiehlt sich eine Konstruktion gemäß Fig. 70, die perspektivisch die vorgesehenen Mittel zeigt: Die Tasten 1070 sind in einer Leiste 1072 eingebettet, die von der Frontwand 1074 vorspringt. Der Benutzer kann dann mit der flachen Hand auf die Leiste drücken, während zum Auslösen durch Betätigen einer Taste diese gezielt mit einem Finger gesucht werden muß.

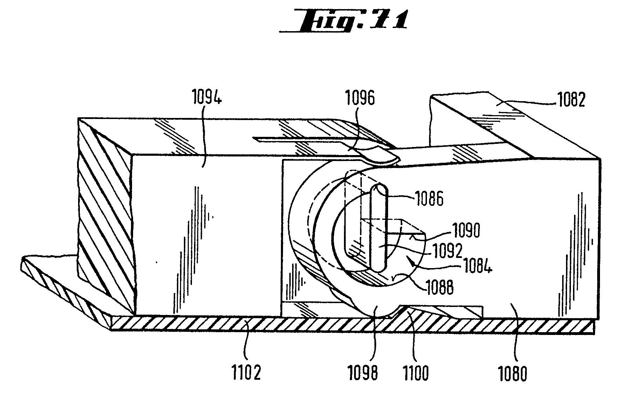

In den Ausführungsbeispielen nach Fig. 55 bis 69 war die Art und Weise der Anlenkung der Frontwand an die Schieberwangen nur angedeutet. Fig. 71 zeigt in weggebrochener perspektivischer Darstellung ein Verbindungsgelenk zwischen Frontwand und Schieberwangen in bevorzugter Ausgestaltung. Es ist nämlich erwünscht, daß beim Wiedereinschub des Schiebers, wofür ja die Frontwand wieder in die ausgefluchtete Lage zu heben ist, die Frontwand diese Position beibehält, um die Manipulation zu erleichtern.

Der Gelenkarm 1080 der Frontwand 1082 weist einen Durchbruch 1084 mit einer Rastnut 1086, einer Abrollbahn 1088 und einem Anschlag 1090 auf. Komplementär zu der Rastnut ist der Lagerstein 1092 ausgebildet, der sich von der Schieberwange 1094 nach außen erstreckt. Eine an die Wange angeformte Feder hält die Rastnut im Sitz auf dem Lagerstein 1092, von dem der Gelenkarm 1080 durch Auslenken der Feder 1096 freikommen kann. Dies geschieht durch Auflaufen des Steuernockens 1098 am Gelenkarm auf einen Steuerkeil 1100, der an das Gehäuse 1102 angeformt ist. Zugleich läuft die Frontwand aus der Gehäuseöffnung ins Freie, und da der Nocken 1098 bremsend wirkt, beginnt bereits eine Abwärtsschwenkbewegung des Gelenkarms um den Lagerstein 1092. Die Frontwand kann jetzt frei drehen, bis der Anschlag 1090 sich an die Breitseite des Lagersteins 1092 anlegt; während der Schwenkbewegung liegen die diametralen Enden des Lagersteins beide an der kreisförmigen Abrollbahn 1088 an. Wird die Frontwand manuell angehoben, rastet die Nut 1086 wieder unter Auslenkung der Feder 1096 auf dem Lagerstein ein.

Wie bei der Erläuterung der Ausführungsbeispiele nach Fig. 55 bis 71 deutlich geworden sein mag, kann es gegebenenfalls zu störanfälligen Lösungen führen, wenn man die Wähltasten, vielleicht noch zusammen mit Belegungs-Signalen, auf einer abklappbaren Frontwand vorsieht. Andererseits ist das Abklappen der Frontwand durchaus vorteilhaft, weil dann der Zugriff zu den Discs sehr bequem ist und, weil die Discs in Fluchtlinie herausziehbar sind, braucht auch der Ausschubweg der Mitnehmer nur klein zu sein.

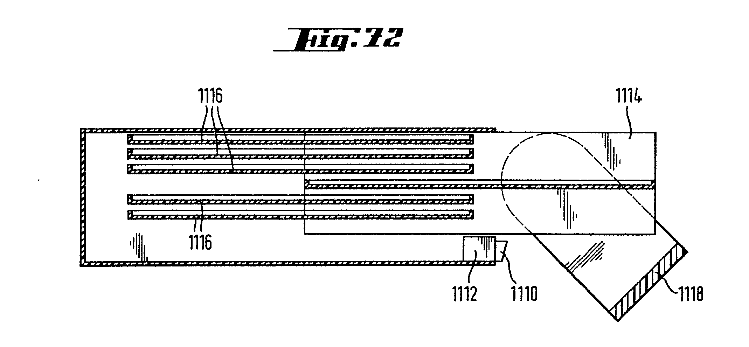

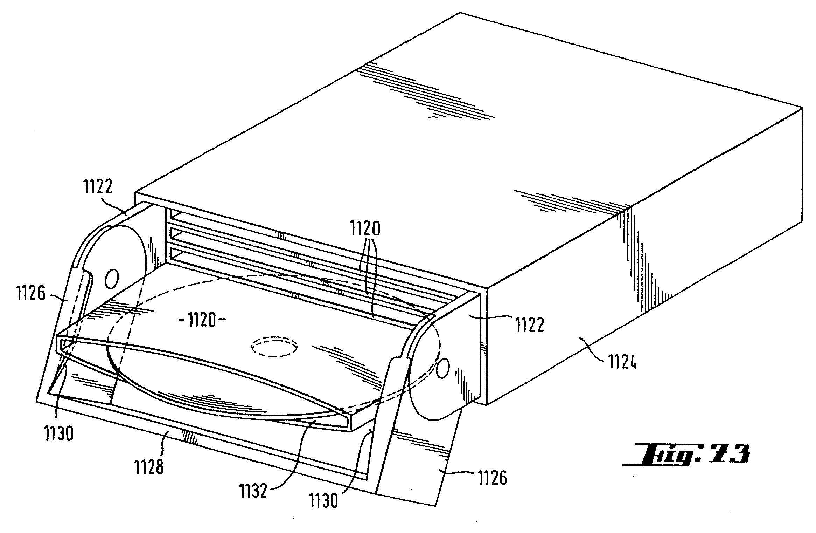

Eine Kompromißlösung ist in Fig. 72 schematisch im Vertikalschnitt gezeigt: Die Wähltastatur 1110 ist in einem Gehäusesockel 1112 angeordnet, über dem der Schieber 1114 mit den Mitnehmern 1116 und der abklappbaren Frontwand 1118 angeordnet sind. – Hinsichtlich des Aufbaus der Wähltastatur, der Mitnehmer und des Schiebers kann der Fachmann auf Lösungen verwiesen werden, wie sie in früheren Ausführungsbeispielen im einzelnen erläutert wurden. Diese Lösung ist beispielsweise geeignet für die in Fig. 73 dargestellte Ausführungsform (ohne Gehäusesockel mit Tastatur gezeichnet): Jeder Mitnehmer 1120 ist als Tasche ausgebildet, die aus einem elastisch deformierbaren Material besteht. Der Schieber 1122 transportiert eine solche Tasche aus dem Gehäuse 1124 heraus. Die Gelenkarme 1126 der Frontwand 1128 weisen keilförmige Verdickungen 1130 auf, die beim Abklappen der Frontwand seitlichen Druck auf die Tasche ausüben und deren Einschubschlitz 1132 aufspreizen, so daß der Benutzer leicht die Disc in das Fach der Tasche einlegen kann.

Ein solcher «Trichter» zum Erleichtern des Einlegens einer Disc ist besonders dann erwünscht, wenn der Behälter «stehend» verwendet wird, das heißt der Schieber bzw. die Mitnehmer vertikal auswärts bewegt werden.

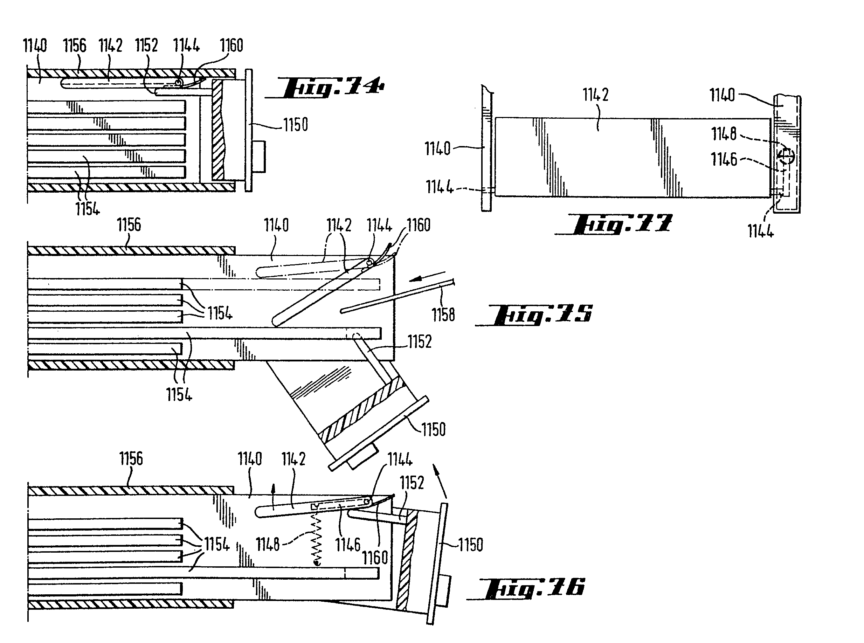

Auch ohne eine Tasche nach Fig. 73 läßt sich eine solche Einlegehilfe realisieren, wie in Fig. 74 bis 77 dargestellt. Die Fig. 74 bis 76 zeigen jeweils im vereinfachten Vertikalschnitt den Behälterfrontbereich in verschiedenen Schieberpositionen, und Fig. 77 ist eine vereinfachte Draufsicht auf den Schieber (ohne Frontwand).

An den Schieberwangen 1140 ist eine Leitplatte 1142 um eine zur oberen Frontwandkante parallele Achse mittels Zapfen 1144 schwenkbeweglich gelagert und durch eine an einem Hebelarm 1146 angreifende Zugfeder 1148 in Richtung auf die gegenüberliegende Kante vorgespannt. Die dem Gehäuseinnenraum zugewandte Seite der Leitplatte hat die früher bereits mehrmals erwähnte konkave Kontur.

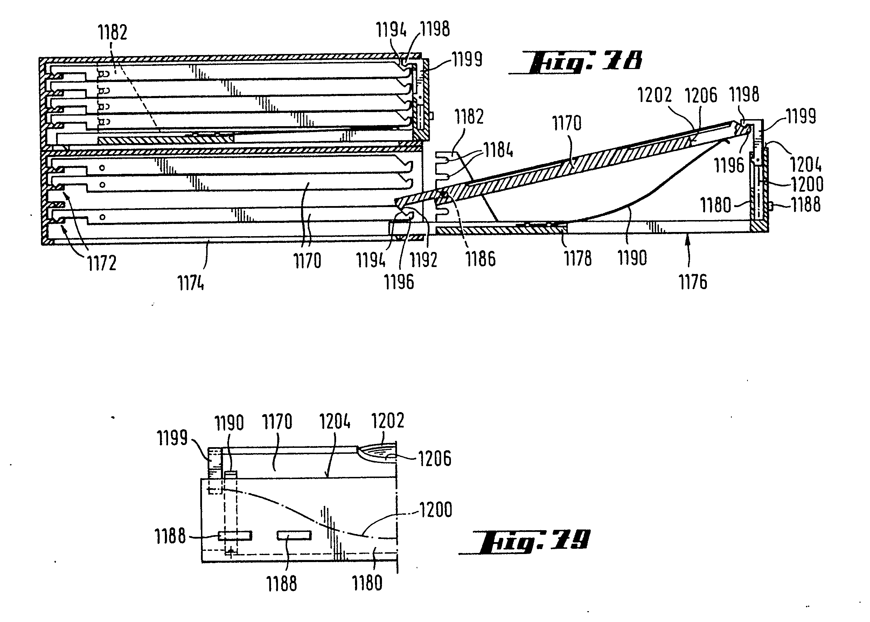

In der Aufbewahrungsposition hält ein an der Frontwand 1150 angebrachter Hebel 1152 die Leitplatte gegen ihre Federvorspannung parallel zu den Mitnehmerplatten 1154 in Anlage an der Innenseite der Gehäusedeckwand 1156 (Fig. 74). Mit dem Abklappen der Frontwand, bei dem der Hebel 1152 durch einen entsprechenden Schlitz der Mitnehmerplatte im Seitenbereich gehen kann, wird die Leitplatte freigegeben und legt sich auf die jeweils herausgeführte Mitnehmerplatte, so daß eine Disc 1158 bequem einlegbar ist. (Fig. 75).

In Fig. 75 ist noch gestrichelt die Position der Leitplatte für den Fall eingezeichnet, daß der ihr nächstliegende Mitnehmer gewählt worden ist, und man erkennt, daß dann der «Trichter» relativ eng ist. Deshalb ist es bevorzugt, noch eine zusätzliche, sich nach außen elastisch öffnende Blende 1160 vorzusehen, die in Fig. 77 weggelassen ist.

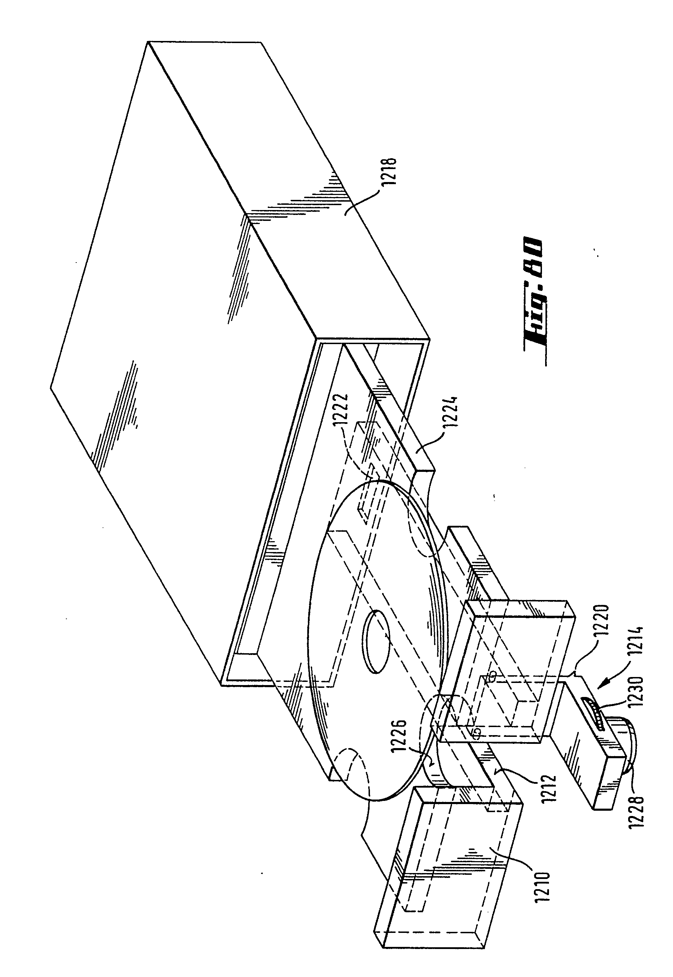

Beim Wiederanheben der Frontwand gemäß Fig. 76 wird die Leitplatte wieder in ihre Ruhepostion rückgeschwenkt, und der Schieber nebst Mitnehmer kann eingeschoben werden.

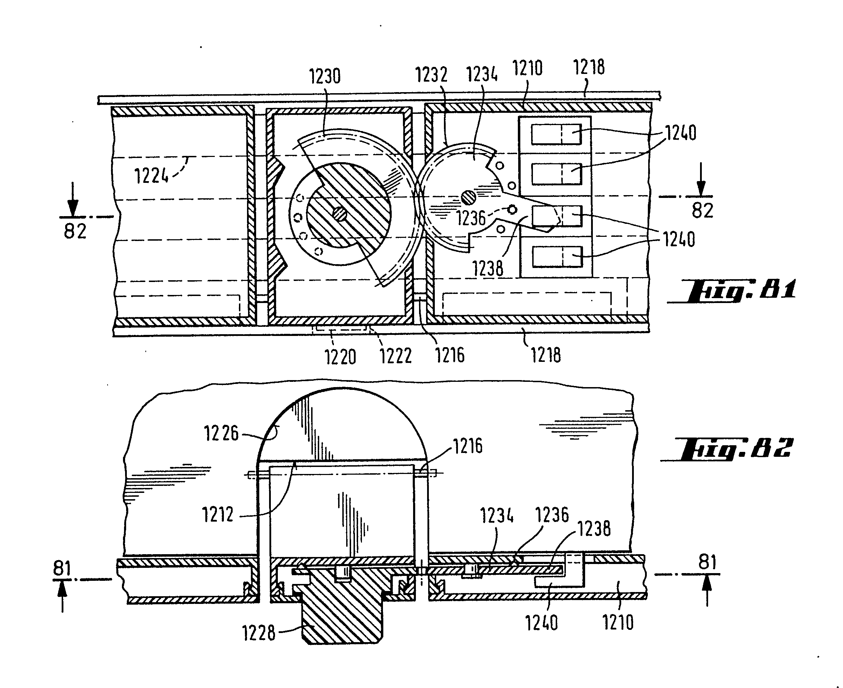

Die Figuren 78 und 79 zeigen im schematisierten Längsschnitt bzw. in Teil-Frontansicht eine weitere Ausführungsform.

Man erkennt in Fig. 78 zwei übereinandergestapelte Behälter, von denen der obere geschlossen (Schieber eingeschoben) ist. Beim unteren Behälter ist der Schieber in der äußeren Endstellung, und in Fig. 79 ist dieselbe Position dargestellt.

Die Halter 1170 sind plattenförmig und mittels der schon mehrfach erwähnten Reibungsbremse 1172 im Gehäuse 1174 gehalten. Der Schieber 1176 umfaßt einen Boden 1178, an dessen gehäuseinnerer Endkante eine Ausschubfederanordnung (nicht dargestellt) angreift, sowie eine Frontwand 1180. Nahe dem inneren Schieberende trägt der Boden 1178 seitlich je einen Lagerbock 1182 mit nach hinten offenen Lageraugen 1184 für jeden Mitnehmer, der entsprechende Lagerzapfen 1186 aufweist. Die Wähltasten 1188 kuppeln jeweils einen Mitnehmer ein entsprechend der Ausführungsform nach Fig. 62–64, das heißt, die Kupplung löst sich durch Herausschwenken des Mitnehmers nach oben. Diese Schwenkbewegung wird von einer am Boden 1178 montierten Blattfe

der 1190 bewirkt, sobald die Endkante 1192 des Mitnehmers sich längs der Keilschräge 1194 des darunterliegenden Mitnehmers (oder, beim untersten Mitnehmer, einer entsprechenden Keilfläche im Gehäuseboden – nicht dargestellt –) absenken kann. Dabei greifen seitliche Haken 1196 an dem frontseitigen Ende des Mitnehmers unter Gegenhaken 1198, die an nach oben aus der Frontwand 1180 ausziehbaren Anschlagstücken 1199 ausgebildet sind. Die seitlichen Anschlagstücke werden von einer Drahtfeder, in Fig. 79 strichpunktiert angedeutet, in ihre eingezogene Lage vorgespannt. Es versteht sich, daß die Federkräfte dieser Drahtfeder 1200 und der Blattfeder 1190 entsprechend aufeinander abgestimmt sind. Die Disc 1202 kann dann oberhalb der Frontwandkante 1204 oben und auch unten erfaßt werden, weil ein entsprechender Griffausschnitt 1206 im Mitnehmer vorgesehen ist, und nach vorn herausgezogen werden. Beim Einschub des Schiebers kehren die Bauteile in ihre Ausgangslage zurück, wie leicht erkennbar ist.

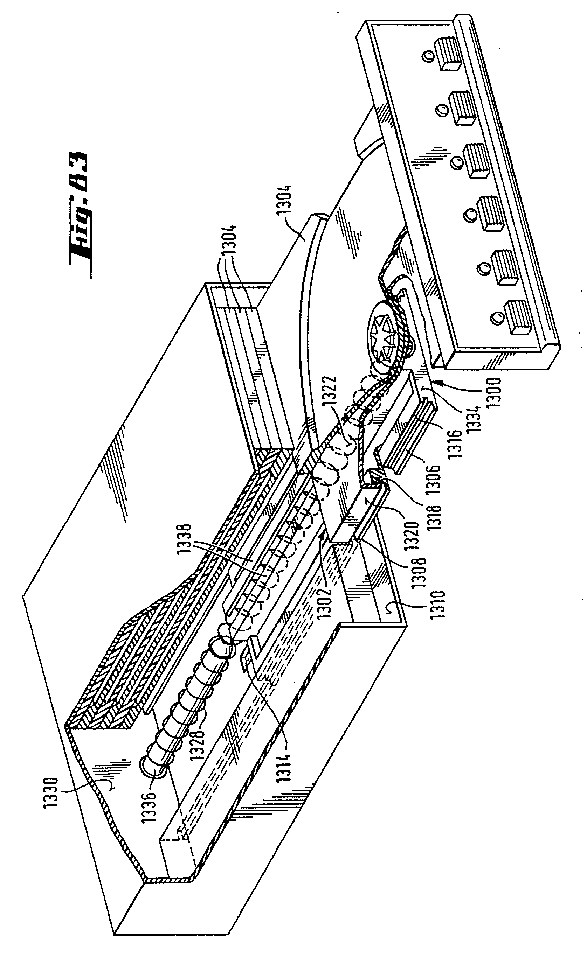

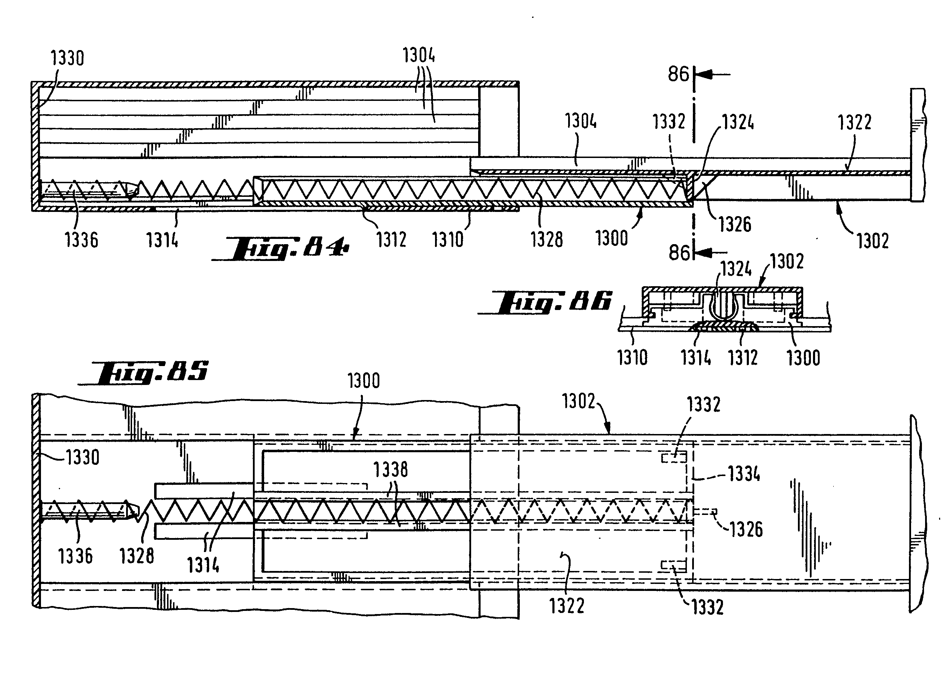

Fig. 80 zeigt in vereinfachter Perspektive eine weitere Ausführungsform, während Fig. 81 einen Vertikal-Teilschnitt durch die Frontwand und Fig. 82 einen Horizontalteilschnitt durch die Frontwand dieses Behälters darstellen. Vor allem soll hier eine Variante des Wählmechanismus beschrieben werden, während die Lagerungen und Führungen der Teile im Gehäuse aus früheren Ausführungsformen übernommen werden können.

Die Frontwand 1210 weist einen mittleren Ausschnitt auf, der sich um einen Ausschnitt 1212 in den Schieberboden hinein verlängert. An dessen innerer Endkante ist eine im Profil L-förmige Taste 1214 mittels Zapfen 1216 angelenkt, die mit etwas Spiel in den Ausschnitt paßt. Wenn die Taste in diese Position verschwenkt und der Schieber in das Gehäuse 1218 eingeschoben ist, rastet eine Verriegelungsnase 1220, die dann dem Gehäuseboden zugekehrt ist, in eine in diesem vorgesehene Ausnehmung 1222 ein und verriegelt den Schieber gegen die Vorspannung der (nicht dargestellten) Ausschiebefederanordnung. Zum Entriegeln wird die Taste manuell leicht angehoben. Der Schieber fährt aus, die Taste klappt herunter, und von einem jeweils gewählten Mitnehmer 1224 kann durch die so gebildete Frontöffnung die Disc heruntergehoben werden, da auch der Mitnehmer einen frontseitigen Ausschnitt 1226 aufweist.

Die Wählanordnung umfaßt einen in der Taste gelagerten in Rastpositionen drehbaren Wählknopf 1228, der ein Zahnsegment 1230 trägt. Dieses gelangt beim Anheben der Taste in Eingriff mit der Gegenverzahnung 1232 auf einem Ritzel 1234, das in dem benachbarten Abschnitt der Frontwand gelagert ist und ebenfalls Rastmittel 1236 aufweist. In jeder möglichen Rastposition greift ein Zeiger 1238 hinter einen zugeordneten Haken 1240 eines Mitnehmers, der auf diese Weise mit der Frontwand gekoppelt wird. Beim Abklappen der Taste kommen die Verzahnungen außer Eingriff, doch sind beide eingerastet, so daß beim Anheben der Taste wieder sicher eingerastet wird, wenn eine entsprechende Verzahnungsart gewählt wird.

Anhand der Fig. 83 bis 99 sollen abschließend einige Führungs- und Anschlagvarianten erläutert werden, die einerseits eine gute Stabilität trotz dünnwandiger Bauteile aus thermoplastischem Kunststoff gewährleisten, andererseits auch fertigungstechnisch gewisse Vorteile bieten, worauf jeweils im Einzelfalle hingewiesen wird.

Fig. 83 bis 86 beziehen sich auf ein erstes Führungssystem, das im Prinzip eine sogenannte Teleskopführung darstellt. Es ist ein Innenschieber 1300 vorgesehen, der halb aus dem Gehäuse ausgeschoben wird, und ein Außenschieber 1302 legt den doppelten Weg zurück. Der letztere nimmt die Mitnehmer 1304 mit, welche mittels eines der oben diskutierten Anwählsysteme mit dem Außenschieber gekoppelt werden. Deren Führung im Gehäuse ist ebenfalls aus früheren Ausführungsbeispielen entnehmbar.

Der Innenschieber stellt einen Schlitten dar, der mit seitlichen Kufen 1306 Führungsschienen 1308 am Gehäuseboden 1310 untergreift. Bodenseitig ragt er mit zwei Anschlagnasen 1312 in Schlitze 1314 des Gehäusebodens, deren Endkante seinen Ausschubweg bestimmt. Etwas nach innen versetzt, weist auch der Innenschieber Führungsschienen 1316 auf, die ihrerseits seitliche Kufen 1318 am Außenschieber übergreifen. Die letzteren sind von niedrigen Seitenwänden 1320 des Außenschiebers einwärts abgewinkelt, und diese Seitenwände schließlich sind mittels einer Abdeckbrücke 1322 mittig verbunden. Von dieser ragt eine Nase 1324, abgesteift durch Winkel 1326, nach unten, und an ihr liegt vom Gehäuseinnern her eine Schraubendruckfeder 1328 an, deren anderes Ende an der Gehäuserückwand 1330 abgestützt ist. Der Ausschubweg des Außenschiebers ist durch Anschlagnasen 1332 festgelegt, die an einer Endwand 1334 des Innenschiebers anschlagen.

Die Feder 1328 ist mehrfach gegen Ausknicken abgestützt: Einmal durch einen von der Gehäuserückwand nach innen ragenden Innendorn 1336, dann durch seitliche, hochstehende Stege 1338 des Innenschiebers, und schließlich durch die Abdeckbrücke 1322.

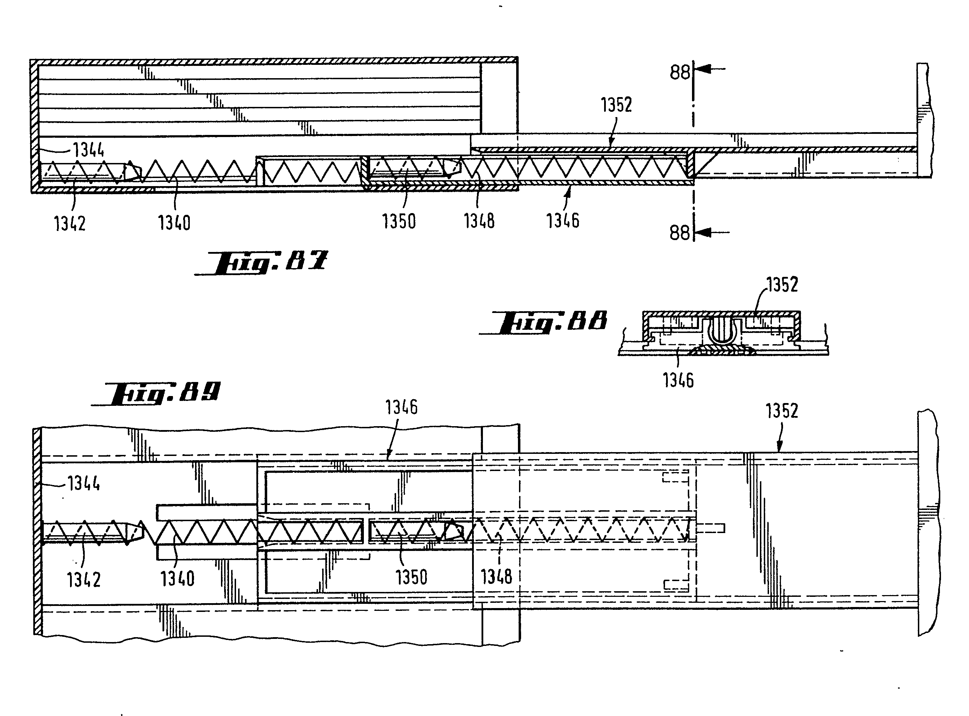

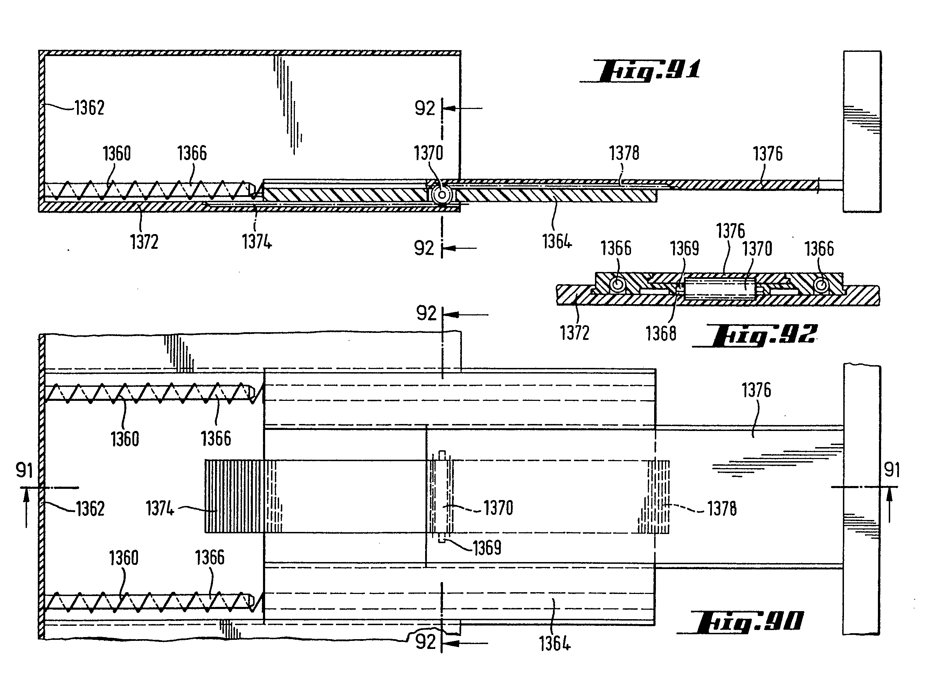

Fig. 87 bis 89 zeigen eine ähnliche Ausführung, wobei Fig. 87 – analog zu Fig. 84 – einen Vertikalschnitt, Fig. 88 ein Schnitt nach Linie 88–88 der Fig. 87 und Fig. 89 – analog zu Fig. 85 – eine Teildraufsicht darstellen. Anstelle einer einzigen Schraubenfeder ist hier ein System aus einer ersten Feder 1340 mit Dorn 1342, eingespannt zwischen Gehäuserückwand 1344 und Innenschieber 1346, und aus einer zweiten Feder 1348 mit Dorn 1350 am Innenschieber, eingespannt zwischen diesem und dem Außenschieber 1352, vorgesehen. Die übrigen Einzelheiten lassen sich ohne weiteres den Zeichnungsfiguren entnehmen, wobei weitgehend Übereinstimmung mit dem vorherigen Ausführungsbeispiel besteht.

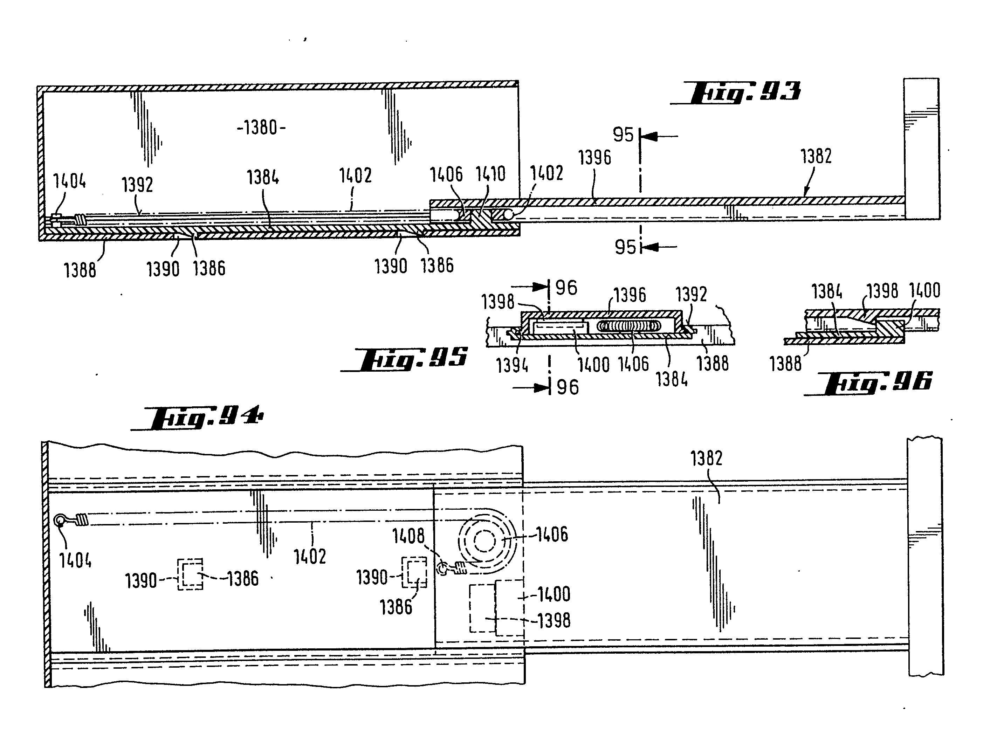

Fig. 90 zeigt in Teildraufsicht eine weitere Ausführungsform, während Fig. 91 der zugehörige Vertikalschnitt ist und Fig. 92 ein dazu senkrechter Teilschnitt durch die Ritzelachse.

Hier ist ein Paar Schraubendruckfedern 1360 vorgesehen, die zwischen Gehäuserückwand 1362 und Innenschieber 1364 eingespannt und von einem Dorn 1366 abgestützt sind. Der Innenschieber weist nahe seiner Mitte eine Lagerung 1368, nach unten offen, für die Lagerzapfen 1369 eines Ritzels 1370 auf, das einerseits mit einer im Gehäuseboden 1372 vorgesehenen Zahnstange 1374, andererseits mit einer gleichartigen an der Unterseite des Außenschiebers 1376 ausgebildeten Zahnstange 1378 kämmt. – Die Ausschubwege sind dadurch festgelegt, daß das Ritzel jeweils das Ende der beiden Zahnstangen erreicht. Die Längsführungen mit Kufen und übergreifenden Schienen ergibt sich ohne weiteres aus Fig. 92.

Die vorbeschriebenen Führungen ergeben biege- und torsionssteife Bauteile mit sicheren Endlagen.

Fig. 93 bis 96 zeigen, wie eine sehr einfach zu fertigende Ausführungsform gestaltet sein kann, bei der darüberhinaus die Gleiteigenschaften verbessert sein können.

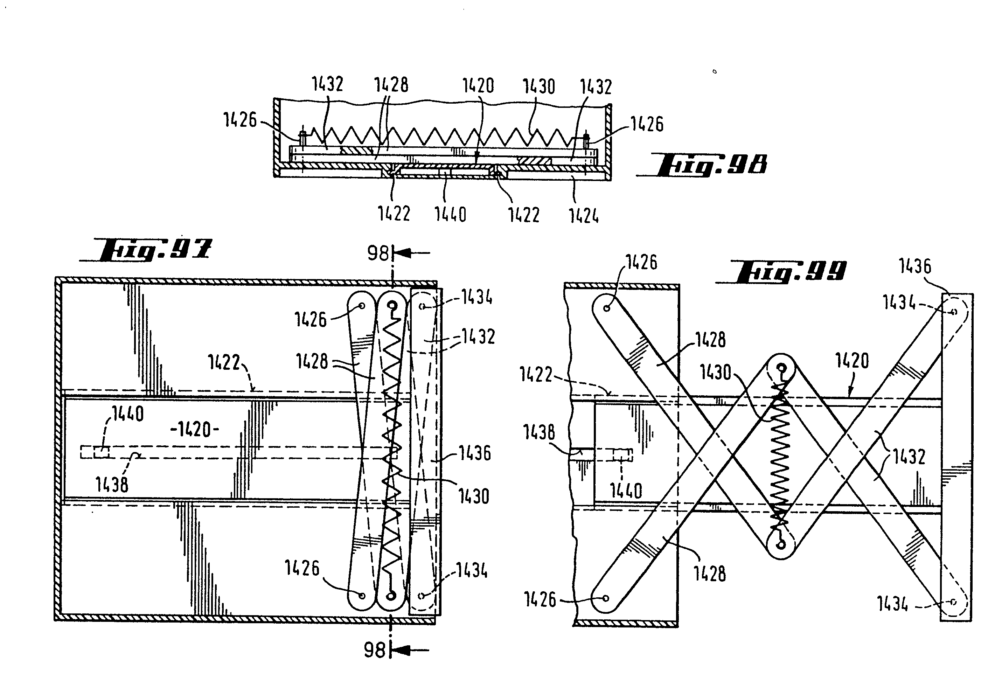

Fig. 93 ist ein Vertikalschnitt (die Mitnehmer sind weggelassen), Fig. 94 ist eine Teildraufsicht, Fig. 95 ist ein Schnitt nach Linie 95–95 der Fig. 93 und Fig. 96 ist ein Schnitt nach Linie 96–96 in Fig. 95.

Gehäuse 1380 und Schieber 1382 bestehen aus relativ preisgünstigem Kunststoff, der jedoch relativ ungünstige Gleiteigenschaften hat. Deshalb ist in die Gehäusebodenplatte ein Gleitstück 1384 eingelassen, das aus einem Kunststoff mit besseren Gleiteigenschaften besteht, wobei jedoch der Materialverbrauch sehr gering ist. Das Gleitstück ist von der Frontkante des Gehäuses her eingeschoben und verankert sich mittels Nasen 1386 im Gehäuseboden 1388, wo dieser entsprechende Ausnehmungen 1390 aufweist. Das Gleitstück weist Führungsschienen 1392 auf, die über komplementäre Führungskufen 1394 des Schieberbodens 1396 greifen. Der Ausschubweg des Schiebers ist durch eine Anschlagnase 1398 festgelegt, die an einem von dem Gleitstück hochstehenden Sockel 1400 anschlägt. Das Ausschubfedersystem umfaßt eine Schraubenzugfeder 1402, die einerseits an einem Zapfen 1404 am gehäuseinneren Ende des Gleitstücks eingehangen ist, andererseits um eine Rolle 1406 gelegt und an einem vom Schieber abwärts ragenden Zapfen 1408 festgelegt ist. Die Rolle 1406 sitzt auf einem Zapfenlager 1410, angeformt an das Gleitstück.

Durch diese Bauart ergibt sich ein reibungsarmer Lauf der Teile. Darüberhinaus ist diese Bauart besonders für eine automatisierte Montage geeignet: Nach Einhängen der Feder mit ihren beiden Enden wird der Schieber auf das Gleitstück geschoben und verriegelt sich an ihm, so daß eine vormontierte Baugruppe entsteht, die dann nach Bedarf in vorgefertigte Gehäuse einschiebbar ist, in denen dann z.B. auch schon die Mitnehmer vormontiert sind.

Fig. 97 bis 99 schließlich zeigen eine Ausführungsform, bei der ein Scherenspannsystem verwendet wird. Fig. 97 ist ein Horizontalschnitt, Fig. 98 ein Schnitt nach Linie 98–98 der Fig. 97, und Fig. 99 entspricht Fig. 97, zeigt jedoch die Ausfahrposition. Der Schieber 1420 ist mittels einer Kufen-Schienen-Anordnung 1422 im Gehäuseboden 1424 längsgeführt. An das Gehäuse sind bei 1426 Lenker 1428 angelenkt, deren freie Enden durch eine Zugfeder 1430 gegeneinander gezogen werden. An die freien Enden der Lenker 1428 sind außerdem Lenker 1432 angelenkt, die bei 1434 an die Schieberfrontwand 1436 angelenkt sind. Die in der Gehäusebodennut 1438 laufende abwärts gerichtete Nase 1440 des Schiebers begrenzt den Ausschubweg. – Das aus den Lenkern bestehende Scherengestänge kann sehr flach ausgebildet sein und findet unter dem untersten Mitnehmer (nicht dargestellt) Platz.

**Patentansprüche**

1. Behälter zum Aufbewahren plattenförmiger Aufzeichnungsträger mit einem an der Frontseite offenen Gehäuse (200, 250, 450, 482, 524, 702, 772, 816, 1018, 1048, 1124, 1156, 1218, 1388), in dem eine Mehrzahl von Aufzeichnungsträgern (330, 786, 1054, 1120, 1202) unterbringbar ist, und mit einem Transportorgan (202, 252, 454, 480, 522, 560, 600, 612, 634, 708, 772, 804, 906, 1114, 1122, 1176, 1212, 1302, 1346, 1382) zum Fördern eines mittels einer Wähleinrichtung ausgewählten Aufzeichnungsträgers in eine Entnahmeposition, dadurch gekennzeichnet, daß für jeden Aufzeichnungsträger ein Mitnehmer (216, 270, 456, 484, 520, 570, 614, 630, 700, 784, 806, 900, 1008, 1036, 1116, 1120, 1154, 1170, 1224, 1304) vorgesehen ist, daß das Transportorgan durch die offene Gehäusefront zwischen einer inneren und einer äußeren Position beweglich ist, und entsprechend der Einstellung der Wähleinrichtung mit zunächst dem jeweiligen Mitnehmer, der dem ausgewählten Aufzeichnungsträger zugeordnet ist, derart koppelbar ist, daß dieser in eine Position verlagert wird, welche eine bequeme Entnahme des Aufzeichnungsträgers ermöglicht.

2. Behälter nach Anspruch 1, dadurch gekennzeichnet, daß das Gehäuse (200) Quadergrundform hat und die Aufzeichnungsträger mit ihren Hauptflächen parallel zu einer Gehäuseseite im Gehäuse liegen.

3. Behälter nach Anspruch 2, dadurch gekennzeichnet, daß die Mitnehmer (216) einen vorgegebenen Abstand der ihnen zugeordneten Aufzeichnungsträger voneinander definieren.

4. Behälter nach Anspruch 2, dadurch gekennzeichnet, daß die Mitnehmer (806) zur Abstützung der Aufzeichnungsträger in aufzeichnungsfreien Bereichen ausgebildet sind.

5. Behälter nach Anspruch 4, dadurch gekennzeichnet, daß die Mitnehmer (806) ein wannenförmiges Abstützprofil besitzen.

6. Behälter nach Anspruch 4, dadurch gekennzeichnet, daß die Mitnehmer (270) derart ausgebildet sind, daß die Aufzeichnungsträger durch Distanzstücke (336) von einer Basisfläche im Abstand gehalten sind und mit einer Öffnung auf einer Nabe sitzen.

7. Behälter nach Anspruch 3, dadurch gekennzeichnet, daß die Mitnehmer plattenartige Halter (270) umfassen.

8. Behälter nach Anspruch 7, dadurch gekennzeichnet, daß die Halter (270) parallel zu einer Hauptfläche der Aufzeichnungsträger bewegbar sind.

9. Behälter nach Anspruch 8, dadurch gekennzeichnet, daß die Halter (270) verschiebbar sind.

10. Behälter nach Anspruch 8, dadurch gekennzeichnet, daß die Halter (456) um eine zur Aufzeichnungsträger-Hauptfläche senkrechte Achse (452) verdrehbar sind.

11. Behälter nach Anspruch 8, dadurch gekennzeichnet, daß die Halter (700) im Gehäuse (702) geführt sind.

12. Behälter nach Anspruch 8, dadurch gekennzeichnet, daß die Halter (270) im Transportorgan (252) geführt sind.

13. Behälter nach Anspruch 8, dadurch gekennzeichnet, daß die Halter (270) aus dem Gehäuse (250) herausbewegbar sind.

14. Behälter nach Anspruch 13, dadurch gekennzeichnet, daß die Halter (806) soweit herausbewegbar sind, daß die Aufzeichnungsträger erfaßbar und herausziehbar sind.

15. Behälter nach Anspruch 13, dadurch gekennzeichnet, daß die Halter (270) soweit herausbewegbar sind, daß die Aufzeichnungsträger quer zur Halterbewegungsrichtung von diesen abhebbar sind.

16. Behälter nach Anspruch 14 oder 15, dadurch gekennzeichnet, daß die Halter (202) Ausschnitte (218) aufweisen zum Freilegen mindestens einer Stelle des Aufzeichnungsträgers, an der dieser erfaßbar ist.

17. Behälter nach Anspruch 15, dadurch gekennzeichnet, daß die Halter (202) zwei einander gegenüberliegende Ausschnitte (218) aufweisen.

18. Behälter nach Anspruch 8, dadurch gekennzeichnet, daß der jeweils gewählte Mitnehmer (630) Teil des Transportorgans (634) ist.

19. Behälter nach Anspruch 1, dadurch gekennzeichnet, daß das Transportorgan (600) ein im Gehäuse gleitbeweglich gelagerter Schieber ist.

20. Behälter nach Anspruch 1, dadurch gekennzeichnet, daß das Transportorgan (454) an das Gehäuse angelenkt ist.

21. Behälter nach Anspruch 19 oder 20, dadurch gekennzeichnet, daß das Transportorgan gegen die Vorspannung einer Federanordnung (458) im Gehäuse verriegelbar ist und daß die Verriegelung (468) manuell lösbar ist.

22. Behälter nach Anspruch 19 oder 20, dadurch gekennzeichnet, daß das Transportorgan (612) von einer Federanordnung bis zu einer durch Anschläge (618) definierten Entnahmeposition bewegbar ist.

23. Behälter nach Anspruch 19 oder 20, dadurch gekennzeichnet, daß das Transportorgan (480) eine die offene Gehäusefrontseite abdeckende Frontwand (494) aufweist.

24. Behälter nach Anspruch 19, dadurch gekennzeichnet, daß der Schieber (252) über eine Teleskopführung (254) im Gehäuse gelagert ist.

25. Behälter nach Anspruch 13, 19 und 23, dadurch gekennzeichnet, daß die Frontwand (580) mit Führungsteilen des Transportorgans (584) beweglich verbunden ist.

26. Behälter nach Anspruch 25, dadurch gekennzeichnet, daß die Frontwand (580) an die Führungsteile angelenkt ist.

27. Behälter nach Anspruch 26, dadurch gekennzeichnet, daß die Anlenkung über Parallelogrammlenker (554) erfolgt.

28. Behälter nach Anspruch 25, dadurch gekennzeichnet, daß die Frontwand (542) quer zu der Bewegungsrichtung des Transportorgans (540) relativ zu den Führungsteilen verschieblich und mittels einer Keilanordnung (544) steuerbar ist.

29. Behälter nach Anspruch 19, dadurch gekennzeichnet, daß der Schieber (560) eine Frontwand aufweist und um eine Achse nahe seinem gehäuseinneren Ende derart schwenkbar ist, daß seine Frontwand dabei aus den Fluchtlinien der offenen Gehäusefrontseite herausschwenkt.

30. Behälter nach Anspruch 19, dadurch gekennzeichnet, daß im Schieber (612) ein Kipphebel (616) angeordnet ist, mittels dem ein herausbeförderter Aufzeichnungsträger (614) über eine Schieberfrontwand (610) hebbar ist.

31. Behälter nach Anspruch 19, dadurch gekennzeichnet, daß der Schieber (800) im Gehäuse geführte Seitenplatten (804) umfaßt.

32. Behälter nach Anspruch 31, dadurch gekennzeichnet, daß die Seitenplatten durch eine Bodenplatte (806) miteinander verbunden sind.

33. Behälter nach Anspruch 19, 21 und 31, dadurch gekennzeichnet, daß die Federanordnung zwei Schraubenfedern (258) umfaßt, von denen je eine jeder Seitenplatte zugeordnet ist.

34. Behälter nach Anspruch 33, dadurch gekennzeichnet, daß das gehäuseinnere Ende des Schiebers (252) eine Durchtrittsöffnung für die Mitnehmer (270) aufweist.

35. Behälter nach Anspruch 24 und 34, dadurch gekennzeichnet, daß die Teleskopführung seitlich neben den Seitenplatten (260) im Gehäuse (250) geführte Schienen (254) umfaßt und daß je eine Zugfeder (256, 258) zwischen dem Gehäuse und jeder Schiene sowie zwischen jeder Schiene und der ihr benachbarten Seitenplatte vorgesehen ist.

36. Behälter nach Anspruch 33, dadurch gekennzeichnet, daß die Federn zwischen Gehäuse und Seitenplatten wirkende Druckfedern (1360) sind.

37. Behälter nach Anspruch 34, dadurch gekennzeichnet, daß die Federn (256, 258) außerhalb des von der Durchtrittsöffnung umrahmten Raums angeordnet sind.

38. Behälter nach Anspruch 21, dadurch gekennzeichnet, daß eine Verriegelungsanordnung vorgesehen ist, die mindestens ein separates Kupplungsteil (716) umfaßt, das in einem der zu verriegelnden Teile (Gehäuse oder Transportorgan (708)), bewegbar ist, jedoch in der Bewegungsrichtung des Transportorgans abgestützt gelagert ist, und daß im andern Teil (702) Steuerflächen (714) zum Führen des Kupplungsteils mittels der Transportorganbewegung zwischen einer Verriegelungsposition, in welcher das Kupplungsteil unmittelbar oder über Zwischenelemente in Formschluß mit diesem andern Teil steht, und einer Entriegelungsposition, in der das Transportorgan freigegeben ist, vorgesehen ist.

39. Behälter nach Anspruch 38, dadurch gekennzeichnet, daß die Verriegelungsanordnung (Fig. 45, 46) an einer Stelle angeordnet ist, an der Hebelarm, an welchem die Federanordnung angreift, bezüglich der letzteren kurz ist im Verhältnis zu den Gehäuse- und Transportorganabmessungen.

40. Behälter nach Anspruch 38, dadurch gekennzeichnet, daß das Kupplungsteil und die Steuerflächen in zueinander und zu der Transportorganbewegungsrichtung parallelen Wandungen der beiden Teile vorgesehen sind (Fig. 45, 46).

41. Behälter nach Anspruch 38, dadurch gekennzeichnet, daß das Kupplungsteil von den Steuerflächen längs unterschiedlicher Bewegungsbahnen für den Verriegelungs- und Entriegelungsvorgang geführt sind (Fig. 45, 46).

42. Behälter nach Anspruch 38, dadurch gekennzeichnet, daß an dem Kupplungsteil ein sich formschlüssig an dem jeweils andern Teil verriegelnder Verriegelungsfortsatz (396) vorgesehen ist.

43. Behälter nach Anspruch 42, dadurch gekennzeichnet, daß der Verriegelungsfortsatz (396) mittels der Steuerflächen (408) längs einer Bahn geführt ist, die mindestens eine Richtungskomponente quer zur Transportorganbewegungsrichtung hat.

44. Behälter nach Anspruch 43, dadurch gekennzeichnet, daß die Bahn zwei solche, untereinander im wesentlichen zueinander senkrechte Richtungskomponenten aufweist.

45. Behälter nach Anspruch 44, dadurch gekennzeichnet, daß der Verriegelungsfortsatz (396) in einer der Richtungskomponenten elastisch auslenkbar ist.

46. Behälter nach Anspruch 44, dadurch gekennzeichnet, daß der Verriegelungsfortsatz (396) längs zwei Kreisbögen mit zueinander senkrechten Achsen geführt ist und daß das Kupplungsteil (382) im wesentlichen kreisscheibenförmig und in eine komplementäre Durchbrechung (380) einer Wandung der beiden Teile eingesetzt ist.

47. Behälter nach Anspruch 46, dadurch gekennzeichnet, daß das Kupplungsteil (382) zum Verriegeln in einem ersten Drehsinn um einen begrenzten Winkel drehbar geführt ist und zum Entriegeln in dem andern Drehsinn um einen begrenzten Winkel drehbar geführt ist.

48. Behälter nach Anspruch 21, dadurch gekennzeichnet, daß ein manuell betätigbares Entriegelungsorgan (176) im Frontwandbereich des Transportorgans vorgesehen ist.

49. Behälter nach Anspruch 17 und 21, dadurch gekennzeichnet, daß mindestens ein Teil der Frontwand (262) mit dem jeweils gewählten Mitnehmer (270) verbunden ist.

50. Behälter nach Anspruch 8, dadurch gekennzeichnet, daß das Transportorgan (252) zugleich als einer der Mitnehmer (266) ausgebildet ist.

51. Behälter nach Anspruch 12 und 31, dadurch gekennzeichnet, daß Halterführungen (862) in den Seitenplatten (804) vorgesehen sind.

52. Behälter nach Anspruch 17 und 51, dadurch gekennzeichnet, daß die Halterführungen (214) im Bereich der Halter (216) ebenfalls ausgeschnitten sind.

53. Behälter nach Anspruch 7, dadurch gekennzeichnet, daß jeder Halter zwei taschenartig verbundene Halterelemente (1132) umfaßt.

54. Behälter nach Anspruch 13, 19 und 53, dadurch gekennzeichnet, daß der Schieber (1122), das Gehäuse (1124) und die Mitnehmer (1120) derart aufeinander abgestimmte Steuerorgane (1130) aufweisen, daß der angewählte Mitnehmer automatisch geöffnet wird, wenn er von dem Schieber aus dem Gehäuse herausgefördert wird.

55. Behälter nach Anspruch 1, dadurch gekennzeichnet, daß mindestens ein Betätigungsorgan (486) der Wähleinrichtung von der Behälterfrontseite aus zugänglich ist.

56. Behälter nach Anspruch 55, dadurch gekennzeichnet, daß das Betätigungsorgan einen Drehknopf (206) umfaßt.

57. Behälter nach Anspruch 55, dadurch gekennzeichnet, daß das Betätigungsorgan einen Schiebeknopf (164) umfaßt.

58. Behälter nach Anspruch 56 oder 57, dadurch gekennzeichnet, daß für den Knopf (206, 164) je eine Rastposition für je einen Mitnehmer (216) vorgesehen ist.

59. Behälter nach Anspruch 55, dadurch gekennzeichnet, daß für jeden Mitnehmer ein eigenes Betätigungsorgan (486) vorgesehen ist.

60. Behälter nach Anspruch 59, dadurch gekennzeichnet, daß jedes Betätigungsorgan eine Drucktaste (298) umfaßt.

61. Behälter nach Anspruch 13, dadurch gekennzeichnet, daß entsprechend der Einstellung der Wähleinrichtung (206) der angewählte Mitnehmer (216) zusammen mit allen im Gehäuse (200) unter ihm liegenden Mitnehmern aus dem Gehäuse herausbewegbar ist.

62. Behälter nach Anspruch 61, dadurch gekennzeichnet, daß die Wähleinrichtung ein Kupplungsorgan (222) umfaßt, das je nach der gewählten Einstellung das Transportorgan (202) mit dem angewählten und den im Gehäuse darunterliegenden Mitnehmern (216) mechanisch kuppelt.

63. Behälter nach Anspruch 13, dadurch gekennzeichnet, daß entsprechend der Einstellung der Wähleinrichtung (298) der angewählte Mitnehmer (270) mit dem Transportorgan (252) mechanisch gekuppelt von diesem aus dem Gehäuse (250) herausbewegbar ist.

64. Behälter nach Anspruch 21, dadurch gekennzeichnet, daß bei Betätigen der Wähleinrichtung (298) zugleich das Transportorgan (252) entriegelbar ist.

65. Behälter nach Anspruch 22, dadurch gekennzeichnet, daß das Transportorgan (252) formschlüssig mit mindestens dem angewählten Mitnehmer (270) kuppelbar ist und alle Mitnehmer reibungsschlüssig im Gehäuse (250) gehalten sind, und daß die von der Federanordnung (256, 258) ausgeübte Ausschubkraft für das Lösen des Reibungsschlusses ausreichend bemessen ist.

66. Behälter nach Anspruch 59 und 65, dadurch gekennzeichnet, daß durch Betätigen eines Betätigungsorgans (298) eine Wählkulisse (296), die im Transportorgan (252) verlagerbar angeordnet ist, mit dem gewählten Mitnehmer (270) kuppelbar ist.

67. Behälter nach Anspruch 66, dadurch gekennzeichnet, daß die Wählkulisse (296) in eine Entkupplungsposition federvorgespannt ist.

68. Behälter nach Anspruch 66, dadurch gekennzeichnet, daß je zwei Mitnehmern (270) eine gemeinsame Wählkulisse (296) zugeordnet ist.

69. Behälter nach Anspruch 23 und 66, dadurch gekennzeichnet, daß die Wählkulisse (296) in der Frontwand (262) parallel zu dieser verlagerbar ist.

70. Behälter nach Anspruch 60 und 69, dadurch gekennzeichnet, daß jede Taste (298) ein die Wählkulisse bei Druck auf die Taste verlagerndes Keilelement (302) aufweist.

71. Behälter nach Anspruch 67, dadurch gekennzeichnet, daß die Wählkulisse (296) aus Kunststoff besteht, daß die Vorspannfeder (306) an sie angeformt ist und daß sie nur während des eigentlichen Kupplungsvorgangs entgegen der Federvorspannung verlagert ist.

72. Behälter nach Anspruch 18 und 23, dadurch gekennzeichnet, daß der jeweils angewählte Mitnehmer (630) als Transportschieber mit einer, die Wähleinrichtung (638) aufweisenden und allen Mitnehmern gemeinsam zugeordneten Frontwand (634) gekuppelt ist.

73. Behälter nach Anspruch 1, dadurch gekennzeichnet, daß eine entfernbare Abdeckung (550) für die offene Gehäusefrontseite vorgesehen ist.

74. Behälter nach Anspruch 55 und 73, dadurch gekennzeichnet, daß das Betätigungsorgan (298) nur einen Teilbereich der Abdeckfläche einnimmt.

75. Behälter nach Anspruch 60 und 74, dadurch gekennzeichnet, daß die Abdeckung eine starre Frontwand (262) umfaßt, relativ zu der die mindestens eine Taste (298) eindrückbar ist.

76. Behälter nach Anspruch 74, dadurch gekennzeichnet, daß im verbleibenden Teilbereich der Abdeckfläche ein Beschriftungsfeld vorgesehen ist.

77. Behälter nach Anspruch 73, dadurch gekennzeichnet, daß eine Anzeigeanordnung (780) zur Unterscheidung der belegten Mitnehmer von den nicht belegten Mitnehmern vorgesehen ist.

78. Behälter nach Anspruch 74 und 77, dadurch gekennzeichnet, daß die Anzeigeanordnung (780) optisch wirkend ist und im Bereich des mindestens einen Betätigungsorgans untergebracht ist.

79. Behälter nach Anspruch 8, dadurch gekennzeichnet, daß jeder Halter nahe seinem gehäuseinneren Ende Zinken (754) trägt, die in nutenförmige Eintiefungen (756) des ihm zugewandten benachbarten Halters bzw. der ihm nächstliegenden Gehäusewand greifen.

80. Behälter nach Anspruch 79, dadurch gekennzeichnet, daß die Zinken (754) entgegen der Ausschubrichtung der Halter schwenkbar sind und dabei einen Einführtrichter (764) öffnen, wenn der Halter ganz aus dem Gehäuse herausbefördert ist.

81. Behälter nach Anspruch 9, 19 und 23, dadurch gekennzeichnet, daß der Schieber eine nur einen Teilbereich der offenen Gehäusefront abdeckende Frontwand (722) aufweist und daß eine den übrigen Teilbereich verschließende Klappe (728) mittels des Schieberausschubs aufklappbar und bei Schiebereinschub wieder selbsttätig rückklappbar ist.

82. Behälter nach Anspruch 3, dadurch gekennzeichnet, daß der Abstand für einen Aufzeichnungsträger zuzüglich zugehöriger Drucksachen bemessen ist.

83. Behälter nach Anspruch 1, gekennzeichnet durch eine Mehrzahl von Transportorganen (252) in einem gemeinsamen Gehäuse (250).

84. Behälter nach Anspruch 21 und 48, dadurch gekennzeichnet, daß ein Betätigungsorgan (206) der Wähleinrichtung zugleich das manuell betätigbare Auslöseorgan für die Verriegelung bildet.

85. Behälter nach Anspruch 21 und 48, dadurch gekennzeichnet, daß im Bereich der Schieberfrontwand zusätzlich zu dem Auslöseorgan (1072) der Verriegelung noch Betätigungsorgane (1070) der Wähleinrichtung funktionell getrennt untergebracht sind.

86. Behälter nach Anspruch 85, dadurch gekennzeichnet, daß das Betätigungsorgan (1228) und das Auslöseorgan (1230) gleichsinnig, jedoch nacheinander betätigbar ausgebildet sind.

87. Behälter nach Anspruch 21 und 48, dadurch gekennzeichnet, daß ein Betätigungsorgan (206) vorgesehen ist, das in zwei unterschiedlichen Bewegungsrichtungen für den Wählvorgang und den Auslösevorgang verlagerbar ist.

88. Behälter nach Anspruch 8, 19 und 21, dadurch gekennzeichnet, daß der Schieber eine abklappbare Frontwand (820) aufweist, in der Betätigungsorgane (812) der Wähleinrichtung angeordnet sind.

89. Behälter nach Anspruch 88, dadurch gekennzeichnet, daß die plattenförmigen Mitnehmer (806) mittels der Betätigungsorgane aus einer Rastposition in eine Mitnahmeposition verlagerbar sind.

90. Behälter nach Anspruch 88, dadurch gekennzeichnet, daß jedem Mitnehmer eine eigene Federanordnung (814) zugeordnet ist, deren Vorspannung über den Mitnehmer auf den Schieber übertragbar ist.

91. Behälter nach Anspruch 88, dadurch gekennzeichnet, daß die Wähleinrichtung Kopplungsorgane (1004) zum Koppeln des Schiebers mit den Mitnehmern (1008) umfaßt, und daß die Kopplungsorgane durch das Abklappen der Frontwand entkoppelbar sind.

92. Behälter nach Anspruch 77 und 88, dadurch gekennzeichnet, daß die Anzeigeanordnung (1032, 1034) in der Frontwand untergebracht ist und mit dieser zusammen abklappbar ist.

93. Behälter nach Anspruch 92, dadurch gekennzeichnet, daß die Anzeigeanordnung federvorgespannte Tastorgane (1034) umfaßt, die den frontseitigen Rand des Aufzeichnungsträgers abtasten, und daß der Bewegungshub des Schiebers größer ist als der Mitnahmehub der Mitnehmerplatten (1036).

94. Behälter nach Anspruch 57, dadurch gekennzeichnet, daß für jeden wählbaren Mitnehmer ein eigener Schiebeknopf (812) vorgesehen ist und daß alle Schiebeknöpfe in eine Leiste (820) eingebettet sind.

95. Behälter nach Anspruch 88, dadurch gekennzeichnet, daß die Frontwand über Gelenke (1084) mit dem Schieber verbunden ist, die in der nichtabgeklappten Frontwandposition eine Verriegelung (1100) aufweist, welche durch die Bewegung des Schiebers relativ zum Gehäuse entriegelbar ist.

96. Behälter nach Anspruch 8, 19 und 21, dadurch gekennzeichnet, daß Betätigungsorgane (1110) der Wähleinrichtung an einer Gehäusefrontwand unter einer abklappbar ausgebildeten Schieberfrontwand (1118) angeordnet sind.

97. Behälter nach Anspruch 88, gekennzeichnet durch eine Leitplatte (1142), die bei abgeklappter Frontwand mit dem jeweils heraustransportierten Mitnehmer einen trichterartigen Einlegeschlitz definiert.

98. Behälter nach Anspruch 8, 19 und 21, dadurch gekennzeichnet, daß der Schieber eine Frontwand aufweist, aus der federvorgespannte Anschläge (1199) ausfahrbar sind, an die sich ein mitgenommener Halter (1170) anlegt, so daß ein auf ihm liegender Aufzeichnungsträger zwischen den ausgefahrenen Anschlägen im Bereich eines Halterausschnitts erfaßbar ist.

99. Behälter nach Anspruch 56, dadurch gekennzeichnet, daß der Drehknopf (1228) in einem abklappbaren Teil (1214) einer Frontwand (1210) des Transportorgans angeordnet ist und daß im anderen Teil der Frontwand Übertragungselemente (1234) der Wähleinrichtung untergebracht sind, die beim Abklappen des Drehknopfes von diesem entkuppelbar sind.

100. Behälter nach Anspruch 21 und 99, dadurch gekennzeichnet, daß der abklappbare Teil (1214) der Frontwand zugleich als manuelles Entriegelungsorgan ausgebildet ist.

101. Behälter nach Anspruch 21 und 24, dadurch gekennzeichnet, daß das Transportorgan einen Innenschieber (1300) und einen Außenschieber (1302) umfaßt, daß der Innenschieber im Gehäuse (1330) geführt und der Außenschieber am Innenschieber geführt ist, und daß eine Druckfederanordnung (1328) für das Vorspannen der Schieber in eine ausgefahrene Position vorgesehen ist.

102. Behälter nach Anspruch 101, dadurch gekennzeichnet, daß die Druckfeder (1328) zwischen Gehäuserückwand (1330) und Außenschieber (1302) eingespannt ist.

103. Behälter nach Anspruch 101, dadurch gekennzeichnet, daß die Druckfederanordnung eine erste (1340), zwischen Gehäuse und Innenschieber und eine zweite (1348), zwischen Innenschieber und Außenschieber wirkende Feder umfaßt.

104. Behälter nach Anspruch 101, dadurch gekennzeichnet, daß die Druckfederanordnung eine zwischen Gehäuse und Innenschieber wirkende Feder (1360) umfaßt und daß der Innenschieber ein Ritzel (1370) trägt, das mit einer im Gehäuse ausgebildeten ersten (1374) und einer im Außenschieber ausgebildeten zweiten (1378) Zahnstange kämmt.

105. Behälter nach Anspruch 8, 19 und 21, dadurch gekennzeichnet, daß Schieber (1382) und Federanordnung (1406) eine vormontierbare Baugruppe bilden, die in ein vormontiertes Gehäuse (1380) einrastbar ist.

106. Behälter nach Anspruch 105, dadurch gekennzeichnet, daß die vormontierte Schieber-Feder-Baugruppe ein in das Gehäuse einrastbares Gleitstück (1384) umfaßt, in der Geradführungsmittel (1392) für den Schieber ausgebildet sind.

107. Behälter nach Anspruch 106, dadurch gekennzeichnet, daß die Federanordnung eine Zugfeder (1402) umfaßt, die einerseits am Schieber, andererseits an dem Gleitstück mit ihren Enden festgelegt ist.

108. Behälter nach Anspruch 8, 19 und 21, dadurch gekennzeichnet, daß zwischen Gehäuse und Schieber ein federvorgespanntes Scherengestänge (1432) vorgesehen ist.

109. Behälter nach Anspruch 7 für runde Aufzeichnungsträger, insbesondere Compactdiscs, dadurch gekennzeichnet, daß auf jedem plattenartigen Halter (1008) elastisch auslenkbare Bremsorgane (1026) vorgesehen sind, die eine auf dem Halter abgelegte Disc (1024) am Außenrand in der dem Gehäuseinneren abgewandten äußeren Hälfte des Halters erfassen.

## Claims

1. A container for storing plate-like recording media, having a housing (200, 250, 450, 482, 524, 702, 772, 816, 1018, 1048, 1124, 1156, 1218, 1388) which is open at the front and in which a plurality of recording media (330, 786, 1054, 1120, 1202) can be accommodated, and having a transporter (202, 252, 454, 480, 522, 560, 600, 612, 634, 708, 772, 804, 906, 1114, 1122, 1176, 1212, 1302, 1346, 1382) to convey a recording medium, selected by means of a selector arrangement, into a removal position, characterised in that a carrier member (216, 270, 456, 484, 520, 570, 614, 630, 700, 784, 806, 900, 1008, 1036, 1116, 1120, 1154, 1170, 1224, 1304) is provided for each recording medium, that the transporter is movable through the open front of the housing between an inner and an outer position, and according to the setting of the selector arrangement can be coupled then to the respective carrier member associated with the selected recording medium in such a way that the latter is displaced into a position which allows convenient removal of the recording medium.

2. A container according to Claim 1, characterised in that the housing (200) has a basically parallelepipedal shape and the recording media lie in the housing with their major surfaces parallel to a side of the housing.

3. A container according to Claim 2, characterised in that the carrier members (216) define a predetermined spacing between the recording media associated with them.

4. A container according to Claim 2, characterised in that the carrier members (806) are constructed to support the recording media in areas where they are free of any recording.

5. A container according to Claim 4, characterised in that the carrier members (806) have a trough-shaped support profile.

6. A container according to Claim 4, characterised in that the carrier members (270) are so constructed that the recording media are held at a distance from a base surface by means of spacers (336) and fit with an aperture on a hub.

7. A container according to Claim 3, characterised in that the carrier members comprise platter-like holders (270).

8. A container according to Claim 7, characterised in that the holders (270) are movable parallel to a major surface of the recording media.

9. A container according to Claim 8, characterised in that the holders (270) are displaceable.

10. A container according to Claim 8, characterised in that the holders (456) are rotatable about an axis (452) normal to the major surface of the recording medium.

11. A container according to Claim 8, characterised in that the holders (700) are guided in the housing (702).

12. A container according to Claim 8, characterised in that the holders (270) are guided in the transporter (252).

13. A container according to Claim 8, characterised in that the holders (270) can be moved out of the housing (250).

14. A container according to Claim 13, characterised in that the holders (806) can be moved out so far that the recording media can be grasped and pulled out.

15. A container according to Claim 13, characterised in that the holders (270) can be moved out so far that the recording media can be lifted off the holders at right-angles to the direction of movement of the latter.

16. A container according to Claim 14 or 15, characterised in that the holders (202) have cutaway portions (218) to expose at least one point on the recording medium at which the latter can be grasped.

17. A container according to Claim 15, characterised in that the holders (202) have two cut-away portions (218) situated opposite each other.

18. A container according to Claim 8, characterised in that the carrier member (630) selected in each case is part of the transporter (634).

19. A container according to Claim 1, characterised in that the transporter (600) is a slider member slidably mounted in the housing.

20. A container according to Claim 1, characterised in that the transporter (454) is hinged to the housing.

21. A container according to Claim 19 or 20, characterised in that the transporter can be locked in the housing against the bias of a spring arrangement (458) and that the locking means (468) can be released manually.

22. A container according to Claim 19 or 20, characterised in that the transporter (612) can be moved by a spring arrangement to a removal position defined by means of stops (618).

23. A container according to Claim 19 or 20, characterised in that the transporter (480) has a front wall (494) covering the open front side of the housing.

24. A container according to Claim 19, characterised in that the slider member (252) is mounted in the housing by way of a telescopic guiding arrangement (254).

25. A container according to Claims 13, 19 and 23, characterised in that the front wall (580) is movably connected to guide members of the transporter (584).

26. A container according to Claim 25, characterised in that the front wall (580) is hinged to the guide members.

27. A container according to Claim 26, characterised in that the articulation is effected by way of parallelogram links (554).

28. A container according to Claim 25, characterised in that the front wall (542) is displaceable at right-angles to the direction of movement of the transporter (540) relative to the guide members and can be controlled by means of a wedge-like arrangement (544).

29. A container according to Claim 19, characterised in that the slider member (560) has a front wall and is pivotable about an axis near its end inside the housing in such a way that its front wall thereby pivots out of lineal alignment with the open front side of the housing.

30. A container according to Claim 19, characterised in that in the slider member (612) there is arranged a tilt lever (616) by means of which a recording medium (614) that has been transported out can be lifted over a front wall (610) of the slider member.

31. A container according to Claim 19, characterised in that the slider member (800) comprises side plates (804) guided in the housing.

32. A container according to Claim 31, characterised in that the side plates are connected to each other by means of a base plate (806).

33. A container according to Claims 19, 21 and 31, characterised in that the spring arrangement comprises two helical springs (258), each of which is associated with one of the side plates.

34. A container according to Claim 33, characterised in that the end of the slider member (252) inside the housing has a passage opening for the carrier members (270).

35. A container according to Claims 24 and 34, characterised in that the telescopic guiding arrangement comprises rails (254) guided laterally in the housing (250) near the side plates and that a traction spring (256, 258) is provided between the housing and each rail, and between each rail and the side plate adjacent to it.

36. A container according to Claim 33, characterised in that the springs are compression springs (1360) acting between housing and side plates.

37. A container according to Claim 34, characterised in that the springs (256, 258) are arranged outside the space framed by the passage opening.

38. A container according to Claim 21, characterised in that a locking arrangement is provided which comprises at least one separate coupling member (716) which is movable in one of the parts to be locked (housing or transporter (708)), but is supported in the direction of movement of the transporter, and that in the other part (702) control surfaces (714) are provided to guide the coupling member by means of the transporter movement between a locking position, in which the coupling member is positively connected with the other part either directly or by way of intermediate elements, and an unlocking position in which the transporter is liberated.

39. A container according to Claim 38, characterised in that the locking arrangement (Fig. 45, 46) is arranged at a point at which the lever arm with which the spring arrangement engages is short with respect to the latter in relation to the housing and transporter dimensions.

40. A container according to Claim 38, characterised in that the coupling member and the control surfaces are provided in walls of the two parts which are parallel to each other and to the direction of movement of the transporter (Fig. 45, 46).

41. A container according to Claim 38, characterised in that the coupling member is guided by the control surfaces along different paths of movement for the locking operation and unlocking operation (Fig. 45, 46).

42. A container according to Claim 38, characterised in that on the coupling member a locking extension (396) is provided which in each case locks positively on the other part.

43. A container according to Claim 42, characterised in that the locking extension (396) is guided by means of the control surfaces (408) along a path which has at least one component of direction at right-angles to the direction of movement of the transporter.

44. A container according to Claim 43, characterised in that the path has two such components of direction substantially normal to each other.

45. A container according to Claim 44, characterised in that the locking extension (396) can be resiliently deflected in one of the components of direction.

46. A container according to Claim 44, characterised in that the locking extension (396) is guided along two arcs with axes normal to each other, and that the coupling member (382) is substantially disc-shaped and is inserted in a complementary aperture (380) in a wall of the two parts.

47. A container according to Claim 46, characterised in that the coupling member (382) is rotatably guided through a limited angle in a first direction of rotation for locking, and through a limited angle in the other direction of rotation for unlocking.

48. A container according to Claim 21, characterised in that a manually actuated unlocking member (176) is provided in the front wall region of the transporter.

49. A container according to Claims 17 and 21, characterised in that at least one part of the front wall (262) is connected to the carrier member (270) selected in each case.

50. A container according to Claim 8, characterised in that the transporter (252) is at the same time constructed as one of the carrier members (266).

51. A container according to Claims 12 and 31, characterised in that holder guides (862) are provided in the side plates (804).

52. A container according to Claims 17 and 51, characterised in that the holder guides (214) are also cut out in the region of the holders (216).

53. A container according to Claim 7, characterised in that each holder comprises two holder elements (1132) connected like a pocket.

54. A container according to Claims 13, 19 and 53, characterised in that the slider member (1122), the housing (1124) and the carrier members (1120) have control members (1130) which are matched to one another in such a way that the carrier member selected is automatically opened when it is transported out of the housing by the slider member.

55. A container according to Claim 1, characterised in that at least one actuating member (486) of the selector arrangement is accessible from the front side of the container.

56. A container according to Claim 55, characterised in that the actuating member comprises a rotatable knob (206).

57. A container according to Claim 55, characterised in that the actuating member comprises a slideable knob (164).

58. A container according to Claim 56 or 57, characterised in that a locking position is provided for the knob (206, 164) for each carrier member (216).

59. A container according to Claim 55, characterised in that each carrier member is provided with its own actuating member (486).

60. A container according to Claim 59, characterised in that each actuating member comprises a push-button (298).

61. A container according to Claim 13, characterised in that according to the setting of the selector arrangement (206) the selected carrier member (216) can be moved out of the housing together with all the carrier members situated beneath it in the housing (200).

62. A container according to Claim 61, characterised in that the selector arrangement comprises a coupling member (222) which according to the setting selected, mechanically couples the transporter (202) to the selected carrier member (216) and those lying beneath it in the housing.

63. A container according to Claim 13, characterised in that according to the setting of the selector arrangement (298) the carrier member selected (270), mechanically coupled to the transporter (252), can be moved by the latter out of the housing (250).

64. A container according to Claim 21, characterised in that as the selector arrangement (298) is actuated the transporter (252) can be unlocked at the same time.

65. A container according to Claim 22, characterised in that the transporter (252) can be coupled by a positive connection to at least the selected carrier member (270), and all the carrier members are held in the housing (250) by a frictional connection, and that the ejection force exerted by the spring arrangement (256, 258) is made sufficient to release the frictional connection.

66. A container according to Claims 59 and 65, characterised in that by the actuation of an actuating member (298), a selector slider (296) which is displaceably arranged in the transporter (252), can be coupled to the selected carrier member (270).

67. A container according to Claim 66, characterised in that the selector slider (296) is biased by a spring into an uncoupling position.

68. A container according to Claim 66, characterised in that a common selector slider (296) is associated with every two carrier members (270).

69. A container according to Claims 23 and 66, characterised in that the selector slider (296) is displaceable in the front wall (262), parallel to the latter.

70. A container according to Claims 60 and 69, characterised in that each button (298) has a wedge-like element (302) which displaces the selector slider when pressure is exerted on the button.

71. A container according to Claim 67, characterised in that the selector slider (296) consists of plastics material, that the bias spring (306) is integral with it, and that it is only displaced counter to the spring bias during the actual coupling operation.

72. A container according to Claims 18 and 23, characterised in that the carrier member (630) selected in each case is coupled, as transport slider member, to a front wall (634) which has the selector arrangement (638) and is associated with all the carrier members in common.

73. A container according to Claim 1, characterised in that a removable cover (550) is provided for the open front side of the housing.

74. A container according to Claims 55 and 73, characterised in that the actuating member (298) occupies only part of the cover surface.

75. A container according to Claims 60 and 74, characterised in that the cover comprises a rigid front wall (262), relative to which at least one button (298) can be pressed in.

76. A container according to Claim 74, characterised in that an inscription area is provided in the remaining part of the cover surface.

77. A container according to Claim 73, characterised in that an indicator arrangement (780) is provided to differentiate between the occupied carrier members and the unoccupied carrier members.

78. A container according to Claims 74 and 77, characterised in that the indicator arrangement (780) operates optically and is fitted in the region of the actuating member (of which there is at least one).

79. A container according to Claim 8, characterised in that each holder carries near its end which is inside the housing, prongs (754) which engage in groove-like depressions (756) of the adjacent holder facing towards it and/or of the housing wall lying next to it.

80. A container according to Claim 79, characterised in that the prongs (754) are pivotable counter to the ejection direction of the holders and thereby open a guide funnel (764), when the holder is conveyed completely out of the housing.

81. A container according to Claims 9, 19 and 23, characterised in that the slider member has a front wall (722) covering only part of the open front of the housing, and that a flap (728) closing the remaining part can be hinged open by means of the slider member ejection, and automatically hinged back again when the slider member is pushed in.

82. A container according to Claim 3, characterised in that the gap is of a size suitable for one recording medium with the addition of the printed matter pertaining thereto.

83. A container according to Claim 1, characterised by a plurality of transporters (252) in a common housing (250).

84. A container according to Claims 21 and 48, characterised in that an actuating member (206) of the selector arrangement at the same time forms the manually-operated release member for the locking means.

85. A container according to Claims 21 and 48, characterised in that in the region of the front wall of the slider member, in addition to the release member (1072) for the locking means, actuating members (1070) of the selector arrangement are also fitted so that they are functionally separated.

86. A container according to Claim 85, characterised in that the actuating member (1228) and the release member (1230) are constructed to be actuated in the same direction, but one after the other.

87. A container according to Claims 21 and 48, characterised in that an actuating member (206) is provided which can be displaced in two different directions of movement for the selection operation and the release operation.

88. A container according to Claims 8, 19 and 21, characterised in that the slider member has a drop-down front wall (820) in which actuating members (812) of the selector arrangement are arranged.

89. A container according to Claim 88, characterised in that the platter-like carrier members (806) can be displaced by means of the actuating members from a locking position into a conveying position.

90. A container according to Claim 88, characterised in that each carrier member has associated with it its own spring arrangement (814), the bias of which can be transmitted to the slider member by way of the carrier member.

91. A container according to Claim 88, characterised in that the selector arrangement comprises coupling members (1004) to couple the slider member with the carrier members (1008), and that the coupling members can be uncoupled by the front wall being hinged down.

92. A container according to Claims 77 and 88, characterised in that the indicator arrangement (1032, 1034) is housed in the front wall and can be hinged downwards with the latter.

93. A container according to Claim 92, characterised in that the indicating arrangement comprises spring-biased feelers (1034) which scan the front edge of the recording medium, and that the travel of the slider member is greater than the conveying travel of the carrier member platters (1036).

94. A container according to Claim 57, characterised in that each selectable carrier member is provided with its own slideable knob (812) and that all the slideable knobs are seated in a ledge (820).

95. A container according to Claim 88, characterised in that the front wall is connected by way of pivot joints (1084) to the slider member, having in the position in which the front wall is not hinged downwards a locking system (1100) which can be unlocked by means of the movement of the slider member relative to the housing.

96. A container according to Claims 8, 19 and 21, characterised in that the actuating members (1110) of the selector arrangement are arranged on a front wall of the housing beneath a slider member front wall (1118) constructed so that it can be hinged downwards.

97. A container according to Claim 88, characterised by a guide plate (1142) which when the front wall is hinged downwards defines, with the carrier member which has been transported out in each case, a funnel-like insertion slot.

98. A container according to Claims 8, 19 and 21, characterised in that the slider member has a front wall from which there can be extended spring-biased stops (1199) against which there comes to rest a conveyed holder (1170), so that a recording medium lying on the latter can be grasped between the extended stops in the region of a cutaway portion of the holder.

99. A container according to Claim 56, characterised in that the rotatable knob (1228) is arranged in a drop-down part (1214) of a front wall (1210) of the transporter, and that in the other part of the front wall there are housed transmission members (1234) of the selector arrangement which, when the rotatable knob is hinged downwards, can be uncoupled from the latter.

100. A container according to Claims 21 and 99, characterised in that the drop-down part (1214) of the front wall is at the same time constructed as a manual unlocking member.

101. A container according to Claims 21 and 24, characterised in that the transporter comprises an inner slider member (1300) and an outer slider member (1302), that the inner slider member is guided in the housing (1330) and the outer slider member is guided on the inner slider member, and that a compression spring arrangement (1328) is provided to bias the slider members into an extended position.

102. A container according to Claim 101, characterised in that the compression spring (1328) is tensioned between the rear wall (1330) of the housing and the outer slider member (1302).

103. A container according to Claim 101, characterised in that the compression spring arrangement comprises a first spring (1340) acting between housing and inner slider member, and a second spring (1348) acting between inner slider member and outer slider member.

104. A container according to Claim 101, characterised in that the compression spring arrangement comprises a spring (1360) acting between housing and inner slider member, and that the inner slider member carries a pinion (1370) which meshes with a first toothed rack (1374) formed in the housing and a second toothed rack (1378) formed in the outer slider member.

105. A container according to Claims 8, 19 and 21, characterised in that the slider member (1382) and the spring arrangement (1406) form a unit that can be pre-assembled and can be locked into a pre-assembled housing (1380).

106. A container according to Claim 105, characterised in that the pre-assembled slider member/ spring unit comprises a sliding block (1384) which can be locked into the housing and in which rectlinear guide means (1392) for the slider member are formed.

107. A container according to Claim 106, characterised in that the spring arrangement comprises a traction spring (1402) which is fastened by its ends to the slider member on the one hand and to the sliding block on the other hand.

108. A container according to Claims 8, 19 and 21, characterised in that a spring-biased scissor-type mechanism (1432) is provided between housing and slider member.

109. A container according to Claim 7 for round recording media, especially compact discs, characterised in that on each platter-like holder (1008) resiliently deflectable check members (1026) are provided which engage a disc (1024) placed down on the holder on the outer edge in the outer half of the holder remote from the inside of the housing.

## Revendications

1. Appareil pour le rangement de supports d'informations en forme de disques, comportant un boîtier (200, 250, 450, 482, 524, 702, 772, 816, 1018, 1048, 1124, 1156, 1218, 1388) ouvert sur la face avant et dans lequel on peut loger une multiplicité de supports d'informations (330, 786, 1054, 1120, 1202), et un organe de déplacement (202, 252, 454, 480, 522, 560, 600, 612, 634, 708, 772, 804, 906, 1114, 1122, 1176, 1212, 1302, 1346, 1382) servant à entraîner un support d'informations sélectionné au moyen d'un dispositif de sélection, pour l'amener dans une position de prélèvement, caractérisé en ce que pour chaque support d'informations il est prévu un élément d'entraînement (216, 270, 456, 484, 520, 570, 614, 630, 700, 784, 806, 900, 1008, 1036, 1116, 1120, 1156, 1170, 1224, 1304), en ce que l'organe de déplacement est déplaçable à travers la face avant ouverte du boîtier, entre une position intérieure et une position extérieure, et peut être accouplé, conformément au réglage du dispositif de sélection, tout d'abord à l'élément respectif d'entraînement, qui est associé au support d'informations sélectionné, de telle sorte que ce dernier est amené dans une position permettant un prélèvement commode du support d'information.

2. Appareil selon la revendication 1, caractérisé en ce que le boîtier (200) possède une forme de base parallélipipédique et que les supports d'informations sont disposés dans le boîtier de telle sorte que leurs surfaces principales sont parallèles à une face du boîtier.

3. Appareil selon la revendication 2, caractérisé en ce que les éléments d'entraînement (216) délimitent une distance prédéterminée entre les supports d'informations qui leur sont associés.

4. Appareil selon la revendication 2, caractérisé en ce que les éléments d'entraînement (806) sont agencés de manière à supporter les supports d'informations dans des zones ne comportant aucun enregistrement.

5. Appareil selon la revendication 4, caractérisé en ce que les éléments d'entraînement (806) possèdent un profil de support en forme de cuvette.

6. Appareil selon la revendication 4, caractérisé en ce que les éléments d'entraînement (270) sont agencés de telle sorte que les supports d'informations sont maintenus à distance d'une surface de base par des entretoises (336) et possèdent une ouverture au niveau d'un moyeu.

7. Appareil selon la revendication 3, caractérisé en ce que les éléments d'entraînement comprennent des supports (270) en forme de plaques.

8. Appareil selon la revendication 7, caractérisé en ce que les supports (270) sont déplaçables parallèlement à une surface principale des supports d'informations.

9. Appareil selon la revendication 8, caractérisé en ce que les supports (270) peuvent être décalés.

10. Appareil selon la revendication 8, caractérisé en ce que les supports (456) peuvent tourner autour d'un axe (452) perpendiculaire à la surface principale des supports d'enregistrement.

11. Appareil selon la revendication 8, caractérisé en ce que les supports (700) sont guidés dans le boîtier (702).

12. Appareil selon la revendication 8, caractérisé en ce que les supports (270) sont guidés dans l'organe de déplacement (252).

13. Appareil selon la revendication 8, caractérisé en ce que les supports (270) peuvent être ressortis du boîtier (250).

14. Appareil selon la revendication 13, caractérisé en ce que les supports (806) peuvent être ressortis au point que les supports d'informations peuvent être saisis et retirés.

15. Appareil selon la revendication 13, caractérisé en ce que les supports (270) peuvent être ressortis au point que les supports d'informations peuvent être retirés de ces supports transversalement par rapport à la direction de déplacement des supports.

16. Appareil selon la revendication 14 ou 15, caractérisé en ce que les supports (202) comportent des découpes (218) servant à libérer au moins un emplacement du support d'informations, au niveau duquel ce dernier peut être saisi.

17. Appareil selon la revendication 15, caractérisé en ce que les supports (202) possèdent deux découpes (218) situées à l'opposé l'une de l'autre.

18. Appareil selon la revendication 8, caractérisé en ce que l'élément d'entraînement (630) respectivement sélectionné fait partie de l'organe de déplacement (634).

19. Appareil selon la revendication 1, caractérisé en ce que l'organe de déplaçement (600) est un tiroir monté de manière à être déplaçable avec glissement dans le boîtier.

20. Appareil selon la revendication 1, caractérisé en ce que l'organe de déplacement (454) est articulé sur le boîtier.

21. Appareil selon la revendication 19 ou 20, caractérisé en ce que l'organe de déplacement peut être verrouillé à l'encontre de la précontrainte d'un dispositif à ressort (458) dans le boîtier et en ce que le dispositif de verrouillage (468) peut être desserré manuellement.

22. Appareil selon la revendication 19 ou 20, caractérisé en ce que l'organe de déplacement (612) peut être déplacé par un dispositif à ressorts jusque dans une position de prélèvement définie par des butées (618).

23. Appareil selon la revendication 19 ou 20, caractérisé en ce que l'organe de déplacement (480) possède une paroi avant (494) recouvrant la face avant ouverte du boîtier.

24. Appareil selon la revendication 19, caractérisé en ce que le tiroir (252) est monté dans le boîtier au moyen d'un système de guidage télescopique (254).

25. Appareil selon les revendications 13, 19 et 23, caractérisé en ce que la paroi avant (580) est reliée, de manière à être déplaçable, à des éléments de guidage de l'organe de déplacement (584).

26. Appareil selon la revendication 25, caractérisé en ce que la paroi avant (580) est articulée sur les éléments de guidage.

27. Appareil selon la revendication 26, caractérisé en ce que le montage articulé est réalisé au moyen de bras oscillants (554) en forme de parallélogramme.

28. Appareil selon la revendication 25, caractérisé en ce que la paroi avant (542) est déplaçable par rapport aux éléments de guidage, transversalement par rapport à la direction de déplacement de l'organe de déplacement (540) et peut être commandée au moyen d'un dispositif à coin (544).

29. Appareil selon la revendication 19, caractérisé en ce que le tiroir (560) possède une paroi avant et peut pivoter autour d'un axe à proximité de son extrémité située à l'intérieur du boîtier de telle sorte que sa paroi avant peut être ressortie par basculement hors des lignes d'alignement de la face avant ouverte du boîtier.

30. Appareil selon la revendication 19, caractérisé en ce que dans le tiroir (612) se trouve disposé un levier pivotant (616), à l'aide duquel un support d'informations (614) entraîné de manière à être extrait, peut être soulevé au-dessus d'une paroi avant (610) du poussoir.

31. Appareil selon la revendication 19, caractérisé en ce que le tiroir (800) comprend des plaques latérales (804) guidées dans le boîtier.

32. Appareil selon la revendication 31, caractérisé en ce que les plaques latérales sont reliées entre elles par une plaque de base (806).

33. Appareil selon les revendications 19, 21 et 31, caractérisé en ce que le dispositif à ressorts est constitué par deux ressorts hélicoïdaux (258), à chacun desquels est associée une plaque latérale.

34. Appareil selon la revendication 33, caractérisé en ce que l'extrémité, située à l'intérieur du boîtier, du tiroir (252) comporte une ouverture de passage pour l'élément d'entraînement (270).

35. Appareil selon les revendications 24 et 34, caractérisé en ce que le guidage télescopique comporte des rails (254) guidés latéralement dans le boîtier (250) à côté des plaques latérales (260) et en ce qu'il est prévu un ressort de traction respectif (256, 258) entre le boîtier et chaque rail ainsi qu'entre chaque rail et la plaque latérale qui en est voisine.

36. Appareil selon la revendication 33, caractérisé en ce que les ressorts sont des ressorts de pression (1360) agissant entre le boîtier et les plaques latérales.

37. Appareil selon la revendication 34, caractérisé en ce que les ressorts (256, 258) sont disposés à l'extérieur de l'espace entouré par l'ouverture de passage.

38. Appareil selon la revendication 21, caractérisé en ce qu'il est prévu un dispositif de verrouillage, qui comporte au moins un élément d'accouplement séparé (716) qui est déplaçable dans l'un des éléments devant être verrouillés (boîtier ou organe de déplacement (708)), mais est monté de manière à être soutenu dans la direction de déplacement de l'organe de déplacement, et en ce qu'il est prévu, dans l'autre élément (702), des surfaces de commande (714) servant à guider l'élément d'accouplement au moyen du déplacement de l'organe de déplacement entre une position de verrouillage, dans laquelle l'élément d'accouplement est relié, selon une liaison par formes complémentaires, à cet autre élément directement ou au moyen d'éléments intermédiaires, et dans une position de déverrouillage, dans laquelle l'organe de déplacement est libéré.

39. Appareil selon la revendication 38, caractérisé en ce que le dispositif de verrouillage (figures 45, 46) est disposé en un emplacement, au niveau duquel le bras de levier, auquel est accroché le dispositif à ressorts, par rapport à ce dernier est court par rapport aux dimensions du boîtier et de l'organe de déplacement.

40. Appareil selon la revendication 38, caractérisé en ce que l'élément d'accouplement et les surfaces de commande sont prévus dans des parois des deux éléments, parallèles entre elles et à la direction de déplacement de l'organe de déplacement (figures 45, 46).

41. Appareil selon la revendication 38, caractérisé en ce que l'élément d'accouplement est guidé par les surfaces de commande le long de trajectoires différentes de déplacement pour l'opération de verrouillage et l'opération de déverrouillage (figures 45, 46).

42. Appareil selon la revendication 38, caractérisé en ce que sur l'élément d'accouplement se trouve prévu un appendice de verrouillage (396) qui se verrouille selon une liaison par formes complémentaires sur l'autre élément respectif.

43. Appareil selon la revendication 42, caractérisé en ce que l'appendice de verrouillage (396) est guidé au moyen des surfaces de commande (408) le long d'une trajectoire, qui possède au moins une composante de direction transversale par rapport à la direction de déplacement de l'organe de déplacement.

44. Appareil selon la revendication 43, caractérisé en ce que la trajectoire comporte deux telles composantes de direction sensiblement perpendiculaires entre elles.

45. Appareil selon la revendication 44, caractérisé en ce que l'appendice de verrouillage (396) peut être orienté élastiquement dans l'une des composantes de direction.

46. Appareil selon la revendication 44, caractérisé en ce que l'appendice de verrouillage (396) est guidé le long de deux arcs de cercle possédant des axes perpendiculaires entre eux et en ce que l'élément d'accouplement (382) possède sensiblement la forme d'un disque circulaire et est inséré dans une ouverture complémentaire (380) d'une paroi des deux éléments.

47. Appareil selon la revendication 46, caractérisé en ce que l'élément d'accouplement (382) est guidé de manière à pivoter autour d'un angle limité dans un premier sens de rotation, pour le verrouillage, et est guidé de manière à pouvoir tourner sur un angle limité dans l'autre sens de rotation, pour le déverrouillage.

48. Appareil selon la revendication 21, caractérisé en ce qu'un organe de déverrouillage (176) pouvant être actionné manuellement est prévu dans la zone de la paroi avant de l'organe de déplacement.

49. Appareil selon les revendications 17 et 21, caractérisé en ce qu'au moins une partie de la paroi avant (262) est reliée à l'élément d'entraînement (270) respectivement sélectionné.

50. Appareil selon la revendication 8, caractérisé en ce que l'organe de déplacement (252) est réalisé de manière à constituer simultanément l'un des éléments d'entraînement (266).

51. Appareil selon les revendications 12 et 31, caractérisé en ce que des guides de support (862) sont prévus dans les plaques latérales (804).

52. Appareil selon les revendications 17 et 51, caractérisé en ce que les guides de support (214) possèdent également des découpes dans la zone des supports (216).

53. Appareil selon la revendication 7, caractérisé en ce que chaque support comprend deux éléments de support (1132) reliés de manière à former une poche.

54. Appareil selon les revendications 13, 19 et 53, caractérisé en ce que le tiroir (1122), le boîtier (1124) et les éléments d'entraînement (1120) possèdent des organes de commande (1130) réglés les uns sur les autres de telle sorte que l'élément d'entraînement sélectionné est ouvert de façon automatique lorsqu'il est ressorti hors du boîtier par le tiroir.

55. Appareil selon la revendication 1, caractérisé en ce qu'au moins un organe d'actionnement (486) du dispositif de sélection est accessible à partir de la face avant de l'appareil.

56. Appareil selon la revendication 55, caractérisé en ce que l'organe d'actionnement comprend un bouton rotatif (206).

57. Appareil selon la revendication 55, caractérisé en ce que l'organe d'actionnement comprend un curseur (164).

58. Appareil selon la revendication 56 ou 57, caractérisé en ce qu'il est prévu, pour le bouton ou le curseur (206, 164), une position respective d'encliquetage pour un élément respectif d'entraînement (216).

59. Appareil selon la revendication 55, caractérisé en ce qu'il est prévu un organe d'actionnement propre (486) pour chaque élément d'entraînement.

60. Appareil selon la revendication 59, caractérisé en ce que chaque organe d'actionnement comprend un bouton-poussoir (298).

61. Appareil selon la revendication 13, caractérisé en ce que, conformément au réglage du dispositif de sélection (206), l'élément d'entraînement sélectionné (216) peut être ressorti hors du boîtier (200), conjointement avec tous les éléments d'entraînement situés autour de lui dans le boîtier.

62. Appareil selon la revendication 61, caractérisé en ce que le dispositif de sélection comprend un organe d'accouplement (222) qui accouple mécaniquement, en fonction du réglage sélectionné, l'organe de déplacement (202) à l'élément d'entraînement (216) sélectionné et des éléments d'entraînement (216) situés au-dessous dans le boîtier.

63. Appareil selon la revendication 13, caractérisé en ce que, conformément au réglage du dispositif de sélection (298), l'élément d'entraînement sélectionné (270) accouplé mécaniquement à l'organe de déplacement (252) peut être ressorti au moyen de ce dernier hors du boîtier (250).

64. Appareil selon la revendication 21, caractérisé en ce que, lors de l'actionnement du dispositif de sélection (298), l'organe de déplacement (252) est simultanément déverrouillage.

65. Appareil selon la revendication 22, caractérisé en ce que l'organe de déplacement (252) peut être accouplé, selon une liaison par formes complémentaires au moins à l'élément d'entraînement (270) sélectionné et que tous les éléments d'entraînement sont maintenus selon une liaison par frottement dans le boîtier (250) et en ce que la force de poussée d'éjection exercée par le dispositif à ressorts (256, 258) est dimensionnée de façon suffisante pour vaincre la liaison par frottement.

66. Appareil selon les revendications 59 et 65, caractérisé en ce que, sous l'effet de l'actionnement d'un organe d'actionnement (298), une coulisse de sélection (296), qui est montée de manière à pouvoir être déplacée dans l'organe de déplacement (252), peut être accouplée à l'élément d'entraînement (270) sélectionné.

67. Appareil selon la revendication 66, caractérisé en ce que la coulisse de sélection (296) est précontrainte élastiquement dans une position de désaccouplement.

68. Appareil selon la revendication 66, caractérisé en ce qu'une coulisse commune de sélection (296) est associée à deux éléments d'entraînement respectifs (270).

69. Appareil selon les revendications 23 et 66, caractérisé en ce que la coulisse de sélection (296) peut être déplacée dans la paroi avant (262), parallèlement à cette dernière.

70. Appareil selon la revendication 60 et 69, caractérisé en ce que chaque touche (298) comporte un élément en forme de coin (302) déplaçant la coulisse de sélection sous la pression d'une touche.

71. Appareil selon la revendication 67, caractérisé en ce que la coulisse de sélection (296) est réalisée en matière plastique, en ce que le ressort de précontrainte (306) est formé par façonnage sur cette coulisse et en ce qu'elle n'est déplacée que pendant le processus proprement dit d'accouplement à l'encontre de la précontrainte d'un ressort.

72. Appareil selon les revendications 18 et 23, caractérisé en ce que l'élément d'entraînement (630) respectivement sélectionné est accouplé en tant que tiroir de déplacement à une paroi avant (634) comportant le dispositif de sélection (638) et associée en commun à tous les éléments d'entraînement.

73. Appareil selon la revendication 1, caractérisé en ce qu'il est prévu un recouvrement amovible (550) pour la face avant ouverte du boîtier.

74. Appareil selon les revendications 55 et 73, caractérisé en ce que l'organe d'actionnement (298) occupe seulement une zone partielle de la surface de recouvrement.

75. Appareil selon les revendications 60 et 74, caractérisé en ce que le recouvrement comprend une paroi avant rigide (262), par rapport à laquelle au moins une touche (298) peut être enfoncée.

76. Appareil selon la revendication 74, caractérisé en ce qu'une zone pour inscriptions est prévue dans la zone partielle subsistante de la surface de recouvrement.

77. Appareil selon la revendication 73, caractérisé en ce qu'il est prévu un dispositif indicateur (780) permettant de distinguer les éléments d'entraînement occupés par rapport aux éléments d'entraînement non occupés.

78. Appareil selon les revendications 74 et 77, caractérisé en ce que le dispositif indicateur (780) agit optiquement et est logé au voisinage d'au moins un organe d'actionnement.

79. Appareil selon la revendication 8, caractérisé en ce que chaque support porte, à proximité de son extrémité située à l'intérieur du boîtier, des dents (754), qui s'engagent dans des renfoncements en forme de rainures (756) du support voisin, qui leur est associé, ou bien de la paroi du boîtier, qui en est la plus proche.

80. Appareil selon la revendication 79, caractérisé en ce que les dents (754) peuvent pivoter à l'encontre de la direction d'éjection des supports et ouvrent une trémie d'introduction (764) lorsque le support est complètement extrait du boîtier.

81. Appareil selon les revendications 9, 19 et 23, caractérisé en ce que le tiroir possède une paroi avant (722) recouvrant uniquement une zone partielle de l'avant ouvert du boîtier et en ce qu'un volet (728) fermant les autres zones partielles, peut être ouvert par rabattement au moyen de la poussée exercée par le tiroir et être à nouveau rabattu automatiquement en arrière lors de l'introduction du tiroir.

82. Appareil selon la revendication 3, caractérisé en ce que la distance est dimensionnée pour un support d'informations plus un article imprimé associé.

83. Appareil selon la revendication 1, caractérisé par une multiplicité d'organes de déplacement (252) placés dans un boîtier commun (250).

84. Appareil selon les revendications 21 et 48, caractérisé en ce qu'un organe d'actionnement (206) du dispositif de sélection forme simultanément l'organe de libération, pouvant être actionné manuellement, pour le dispositif de verrouillage.

85. Appareil selon les revendications 21 et 48, caractérisé en ce que des organes d'actionnement (1070) du dispositif de sélection sont en outre logés séparément du point de vue fonctionnel au voisinage de la paroi avant du tiroir, en plus de l'organe de libération (1072) du dispositif de verrouillage.

86. Appareil selon la revendication 85, caractérisé en ce que l'organe d'actionnement (1228) et l'organe de libération (1230) sont réalisés de manière à pouvoir être actionnés dans le même sens, mais successivement.

87. Appareil selon les revendications 21 et 48, caractérisé en ce qu'il est prévu un organe d'actionnement (206), qui peut être déplacé dans deux directions différentes de déplacement pour l'opération de sélection et l'opération de libération.

88. Appareil selon les revendications 8, 19 et 21, caractérisé en ce que le tiroir possède une paroi avant (820) pouvant être rabattue, dans laquelle sont disposés des organes d'actionnement (812) du dispositif de sélection.

89. Appareil selon la revendication 88, caractérisé en ce que les éléments d'entraînement en forme de plaques (806) peuvent être déplacés au moyen des organes d'actionnement depuis une disposition d'encliquetage dans une position d'entraînement.

90. Appareil selon la revendication 88, caractérisé en ce qu'à chaque élément d'entraînement est associé un dispositif à ressort particulier (814), dont la précontrainte peut être transmise au tiroir par l'intermédiaire des éléments d'entraînement.

91. Appareil selon la revendication 88, caractérisé en ce que le dispositif de sélection comprend des organes d'accouplement (1004) servant à accoupler le tiroir aux éléments d'entraînement (1008), et en ce que les organes d'accouplement peuvent être désaccouplés par écartement par rabattement de la paroi avant.

92. Appareil suivant les revendications 77 et 88, caractérisé en ce que le dispositif indicateur (1032, 1034) est logé dans la paroi avant et peut être écarté, conjointement avec cette dernière, par rabattement.

93. Appareil selon la revendication 92, caractérisé en ce que le dispositif indicateur comprend des organes de détection (1034), qui sont précontraints par des ressorts et explorent le bord avant du support d'informations, et en ce que la course de déplacement du tiroir est supérieure à la course d'entraînement des plaques d'entraînement (1036).

94. Appareil selon la revendication 57, caractérisé en ce qu'un curseur particulier (812) est prévu pour chaque élément d'entraînement pouvant être sélectionné et en ce que tous les curseurs sont insérés dans une réglette (820).

95. Appareil selon la revendication 88, caractérisé en ce que la paroi avant est reliée au tiroir par l'intermédiaire d'une articulation (1084) qui comporte un dispositif de verrouillage (1100) qui, lorsque la paroi avant est dans sa position non écartée par rabattement, peut être déverrouillé sous l'effet du déplacement du tiroir par rapport au boîtier.

96. Appareil selon les revendications 8, 19 et 21, caractérisé en ce que les organes d'actionnement (1110) du dispositif de sélection sont disposés sur la paroi avant du boîtier au-dessous d'une paroi avant (1118) du tiroir, réalisée de manière à pouvoir être écartée par rabattement.

97. Appareil selon la revendication 88, caractérisé par une plaque de guidage (1142) qui, lorsque la paroi avant est écartée par rabattement, définit, avec l'élément d'entraînement respectivement ressorti, une fente d'insertion en forme de trémie.

98. Appareil selon les revendications 8, 19 et 21, caractérisé en ce que le tiroir possède une paroi avant, à partir de laquelle peuvent ressortir des butées (1199) précontraintes par des ressorts et contre lesquelles s'applique un support entraîné (1170) de sorte qu'un support d'informations appliqué sur ce support peut être saisi entre les butées ressorties, au niveau de la découpe du support.

99. Appareil selon la revendication 56, caractérisé en ce que le bouton rotatif (1228) est disposé dans une partie (1214), pouvant être écartée par rabattement, d'une paroi avant (1210) de l'organe de déplacement et en ce que dans l'autre partie de la paroi avant se trouvent disposés des éléments de transmission (1234) du dispositif de sélection, qui peuvent être désaccouplés du bouton rotatif lors de l'écartement de ce dernier par rabattement.

100. Appareil selon les revendications 21 et 99, caractérisé en ce que la partie (1214) pouvant être écartée par rabattement, de la paroi avant est réalisée simultanément sous la forme d'un organe manuel de déverrouillage.

101. Appareil selon la revendication 21 et 24, caractérisé en ce que l'organe de déplacement comporte un tiroir intérieur (1300) et un tiroir extérieur (1302), en ce que le tiroir intérieur est guidé dans le boîtier (1330) et que le tiroir extérieur est guidé sur le tiroir intérieur, et en ce qu'il est prévu un dispositif à ressorts (1328) servant à précontraindre les tiroirs dans une position ressortie.

102. Appareil selon la revendication 101, caractérisé en ce que le ressort de pression (1328) est inséré entre la paroi arrière (1330) du boîtier et le tiroir extérieur (1302).

103. Appareil selon la revendication 101, caractérisé en ce que le dispositif à ressorts de pression comporte un premier ressort (1340) agissant entre le boîtier et le tiroir intérieur, et un second ressort (1348) agissant entre le tiroir intérieur et le tiroir extérieur.

104. Appareil selon la revendication 101, caractérisé en ce que le dispositif à ressort de pression comporte un ressort (1360) agissant entre le boîtier et le tiroir intérieur et en ce que le tiroir intérieur porte un pignon (1370) qui engrène avec une première crémaillère (1374) ménagée dans le boîtier et avec une seconde crémaillère (1378) ménagée dans le tiroir extérieur.

105. Appareil selon les revendications 8, 19 et 21, caractérisé en ce que le tiroir (1382) et le dispositif à ressort (1406) forment un module préassemblé qui peut s'encliqueter dans un boîtier préassemblé (1380).

106. Appareil selon la revendication 105, caractérisé en ce que le module tiroir-ressort préassemblé comprend un coulisseau (1384), qui peut être encliqueté dans le boîtier et dans lequel des moyens de guidage rectiligne (1392) sont prévus pour le tiroir.

107. Appareil selon la revendication 106, caractérisé en ce que le dispositif à ressort comporte un ressort de traction (1402), qui est fixé par ses extrémités d'une part sur le tiroir, d'autre part sur le coulisseau.

108. Appareil selon les revendications 8, 19 et 21, caractérisé en ce qu'une tringlerie à parallélogramme articulé (1432) précontrainte par un ressort est prévue entre le boîtier et le tiroir.

109. Appareil selon la revendication 7 pour des supports d'informations circulaires, notamment des disques compacts, caractérisé en ce que sur chaque support en forme de plaque (1008) il est prévu des organes de freinage (1026) pouvant fléchir élastiquement, qui saisissent sur son pourtour extérieur un disque (1024) placé sur le support, dans la moitié extérieure du support, tournée à l'opposé de l'intérieur du boîtier.

**Fig.1**

**Fig.2**

EP 0 141 937 B1

Fig.3

Fig.4

Fig.5

Fig.6

Fig.9

**Fig. 7**

**Fig. 8**

Fig.10

Fig.11

Fig.12

Fig. 15

Fig. 16

Fig. 13

Fig. 14

*Fig.19*

*Fig.17b*

*Fig.20*

*Fig.17a*

*Fig.18*

*Fig.24*

*Fig.23*

*Fig.21*

**Fig.22**

Fig. 26

Fig. 25

_Fig. 27a_

_Fig. 27b_

Fig.28

EP 0 141 937 B1

Fig. 29

520
520
522
528
528
528
526
532
526
526
530
532
530'
530
524
530'
534

*Fig. 31*

*Fig. 30*

*Fig. 32*

*Fig. 33*

_Fig. 34_

584

582 580

_Fig. 35_

586

588

_Fig. 36_

590

592

Fig. 37

Fig. 38

600

_Fig. 39_

_Fig. 40_

EP 0 141 937 B1

Fig. 4.1  Fig. 4.2  Fig. 4.3  Fig. 4.4

**Fig.45**

**Fig.48**

**Fig.47**

**Fig.46**

*Fig. 49*

EP 0 141 937 B1

## Fig.50

730    702

700    700

728

738
734
732    712
712    736
708
710    706
722

## Fig.51

730    702

728

728

**Fig.52**

**Fig.53**

Fig.54

784  786  774  770  776

782
780

784

784
782
780

778

786
774
780

778

778
782
780

786  776

774  778

772

73                                                                                    EP 0 141 937 B1

Fig.55

EP 0 141 937 B1

Fig.56

_Fig:57_

_Fig:58_

_Fig:59_

EP 0 141 937 B1

Fig.60

Fig.61

EP 0 141 937 B1

*Fig.63*

*Fig.64*

*Fig.62*

EP 0 141 937 B1

Fig.65

Fig.66

Fig.67

Fig.68

Fig.69

EP 0 141 937 B1

**Fig. 70**

1074

1072

1070

1070

**Fig. 11**

**Fig. 22**

1114
1118
1110
1112
1116
1116

1122
1120
1126
1122
-1120-
1124
1130
1128
1126
1132
1130

EP 0 141 937 B1

95

**Fig.74**

**Fig.75**

**Fig.76**

*Fig. 78*

*Fig. 79*

EP 0 141 937 B1

EP 0 141 937 B1

1222

1218

1226

1224

1210

1212

1220

1228    1230    1214

**Fig. 80**

*Fig. 81*

*Fig. 82*

EP 0 141 937 B1

Fig. 83

EP 0 141 937 B1

1330  1304

86

1304  1332  1324  1322

*Fig. 84*

1336  1314  1312 1310  1328 1300  1326  1302

86

1324  1302

*Fig. 86*

1310  1314 1312  1300

*Fig. 85*

1300

1302  1332

1330

1338  1334

1326

1336  1328  1314

1322  1332

Fig. 87

Fig. 88

Fig. 89

Fig.91

Fig.92

Fig.90

_Fig. 93_

_Fig. 95_

_Fig. 96_

_Fig. 94_

EP 0 141 937 B1

**Fig. 98**

**Fig. 99**

**Fig. 97**